# EUROPEAN PATENT SPECIFICATION

(11) **EP 2 819 457 B1**
(45) Date of publication and mention of the grant of the patent: **05.09.2018**
(21) Application number: 12869470.0
(22) Date of filing: 20.02.2012
(51) Int. Cl.: H04W 72/04, H04W 28/06, H04L 5/00

(54) **WIRELESS STATION AND COMMUNICATION CONTROL METHOD**
DRAHTLOSE STATION UND KOMMUNIKATIONSSTEUERUNGSVERFAHREN
STATION SANS FIL ET PROCÉDÉ DE COMMANDE DE COMMUNICATION

(43) Date of publication of application: 31.12.2014
(73) Proprietor: Fujitsu Limited, Kawasaki-shi, Kanagawa 211-8588 (JP)
(72) Inventor: YANO, Tetsuya, Kawasaki-shi Kanagawa 211-8588 (JP); KAWASAKI, Yoshihiro, Kawasaki-shi Kanagawa 211-8588 (JP)
(74) Representative: Haseltine Lake LLP
(86) International application number: PCT/JP2012/001125
(87) International publication number: WO 2013/124879

(56) References cited:
- WO-A1-2007/148705
- CA-A1- 2 801 696
- JP-A- 2009 089 189
- JP-A- 2010 541 317
- JP-A- 2011 259 258
- JP-A- 2011 514 072
- US-A1- 2009 219 878
- US-A1- 2010 118 825
- US-A1- 2010 215 004
- US-A1- 2010 311 429
- NEC: "Maximizing radio efficiency of BCCH transmission on DL-SCH", 3GPP DRAFT; R1-072111, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kobe, Japan; 20070502, 2 May 2007 (2007-05-02), XP050105860, [retrieved on 2007-05-02]

## Description

### FIELD

A technology disclosed in an aspect of embodiments of the present invention relates to a wireless station and a communication control method.

### BACKGROUND

In wireless communication, a method called dynamic scheduling has been known as a method for controlling data communication between a wireless relay station and a wireless terminal. In dynamic scheduling, when data communication is performed, communication parameters which are used for the data communication are designated in such a way that a control signal is transmitted from the wireless relay station to the wireless terminal for each communication. For example, in a case of Long Time Evolution (LTE), the control signal is transmitted using a downlink channel called a Physical Downlink Control Channel (PDCCH). The wireless relay station designates the communication parameters, such as frequency band assignment and modulation and coding scheme, for each communication by transmitting the control signal for each communication to the wireless terminal.

Also, hereinafter, in the specification, the direction from the wireless terminal to the wireless relay station is referred to as "uplink", and the direction from the wireless relay station to the wireless terminal is referred to as "downlink".

In addition, in the specification, the wireless relay station is, for example, an apparatus, such as a wireless base station or a relay station, and means an apparatus which relays information between a network and the wireless terminal.

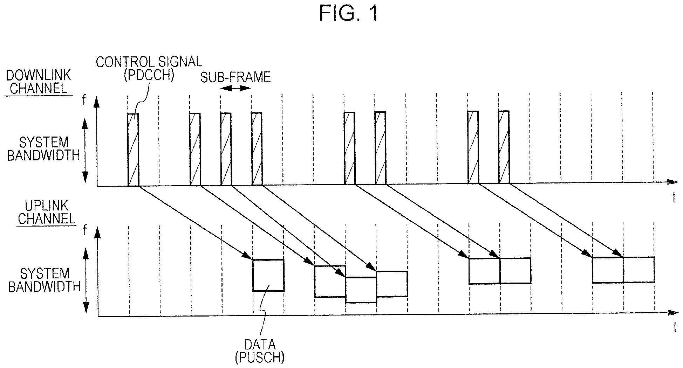

FIG. 1 is a diagram illustrating dynamic scheduling for uplink data communication in LTE.

As illustrated in FIG. 1, the wireless relay station transmits a control signal for scheduling the uplink data communication to a wireless terminal which is a communication target using a PDCCH (downlink channel). The control signal includes, for example, communication parameters for scheduling the uplink data communication, such as resource block assignment and modulation and coding scheme. A frequency band for an uplink channel is assigned to the wireless terminal from a predetermined system band.

The wireless terminal receives the control signal from the wireless relay station using the PDCCH, and sets the frequency band which is assigned to the uplink channel used for the uplink data communication based on the communication parameters which are included in the received control signal. The uplink channel which is assigned to the wireless terminal is, for example, a Physical Uplink Shared Channel (PUSCH). The wireless terminal transmits a data signal to the wireless relay station using the PUSCH (uplink channel) which includes a set frequency band after a predetermined number of sub-frames from a sub-frame which received the control signal.

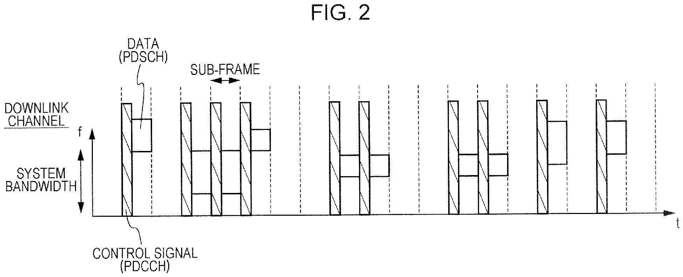

FIG. 2 is a diagram illustrating dynamic scheduling for downlink data communication in LTE.

As illustrated in FIG. 2, the wireless relay station transmits a control signal for scheduling the downlink data communication to the wireless terminal which is the communication target using the PDCCH (downlink channel). The control signal includes, for example, communication parameters, such as resource block assignment and modulation and coding scheme, for scheduling the downlink data communication, and is transmitted using the first half of a single sub-frame. A frequency band for the downlink channel is assigned to the wireless terminal from the predetermined system band.

The wireless terminal receives the control signal from the wireless relay station using the PDCCH, and sets the frequency band, which is assigned to the downlink channel used for the downlink data communication, based on the communication parameters which are included in the received control signal. The downlink channel, which is assigned to the wireless terminal, is for example, a Physical Downlink Shared Channel (PDSCH). The wireless terminal receives the data signal from the wireless relay station using the PDSCH (downlink channel), which includes the set frequency band, in the last half of a sub-frame which is the same as the sub-frame which received the control signal.

Also, PTL 1 discloses a method of reducing the overhead (data size) of a control signal in such a way that a part of a plurality of communication parameters which are included in a control signal is not transmitted.

### Citation List

### Patent Literature

PTL 1: Japanese National Publication of International Patent Application No. 2010-526453

US 2010/0311429 A1 discloses a method for transmission of control information from a primary station to at least one secondary station, the method comprising transmitting two sets of control information parameters that differ in at least one parameter value.

US 2010/0215004 A1 discloses a method for transmitting data using hybrid automatic repeat request (HARQ), wherein scheduling information is received regarding the transmission of data by a radio resource, wherein the radio resource is reused for transmitting the same data or different data if a received scheduling change indicator indicates that the radio resource is reused.

### SUMMARY

### Technical Problem

However, dynamic scheduling has the following advantages and disadvantages.

An advantage is that it may be possible to set communication parameters flexibly according to the state of a communication channel, traffic congestion, or the like at all times. Here, even when the movement speed of a wireless terminal is high and the communication environment surrounding the wireless terminal suddenly changes, it may be possible to set an optimal communication channel at all times, and there is an advantage when the state of the communication channel suddenly changes.

In contrast, a disadvantage is that, when data communication is repeatedly performed, a control signal is desired to be transmitted for each communication even though communication parameters are not desired to be changed, and thus the overhead (data size) of the control signal is large. Here, even when the setting of the communication channel is not desired to be changed, such as when the movement speed of a terminal is low or when the change in the communication environment surrounding the wireless terminal is small, the control signal is transmitted for each communication, and there is a disadvantage when the change in the state of the communication channel is small.

Here, in order to solve the above-described disadvantage, not transmitting a part of a plurality of communication parameters which are included in the control signal has been considered as disclosed in PTL 1. In this case, it may be possible to reduce the overhead (data size) of control signal. In contrast, there is a problem in that the flexibility of scheduling for data communication, which is the advantage of dynamic scheduling, is restricted.

Therefore, in an aspect of the embodiments, an object is to provide dynamic scheduling for wireless communication which enables both reduction in the overhead (data size) of a control signal and flexibility of data scheduling to be achieved.

### Solution to Problem

Aspects of embodiments of the invention provide a communication system, first wireless station, second wireless station and communication control method for use in uplink communications, and equivalent aspects for use in downlink communication, all as defined in the claims. The claims define the scope of the invention.

### Advantageous Effects of Invention

In the communication control method in the aspect of the embodiments, it may be possible to achieve both a reduction in the overhead (data size) of the control signal and flexibility of scheduling in scheduling for the data communication.

### BRIEF DESCRIPTION OF DRAWINGS

FIG. 1 is a diagram illustrating dynamic scheduling for uplink data communication in LTE.
FIG. 2 is a diagram illustrating dynamic scheduling for downlink data communication in LTE.
FIG. 3 is a diagram illustrating the configuration of a wireless communication system according to a first embodiment.
FIG. 4 is a diagram illustrating the first format of a control signal according to the first embodiment.
FIG. 5 is a diagram illustrating the second format of the control signal according to the first embodiment.
FIG. 6 is a diagram illustrating a method of controlling data communication performed between a wireless relay station 302 and a wireless terminal 304 in a wireless communication system 300 according to the first embodiment.
FIG. 7 is a functional block diagram illustrating the configuration of the wireless relay station 302.
FIG. 8 is a hardware configuration diagram illustrating the configuration of the wireless relay station 302.
FIG. 9 is a flowchart illustrating the method of controlling data communication performed in the wireless relay station 302.
FIG. 10 is a functional block diagram illustrating the configuration of the wireless terminal 304.
FIG. 11 is a hardware configuration diagram illustrating the configuration of the wireless terminal 304.
FIG. 12 is a flowchart illustrating the method of controlling data communication in the wireless terminal 304.
FIG. 13 is a diagram illustrating the method of controlling data communication performed when the format of the control signal is converted from the first format to the second format in a wireless communication system 1300 according to a second embodiment.
FIG. 14 is a diagram illustrating the method of controlling data communication performed when the format of the control signal is converted from the second format to the first format in the wireless communication system 1300 according to the second embodiment.
FIG. 15 is a diagram illustrating the method of controlling the entire data communication performed between a wireless relay station 1302 and a wireless terminal 1304 in the wireless communication system 1300 according to the second embodiment.
FIG. 16 is a functional block diagram illustrating the configuration of the wireless relay station 1302.
FIG. 17 is a flowchart illustrating the method of controlling data communication performed in the wireless relay station 1302.
FIG. 18 is a functional block diagram illustrating the configuration of the wireless terminal 1304.
FIG. 19 is a (first) flowchart illustrating the method of controlling data communication performed in the wireless terminal 1304.
FIG. 20 is a (second) flowchart illustrating the method of controlling data communication performed in the wireless terminal 1304.
FIG. 21 is a diagram illustrating the third format of a control signal according to a third embodiment.
FIG. 22 is a diagram illustrating the fourth format of the control signal according to the third embodiment.
FIG. 23 is a diagram illustrating a method of controlling data communication performed between a wireless relay station 2102 and a wireless terminal 2104 in a wireless communication system 2100.
FIG. 24 is a functional block diagram illustrating the configuration of the wireless relay station 2102.
FIG. 25 is a flowchart illustrating a method of controlling data communication performed in the wireless relay station 2102.
FIG. 26 is a functional block diagram illustrating the configuration of the wireless terminal 2104.
FIG. 27 is a flowchart illustrating the method of controlling data communication performed in the wireless terminal 2104.
FIG. 28 is a diagram illustrating the method of controlling data communication performed when the format of the control signal is converted from the third format to the fourth format in a wireless communication system 2800 according to a fourth embodiment.
FIG. 29 is a diagram illustrating the method of controlling data communication performed when the format of the control signal is converted from the fourth format to the third format in the wireless communication system 2800 according to the fourth embodiment.
FIG. 30 is a diagram illustrating the method of controlling the entire data communication performed between a wireless relay station 2802 and a wireless terminal 2804 in the wireless communication system 2800 according to a fourth embodiment.
FIG. 31 is a functional block diagram illustrating the configuration of the wireless relay station 2802.
FIG. 32 is a flowchart illustrating the method of controlling data communication performed in the wireless relay station 2802.
FIG. 33 is a functional block diagram illustrating the configuration of the wireless terminal 2804.
FIG. 34 is a (first) flowchart illustrating the method of controlling data communication performed in the wireless terminal 2804.
FIG. 35 is a (second) flowchart illustrating the method of controlling data communication performed in the wireless terminal 2804.

### DESCRIPTION OF EMBODIMENTS

Hereinafter, embodiments of the present invention will be described.

In each embodiment below, LTE is described as an example of a communication method. However, a communication method to which the present invention is applied is not limited to LTE. The present invention may be applied to other communication methods, and, for example, may be applied to LTE-Advanced.

### 1. FIRST EMBODIMENT

Hereinafter, a wireless station and a communication control method according to a first embodiment will be described. The first embodiment relates to dynamic scheduling for uplink data communication in LTE.

### 1-1. WIRELESS COMMUNICATION SYSTEM

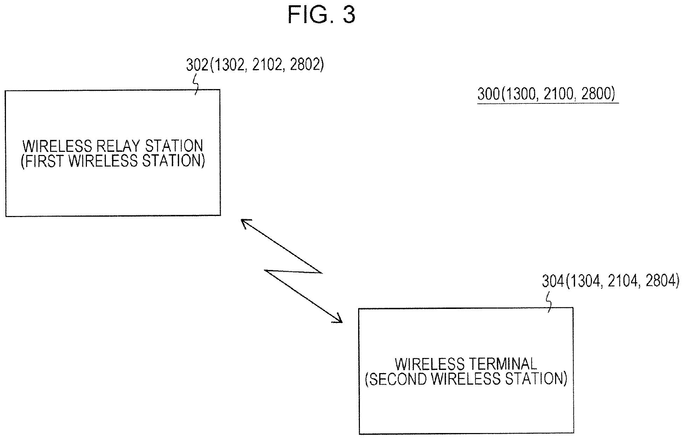

FIG. 3 is a diagram illustrating the configuration of a wireless communication system according to a first embodiment.

As illustrated in FIG. 3, a wireless communication system 300 includes a wireless relay station (first wireless station) 302 and a wireless terminal (second wireless station) 304. The wireless relay station 302 sets a communication channel (an uplink channel or a downlink channel) between the wireless relay station 302 and the wireless terminal 304 by transmitting a control signal to the wireless terminal 304, and performs data communication with the wireless terminal 304 using the set communication channel.

Also, although only a single wireless terminal 304 is illustrated in FIG. 3, the embodiment is not limited thereto and a plurality of wireless terminals 304 may be present for the single wireless relay station 302. In addition, a plurality of wireless relay stations 302 may be present, or a plurality of wireless terminals 304 may be present for a plurality of wireless relay stations 302.

In addition, in the specification, the wireless communication system which includes the wireless relay station and the wireless terminal is described as an embodiment. However, both the wireless relay station and the wireless terminal are examples of a wireless stations which are included in the wireless communication system.

### 1-2. FORMAT OF CONTROL SIGNAL

In dynamic scheduling for the wireless communication system 300 according to the first embodiment, a control signal having two formats is converted and used as a control signal for scheduling uplink data communication, as will be described later. Here, first, the two formats (first format and second format) of the control signal according to the first embodiment will be described.

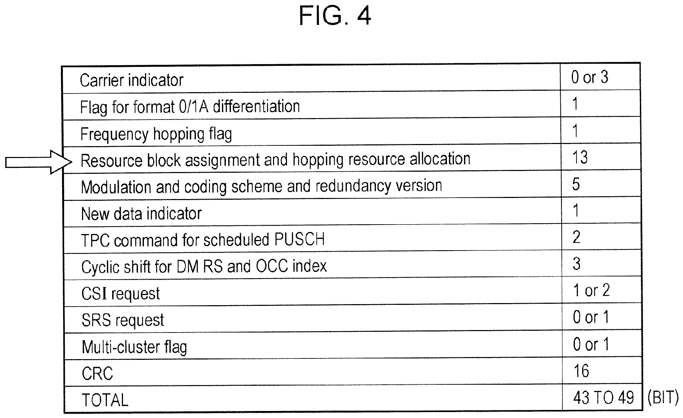

FIG. 4 is a diagram illustrating the format of the control signal for performing dynamic scheduling for the uplink data communication in LTE, and is a diagram illustrating the first format of the control signal according to the first embodiment.

As illustrated in FIG. 4, the first format of the control signal corresponds to the format 0 of Downlink Control Information (DCI) in LTE, and includes a plurality of fields. The first format includes a plurality of communication parameters, for example, Resource Block Assignment (RBA), Modulation and Coding Scheme (MCS), Channel State Information (CSI) report request, a Sounding Reference Signal (SRS) transmission request, and the like, and the communication parameters are stored in corresponding fields.

A resource block is a unit of a frequency band which is included in a system band, and the frequency band is assigned to each wireless terminal in units of a resource block. In the first format illustrated in FIG. 4, the Resource Block Assignment (RBA) is a parameter for indicating a frequency band assigned to a wireless terminal, which is a communication target, with regard to uplink data communication.

As will be described later, the first format of the control signal is used in a case of scheduling an uplink channel when data communication starts and in a case in which the Resource Block Assignment (RBA) is changed.

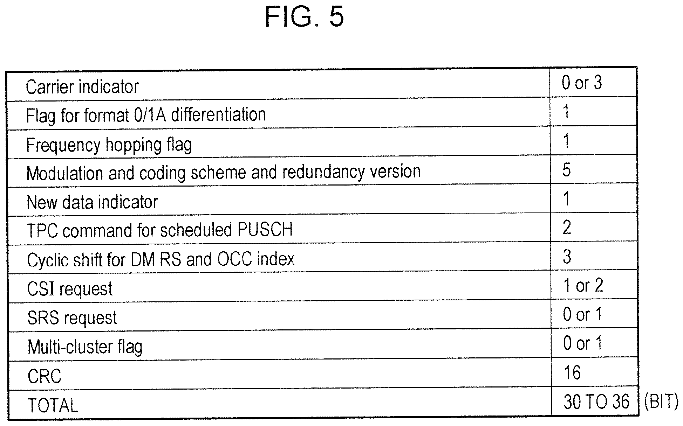

FIG. 5 is a diagram illustrating the format of the control signal for performing dynamic scheduling for the uplink data communication in LTE, and is a diagram illustrating the second format of the control signal according to the first embodiment.

As illustrated in FIG. 5, the second format of the control signal is acquired by omitting fields, in which the parameters (resource block assignment and hopping resource allocation) related to the Resource Block Assignment (RBA) are stored, from the first format illustrated in FIG. 4. That is, the second format of the control signal does not include a Source Block Assignment (RBA), which is the parameter for indicating the frequency band assigned to the wireless terminal which is the communication target, with regard to the uplink data communication.

As will be described later, the second format of the control signal is used for a period until a subsequent change is made to the resource block assignment after the resource block assignment has been completed once.

Here, as is apparent from FIGs. 4 and 5, the data size of the entirety of the first format of the control signal is 43 to 49 bits. In contrast, the data size of the entirety of the second format is 30 to 36 bits because some fields are omitted. Therefore, it may be possible to reduce an overhead of approximately 30% of the control signal by converting the format of the control signal from the first format to the second format.

Also, in the examples illustrated in FIGs. 4 and 5, the omitted parameters are "the Resource Block Assignment and the Hopping Resource Allocation". However, it may be possible to select other communication parameters alternatively. For example, when data communication is repeatedly performed between the wireless relay station 302 and the wireless terminal 304, it may be possible to alternatively select the communication parameters which have a low change frequency.

In addition, in FIGs. 4 and 5, the DCI format 0 is used as the format of the control signal. However, the embodiment is not limited thereto. It may be possible to use another DCI format as the format of the control signal in order to perform scheduling for uplink data communication. For example, it may be possible to use a DCI format 4.

### 1-3. COMMUNICATION CONTROL IN WIRELESS COMMUNICATION SYSTEM 300

Subsequently, a method of controlling data communication which is performed between the wireless relay station 302 and the wireless terminal 304 in the wireless communication system 300 according to the first embodiment will be described.

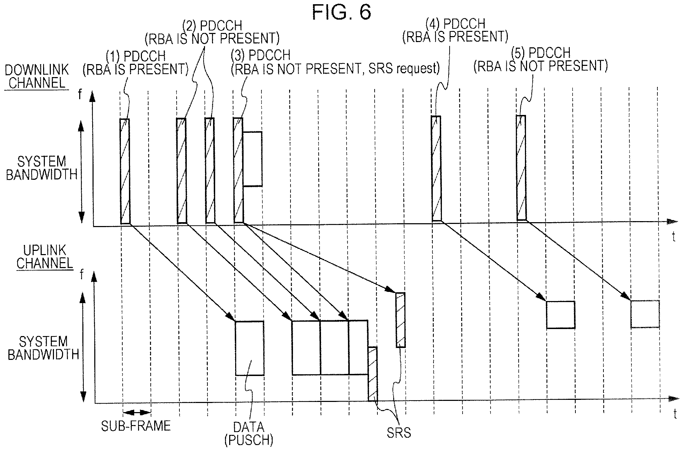

Also, hereinafter, in the description, for example, there is a case in which step (1) illustrated in FIG. 6 is described as step 6-1. The case is applied to other steps illustrated in FIG. 6 in the same manner and is applied to steps illustrated in other drawings in the same manner.

FIG. 6 is a diagram illustrating a method of controlling data communication performed between the wireless relay station 302 and the wireless terminal 304 in the wireless communication system 300.

As illustrated in FIG. 6, in step 6-1, when the wireless relay station 302 starts the uplink data communication between the wireless relay station 302 and the wireless terminal 304, the wireless relay station 302 determines various communication parameters, such as the resource block assignment, with regard to the wireless terminal 304 which is a communication target, and assigns the frequency band for the uplink channel which is used for the uplink data communication. The wireless relay station 302 transmits a first control signal having the first format illustrated in FIG. 4 to the wireless terminal 304 which is the communication target using a PDCCH (downlink channel) based on the determined communication parameters. The first control signal is a control signal for scheduling the uplink data communication, and includes the communication parameters, such as the Resource Block Assignment (RBA). The frequency band for the uplink channel of the predetermined system band is assigned to the wireless terminal 304.

The wireless terminal 304 receives the first control signal, which includes the first format, from the wireless relay station 302 using the PDCCH. The wireless terminal 304 sets the frequency band which is assigned to the uplink channel used for the uplink data communication based on the communication parameters which are included in the received first control signal. The uplink channel which is assigned to the wireless terminal 304 is, for example, a PUSCH.

The wireless terminal 304 transmits a data signal to the wireless relay station 302 using the PUSCH (uplink channel) which includes the set frequency band after a predetermined number of sub-frames from a sub-frame which received the control signal.

Subsequently, in step 6-2, the wireless relay station 302 periodically receives, for example, a reference signal for evaluating a state, such as quality, of the uplink channel which is not illustrated in the drawing, that is, a Sounding Reference Signal (SRS) from the wireless terminal 304 at predetermined sub-frame intervals, thereby monitoring the state of the uplink channel which is assigned in step 6-1. The wireless relay station 302 determines whether or not the resource block assignment is desired to be changed based on the received reference signal SRS.

Further, when the wireless relay station 302 determines that the resource block assignment is not desired to be changed, the wireless relay station 302 transmits a second control signal, which includes the second format illustrated in FIG. 5, to the wireless terminal 304, which is the communication target, without changing a frequency band which is assigned to the uplink channel. That is, the wireless relay station 302 converts the format of the control signal from the first format into the second format. Although the second control signal is the control signal for scheduling the uplink data communication, the second control signal does not include the Resource Block Assignment (RBA) as the communication parameter. In the second control signal, a suitable value is appropriately determined with regard to the communication parameters except for the Resource Block Assignment (RBA) according to the uplink channel state monitoring results.

The wireless terminal 304 receives the second control signal, which includes the second format, from the wireless relay station 302 using the PDCCH. When the wireless terminal 304 receives the second control signal having the second format, it is recognized that the frequency band which is assigned to the uplink channel is the same as the frequency band which is assigned in step 6-1. The wireless terminal 304 transmits the data signal to the wireless relay station 302 using the PUSCH (uplink channel), which includes a frequency band set already, after the predetermined number of sub-frames from the sub-frame, which received the second control signal, based on the communication parameters which are included in the received second control signal.

Subsequently, in step 6-3, the wireless relay station 302 continues monitoring of the state of the uplink channel, and determines whether or not it is desired to change the resource block assignment, that is, the communication parameter which is omitted from the control signal having the second format.

Further, when the wireless relay station 302 determines that it is desired to change the resource block assignment, that is, the communication parameter which is omitted from the control signal having the second format, the wireless relay station 302 sets the SRS transmission request (SRS request) field in the second format to a specific value (for example, binary digit data "1") which indicates that the transmission of the reference signal SRS is requested, and transmits the second control signal having the second format to the wireless terminal 304 which is the communication target.

Here, in the second control signal having the second format, a fact that the SRS transmission request (SRS request) field is the specific value indicative of the transmission request of the reference signal SRS means that the resource block (frequency band) which is assigned to the uplink channel, that is, the communication parameter which is omitted from the control signal having the second format is changed from subsequent data communication. The fact is settled in advance between the wireless relay station 302 and the wireless terminal 304. Therefore, it is possible for the wireless relay station 302 to inform the wireless terminal 304 that the resource block (frequency band), which is assigned to the uplink channel, is changed from subsequent data communication using the second control signal, which includes the second format by setting the SRS transmission request (SRS request) field to the specific value indicative of the transmission request of the reference signal SRS.

The wireless terminal 304 receives the second control signal having the second format, in which the SRS transmission request (SRS request) field is set to the specific value indicative of the transmission request of the reference signal SRS, from the wireless relay station 302 using the PDCCH. The wireless terminal 304 recognizes that the resource block (frequency band) which is assigned to the uplink channel is changed from subsequent data communication based on the value of the SRS transmission request (SRS request) field included in the received second control signal. In addition, the wireless terminal 304 receives the second control signal having the second format, and recognizes that the frequency band which is assigned to the uplink channel is approximately the same as the frequency band which is assigned in step 6-1 in current data communication.

The wireless terminal 304 transmits the data signal to the wireless relay station 302 using the PUSCH (uplink channel), which includes the frequency band set already, after the predetermined number of sub-frames from the sub-frame which received the second control signal. In addition, the wireless terminal 304 generates the reference signal SRS based on a fact that the SRS transmission request (SRS request) field is set to the specific value, indicative of the transmission request of the reference signal SRS, in the second control signal, and transmits the generated reference signal SRS to the wireless relay station 302.

Here, the generated reference signal SRS enables the state of the uplink channel to be evaluated in the entirety of or a part of the band of the system band. In addition, although the reference signal SRS is divided into a plurality of sub-frames and then transmitted in the example illustrated in FIG. 6, the reference signal SRS may be transmitted using a single sub-frame.

Subsequently, in step 6-4, the wireless relay station 302 receives the reference signal SRS which is transmitted from the wireless terminal 304 in step 6-3, and continues the monitoring of the state of the uplink communication channel. The wireless relay station 302 newly determines various communication parameters, such as the resource block assignment, with regard to the wireless terminal 304 which is the communication target according to state monitoring results, and newly assigns a frequency band for the uplink channel which is used for the uplink data communication. The wireless relay station 302 transmits the first control signal having the first format to the wireless terminal 304 which is the communication target using the PDCCH (downlink channel) based on the determined communication parameters. That is, the wireless relay station 302 converts the format of the control signal from the second format into the first format.

The wireless terminal 304 receives the first control signal having the first format from the wireless relay station 302 using the PDCCH. The wireless terminal 304 sets a newly assigned frequency band with regard to the uplink channel, which is used for the uplink data communication, based on the communication parameters which are included in the received first control signal.

The wireless terminal 304 transmits the data signal to the wireless relay station 302 from the sub-frame, which received the first control signal, after the predetermined number of sub-frames using the PUSCH (uplink channel) which includes the newly set frequency band.

In step 6-5, similarly to the case of step 6-2, the wireless relay station 302 transmits the second control signal having the second format to the wireless terminal 304, which is the communication target, without changing a frequency band which is newly assigned to the uplink channel.

Similarly to the case of step 6-2, when the wireless terminal 304 receives the second control signal having the second format from the wireless relay station 302, the wireless terminal 304 recognizes that the frequency band which is assigned to the uplink channel is the same as the frequency band which is assigned in step 6-4, transmits the data signal to the wireless relay station 302 using the PUSCH (uplink channel) which includes the frequency band set already.

As described above, in the wireless communication system 300 according to the first embodiment, when the wireless relay station 302 transmits the first control signal having the first format which includes the Resource Block Assignment (RBA) to the wireless terminal 304, converts the format of the control signal into the second format which does not include the Resource Block Assignment (RBA), and determines that it is desired to change the resource block assignment, the wireless relay station 302 converts the format of the control signal into the first format again. Therefore, in the scheduling for the data communication, it may be possible to achieve both a reduction in the overhead (data size) of the control signal and flexibility of the scheduling.

In addition, when the wireless relay station 302 converts the format of the control signal from the second format into the first format, the wireless relay station 302 transmits the second control signal having the second format to the wireless terminal 304 after setting the SRS transmission request (SRS request) field in the second format to the specific value which indicates that the transmission of the reference signal SRS is requested. Therefore, it may be possible to appropriately notify the wireless terminal 304 that the format of the control signal has been replaced, and it may be possible to securely perform the conversion of the format of the control signal.

### 1-4. WIRELESS RELAY STATION 302

Subsequently, the configuration of the wireless relay station 302 and a method of controlling data communication performed in the wireless relay station 302 will be described.

### 1-4-1. CONFIGURATION OF WIRELESS RELAY STATION 302

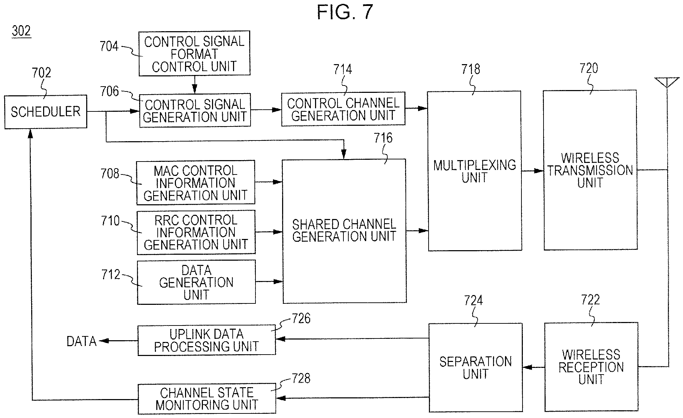

FIG. 7 is a functional block diagram illustrating the configuration of the wireless relay station 302. As illustrated in FIG. 7, the wireless relay station 302 includes a scheduler 702, a control signal format control unit 704, a control signal generation unit 706, an MAC control information generation unit 708, an RRC control information generation unit 710, a data generation unit 712, a control channel generation unit 714, a shared channel generation unit 716, a multiplexing unit 718, a wireless transmission unit 720, wireless reception unit 722, a separation unit 724, an uplink data processing unit 726, and a channel state monitoring unit 728.

The scheduler 702 receives uplink channel state monitoring results from the channel state monitoring unit 728, and determines various communication parameters which are included in the control signal to be transmitted to the wireless terminal 304 based on the received state monitoring results. In addition, the scheduler 702 determines the content of a signal to be transmitted to the wireless terminal 304 using a downlink shared channel (PDSCH) from among signals which are output from the MAC control information generation unit 708, the RRC control information generation unit 710, and the data generation unit 712 which will be described later.

The control signal format control unit 704 controls the type of the format of the control signal which is transmitted using the PDCCH. That is, the control signal format control unit 704 designates the first format illustrated in FIG. 4 or the second format illustrated in FIG. 5 to be used as the format of the control signal with regard to the control signal generation unit 706, which will be described later, under the control of the scheduler 702. The first format and the second format have been described above in detail.

The control signal generation unit 706 generates the control signal, which includes various communication parameters determined by the scheduler 702, using the format which is designated by the control signal format control unit 704.

The control channel generation unit 714 receives the control signal which is generated by the control signal generation unit 706, converts the received control signal into a signal having a format that is suitable for the data format of the PDCCH, and puts the control signal into a state which may be transmitted using the PDCCH.

The Media Access Control (MAC) control information generation unit 708 generates control information related to media access control in a data link layer (layer 2).

The RRC (Radio Resource Control) control information generation unit 710 generates control information related to wireless resource control in the data link layer (layer 2).

The data generation unit 712 generates a data signal to be transmitted to the wireless terminal 304.

The shared channel generation unit 716 receives signals from the MAC control information generation unit 708, the RRC control information generation unit 710, and the data generation unit 712, converts the received signals into a signal which is suitable for the data format of the PDSCH, and puts the signal into a state which may be transmitted using the PDSCH.

The multiplexing unit 718 receives output signals from the control channel generation unit 714 and the shared channel generation unit 716, and outputs the received output signals to the wireless transmission unit 720.

The wireless transmission unit 720 receives an output signal from the multiplexing unit 718, converts the received output signal into a wireless signal of a frequency band corresponding to the PDCCH or the PDSCH which is assigned to the wireless terminal 304, and transmits the wireless signal to the wireless terminal 304 through an antenna.

The wireless reception unit 722 receives the wireless signal of the frequency band corresponding to the PUCCH or the PDSCH, which is assigned to the wireless terminal 304, from the wireless terminal 304, converts the received wireless signal into a signal of a frequency which may be processed in the wireless relay station 302, and outputs the signal to the separation unit 724.

The separation unit 724 receives the output signal from the wireless reception unit 722. When the output signal from the wireless reception unit 722 is the data signal, the separation unit 724 outputs the received data signal to the uplink data processing unit 726. When the output signal from the wireless reception unit 722 is the reference signal SRS for evaluating the state of the uplink channel, the separation unit 724 outputs the received reference signal SRS to the channel state monitoring unit 728.

The uplink data processing unit 726 receives the data signal from the separation unit 724, and performs a demodulation process on the received data signal, thereby acquiring data.

The channel state monitoring unit 728 receives the reference signal SRS from the separation unit 724, and monitors the state of the uplink channel based on the received reference signal SRS. The channel state monitoring unit 728 supplies information, which indicates the uplink channel state monitoring results, to the scheduler 702.

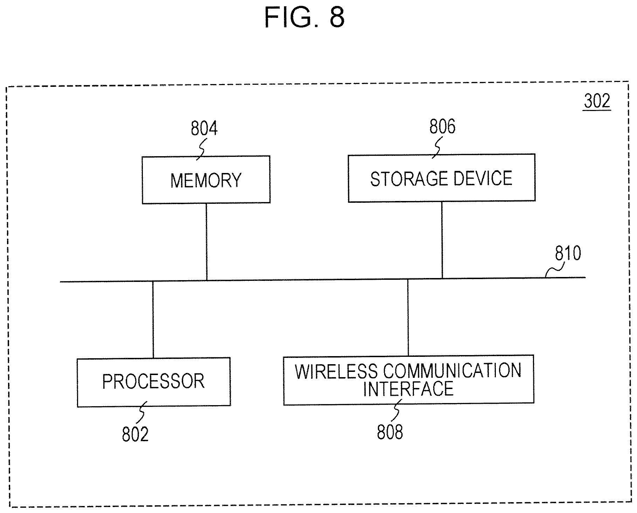

FIG. 8 is a hardware configuration diagram illustrating the configuration of the wireless relay station 302. The wireless relay station 302 includes a processor 802, a memory 804, a storage device 806, a wireless communication interface 808, and a bus 810. Each of the processor 802, the memory 804, the storage device 806, and the wireless communication interface 808 is connected to the bus 810. It may be possible to realize the function of each of the functional blocks of the wireless relay station 302 illustrated in FIG. 7 using the hardware configuration of the wireless relay station 302 illustrated in FIG. 8. Here, the memory 804 is, for example, a RAM. The storage device 806 is, for example, a non-volatile memory such as a ROM or a flash memory, or a magnetic disk device such as a Hard Disk Drive (HDD).

It may be possible to realize the function and the process of each of the functional blocks of the scheduler 702, the control signal format control unit 704, the control signal generation unit 706, the MAC control information generation unit 708, the RRC control information generation unit 710, the data generation unit 712, the control channel generation unit 714, the shared channel generation unit 716, the multiplexing unit 718, the separation unit 724, the uplink data processing unit 726, and the channel state monitoring unit 728 illustrated in FIG. 7 in such a way that the processor 802 executes a processing program in which relevant functions and processes are described. The processing program is stored in the storage device 806, the processor 802 expands the processing program which is stored in the storage device 806 in the memory 804, and executes each process described in the processing program. Therefore, each of the functional blocks in FIG. 7 which are described above is realized.

Also, each of the functional blocks in FIG. 7 which are described above may be realized using an LSI, such as Application Specified Integrated Circuit (ASIC) and Field Programmable Gate Array (FPGA) in addition to the hardware configuration illustrated in FIG. 8.

It may be possible to realize the wireless transmission unit 720 and the wireless reception unit 722 which are illustrated in FIG. 7 using the wireless communication interface 808. The wireless communication interface 808 is, for example, an LSI such as Radio Frequency Integrated Circuit (RFIC).

The wireless communication interface 808 receives a digital signal from the bus 810, and converts the received digital signal into an analog signal. Further, the wireless communication interface 808 converts the analog signal acquired after the conversion into a wireless signal of a frequency band which is used in the wireless communication, and transmits the wireless signal to the wireless terminal 304 through the antenna which is not illustrated in the drawing. In addition, the wireless communication interface 808 receives the wireless signal of the frequency band which is used in the wireless communication from the wireless terminal 304 through the antenna which is not illustrated in the drawing, and converts the received wireless signal into an analog signal of a frequency which may be processed by the processor 802. Further, the wireless communication interface 808 converts the analog signal acquired after the conversion into a digital signal, and outputs the digital signal acquired after the conversion to the bus 810.

### 1-4-2. METHOD OF CONTROLLING DATA COMMUNICATION IN WIRELESS RELAY STATION 302

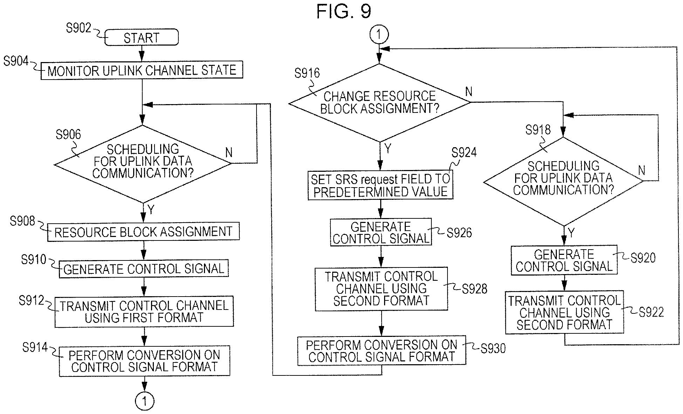

FIG. 9 is a flowchart illustrating the method of controlling the data communication performed in the wireless relay station 302. Hereinafter, the method of controlling the data communication performed in the wireless relay station 302 will be described with reference to FIG. 7 in addition to FIG. 9.

In step S902, the wireless relay station 302 starts a series of data communication control processes.

Subsequently, in step S904, the channel state monitoring unit 728 receives the reference signal SRS from the wireless terminal 304 through the wireless reception unit 722 and the separation unit 724, and starts monitoring of the state of the uplink channel based on the received reference signal SRS. The channel state monitoring unit 728 continues monitoring of the state of the uplink channel in the same manner.

Subsequently, in step S906, the scheduler 702 receives uplink channel state monitoring results acquired in step S904 from the channel state monitoring unit 728, and determines whether or not it is desired to perform scheduling for the uplink data communication based on the received state monitoring results. As a result, when it is determined that it is desired to perform scheduling, the process proceeds to step S908. For example, when the wireless terminal 304 requests the wireless relay station 302 for the assignment of the uplink channel (PUSCH) in accompany with the start of the uplink data communication or when there is data to be transmitted to the wireless relay station 302 from the wireless terminal 304, it is determined that it is desired to perform scheduling. In contrast, when it is determined that the scheduling is not desired, the process returns to step S906 again.

In step S908, the scheduler 702 determines a value of the Resource Block Assignment (RBA) field which is included in the control signal transmitted to the wireless terminal 304 based on the state monitoring results which are received in step S906.

Subsequently, in step S910, the scheduler 702 determines various communication parameters, except for the Resource Block Assignment (RBA), which are included in the control signal to be transmitted to the wireless terminal 304 based on the state monitoring results which are received in step S906. The control signal generation unit 706 generates the first control signal having the first format illustrated in FIG. 4 under the control of the scheduler 702 based on the determined various communication parameters which include the Resource Block Assignment (RBA). Also, at this time, the control signal format control unit 704 designates the first format illustrated in FIG. 4 as the format of the control signal with regard to the control signal generation unit 706.

Subsequently, in step S912, the control channel generation unit 714 converts the control signal which is generated in step S910 into a signal which has a format suitable for the data format of the PDCCH, and puts the signal into a state which may be transmitted using the PDCCH. The wireless transmission unit 720 receives the output signal of the control channel generation unit 714 through the multiplexing unit 718, converts the received output signal into the wireless signal of the frequency band corresponding to the PDCCH, and transmits the wireless signal to the wireless terminal 304 through the antenna.

Subsequently, in step 914, the scheduler 702 instructs the control signal format control unit 704 to convert the format of the control signal from the first format into the second format illustrated in FIG. 5. The control signal format control unit 704 designates the second format as the format of the control signal with regard to the control signal generation unit 706.

Subsequently, in step S916, the scheduler 702 receives the uplink channel state monitoring results from the channel state monitoring unit 728, and determines whether or not it is desired to change the resource block assignment with regard to the uplink channel for the uplink data communication, based on the received state monitoring results. As a result, when it is determined that it is not desired to change the resource block assignment, the process proceeds to step S918. When it is determined that it is desired to change the resource block assignment, the process proceeds to step S924.

In step S918, the scheduler 702 determines whether or not to perform scheduling for the uplink data communication based on the received state monitoring results in step S916. As a result, when it is determined that it is desired to perform scheduling, the process proceeds to step S920. In contrast, when it is determined that scheduling is not desired, the process returns to step S918 again.

Subsequently, in step S920, the scheduler 702 determines various communication parameters, except for the Resource Block Assignment (RBA), which are included in the control signal to be transmitted to the wireless terminal 304 based on the state monitoring results which are received in step S916. The control signal generation unit 706 generates the control signal having the second format under the control of the scheduler 702 based on the determined various communication parameters.

Also, at this time, the control signal format control unit 704 designates the second format as the format of the control signal with regard to the control signal generation unit 706. In addition, as described above, the Resource Block Assignment (RBA) field is not included in the second format. However, a value which is the same as the value determined in step S908 is maintained as the value of the Resource Block Assignment (RBA) (assigned frequency band value).

Subsequently, in step S922, the control channel generation unit 714 converts the control signal which is generated in step S920 into a signal which has a format suitable for the data format of the PDCCH, and puts the control signal into a state which may be transmitted using the PDCCH. The wireless transmission unit 720 receives the output signal of the control channel generation unit 714 through the multiplexing unit 718, converts the received output signal into the wireless signal of the frequency band corresponding to the PDCCH, and transmits the wireless signal to the wireless terminal 304 through the antenna.

In contrast, in step S924, the scheduler 702 instructs the control signal generation unit 706 to set the SRS transmission request (SRS request) field in the second format to the specific value indicative of the transmission request of the reference signal SRS.

Subsequently, in step S926, the scheduler 702 determines the various communication parameters, except for the Resource Block Assignment (RBA), which are included in the control signal to be transmitted to the wireless terminal 304 based on the state monitoring results which are received in step S916. The control signal generation unit 706 generates the second control signal having the second format, in which the SRS transmission request (SRS request) field is set to the specific value indicative of the transmission request of the reference signal SRS, under the control of the scheduler 702 based on the determined various communication parameters.

Here, in the second control signal having the second format, a fact that SRS transmission request (SRS request) field is the specific value indicative of the transmission request of the reference signal SRS means that the resource block (frequency band) which is assigned to the uplink channel, that is, the communication parameter which is omitted from the control signal having the second format is changed from subsequent data communication. The fact is settled in advance between the wireless relay station 302 and the wireless terminal 304.

Subsequently, in step S928, the control channel generation unit 714 converts the control signal which is generated in step S926 into a signal which has a format suitable for the data format of the PDCCH, and puts the signal into a state which may be transmitted using the PDCCH. The wireless transmission unit 720 receives the output signal of the control channel generation unit 714 through the multiplexing unit 718, converts the received output signal into the wireless signal of the frequency band corresponding to the PDCCH, and transmits the wireless signal to the wireless terminal 304 through the antenna.

Subsequently, in step S930, the scheduler 702 instructs the control signal format control unit 704 to convert the format of the control signal from the second format into the first format. The control signal format control unit 704 designates the first format as the format of the control signal with regard to the control signal generation unit 706. Thereafter, the process returns to step S906.

As described above, after the wireless relay station 302 according to the first embodiment transmits the first control signal having the first format which includes the Resource Block Assignment (RBA) to the wireless terminal 304, the wireless relay station 302 converts the format of the control signal into the second format which does not include the Resource Block Assignment (RBA), and then converts the format of the control signal into the first format again when the wireless relay station 302 determines that it is desired to change in the resource block assignment. Therefore, in the scheduling for the data communication, it may be possible to achieve reduction in the overhead (data size) of the control signal and the flexibility of the scheduling.

In addition, when the wireless relay station 302 converts the format of the control signal from the second format into the first format, the wireless relay station 302 sets the SRS transmission request (SRS request) field in the second format to a specific value which indicates that the transmission of the reference signal SRS is requested and transmits the second control signal having the second format to the wireless terminal 304. Therefore, it may be possible to appropriately inform the wireless terminal 304 that the format of the control signal has been replaced, and it may be possible to securely perform the conversion of the format of the control signal.

### 1-5. WIRELESS TERMINAL 304

Subsequently, the configuration of the wireless terminal 304 and the method of controlling data communication which is performed in the wireless terminal 304 will be described.

### 1-5-1. CONFIGURATION OF WIRELESS TERMINAL 304

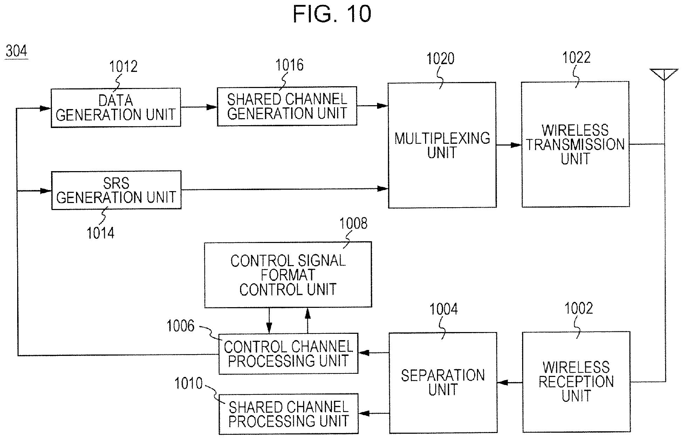

FIG. 10 is a functional block diagram illustrating the configuration of the wireless terminal 304. As illustrated in FIG. 10, the wireless terminal 304 includes a wireless reception unit 1002, a separation unit 1004, a control channel processing unit 1006, a control signal format control unit 1008, a shared channel processing unit 1010, a data generation unit 1012, an SRS generation unit 1014, a shared channel generation unit 1016, a multiplexing unit 1020, and a wireless transmission unit 1022.

The wireless reception unit 1002 receives a wireless signal of a frequency band corresponding to the PDCCH or the PDSCH which is assigned to the wireless terminal 304 from the wireless relay station 302 through the antenna, converts the received wireless signal into a signal which may be processed in the wireless terminal 304, and outputs the signal acquired through the conversion to the separation unit 1004.

The separation unit 1004 receives the output signal of the wireless reception unit 1002. When the output signal of the wireless reception unit 1002 is the signal which is received using the downlink control channel (PDCCH) (for example, the control signal for scheduling the uplink data communication), the separation unit 1004 outputs the received reception signal to the control channel processing unit 1006. When the output signal of the wireless reception unit 1002 is a signal which is received using the downlink shared channel (PDSCH) (for example, the data signal), the separation unit 1004 outputs the received reception signal to the shared channel processing unit 1010.

The control signal format control unit 1008 selects the format of the control signal to be used when the control channel processing unit 1006 processes the control signal for scheduling the uplink data communication. The control signal format control unit 1008 designates either the first format illustrated in FIG. 4 or the second format illustrated in FIG. 5 as the format of the control signal with regard to the control channel processing unit 1006.

When the reception signal from the separation unit 1004 is the control signal for scheduling the uplink data communication, the control channel processing unit 1006 processes the received control signal using the format, which is designated by the control signal format control unit 1008, and acquires various communication parameters which are included in the control signal.

When the designated format of the control signal is the first format and the Resource Block Assignment (RBA) is included in the acquired communication parameters, the control channel processing unit 1006 acquires information of the frequency band (resource block) which is assigned to the wireless terminal 304. The control channel processing unit 1006 instructs the control signal format control unit 1008 to select the second format which does not include the Resource Block Assignment (RBA) field as the format of the control signal from subsequent data communication.

In addition, when the control channel processing unit 1006 detects that the designated format of the control signal is the second format and the SRS transmission request (SRS request) field in the acquired parameter is the specific value indicative of the transmission request of the reference signal SRS, the control channel processing unit 1006 instructs the control signal format control unit 1008 to select the first format which includes the Resource Block Assignment (RBA) field as the format of the control signal from subsequent data communication.

When the reception signal from the separation unit 1004 is the data signal, the shared channel processing unit 1010 acquires data by performing the demodulation process on the received data signal.

When communication parameters for the uplink data communication are acquired in the control channel processing unit 1006, the data generation unit 1012 generates a data signal to be transmitted to the wireless relay station 302.

When it is detected that the SRS transmission request (SRS request) field is the specific value indicative of the transmission request of the reference signal SRS in the control channel processing unit 1006, the SRS generation unit 1014 generates a reference signal SRS for evaluating the state of the uplink channel. In addition, the SRS generation unit 1014 periodically generates the reference signal SRS at fixed sub-frame intervals in addition to the above-described case.

The shared channel generation unit 1016 receives the data signal which is generated by the data generation unit 1012, converts the received data signal into a signal which has a format suitable for the data format of the PUSCH, and puts the signal into a state which may be transmitted using the PUSCH.

The multiplexing unit 1020 receives the output signals from the shared channel generation unit 1016 and the SRS generation unit 1014, and outputs the received output signals to the wireless transmission unit 1022.

The wireless transmission unit 1022 receives the output signal from the multiplexing unit 1020, converts the received output signal into the wireless signal of the frequency band corresponding to the SRS, PUCCH, or the PUSCH which is assigned to the wireless terminal 304, and transmits the wireless signal to the wireless relay station 302 through the antenna.

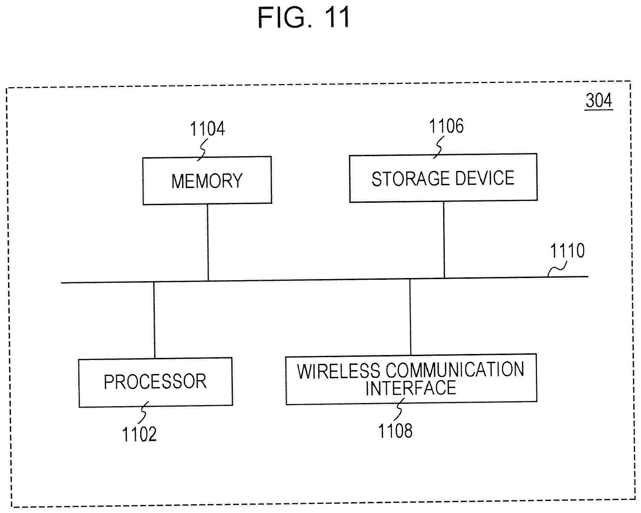

FIG. 11 is a hardware configuration diagram illustrating the configuration of the wireless terminal 304. The wireless relay station 302 includes a processor 1102, a memory 1104, a storage device 1106, a wireless communication interface 1108, and a bus 1110. Each of the processor 1102, the memory 1104, the storage device 1106, and the wireless communication interface 1108 is connected to the bus 1110. It may be possible to realize the function of each of the functional blocks of the wireless terminal 304 illustrated in FIG. 10 using the hardware configuration of the wireless terminal 304 illustrated in FIG. 11.

It may be possible to realize the function and the process of each of the functional blocks of the separation unit 1004, the control channel processing unit 1006, the control signal format control unit 1008, the shared channel processing unit 1010, the data generation unit 1012, the SRS generation unit 1014, the shared channel generation unit 1016, the control channel generation unit 1018, and the multiplexing unit 1020 illustrated in FIG. 10 in such a way that the processor 1102 executes a processing program in which a corresponding function and process is described. The processing program is stored in the storage device 1106, and the above-described each of the functional blocks illustrated in FIG. 10 is realized in such a way that the processor 1102 expands the processing program, which is stored in the storage device 1106, in the memory 1104, and executes each of the processes which are described in the processing program. Here, the memory 1104 is, for example, a RAM The storage device 1106 is, for example, a non-volatile memory such as a ROM or a flash memory, or a magnetic disk device such as a Hard Disk Drive (HDD).

Also, the above-described each of the functional blocks illustrated in FIG. 10 may be realized using an LSI called the ASIC or the FPGA in addition to the hardware configuration illustrated in FIG. 11.

It may be possible to realize the wireless reception unit 1002 and the wireless transmission unit 1022 illustrated in FIG. 10 using the wireless communication interface 1108. The wireless communication interface 1108 is, for example, an LSI such as a Radio Frequency Integrated Circuit (RFIC).

The wireless communication interface 1108 receives a digital signal from the bus 1110, and converts the received digital signal into an analog signal. Further, the wireless communication interface 1108 converts the analog signal acquired after the conversion into a wireless signal of a frequency band which is used in the wireless communication, and transmits the wireless signal to the wireless relay station 302 through the antenna which is not illustrated in the drawing. In addition, the wireless communication interface 1108 receives the wireless signal of the frequency band which is used in the wireless communication from the wireless relay station 302 through the antenna which is not illustrated in the drawing, and converts the received wireless signal into an analog signal of a frequency which may be processed by the processor 1102. Further, the wireless communication interface 1108 converts the analog signal acquired after the conversion into a digital signal, and outputs the digital signal acquired after the conversion to the bus 1110.

### 1-5-2. METHOD OF CONTROLLING DATA COMMUNICATION IN WIRELESS TERMINAL 304

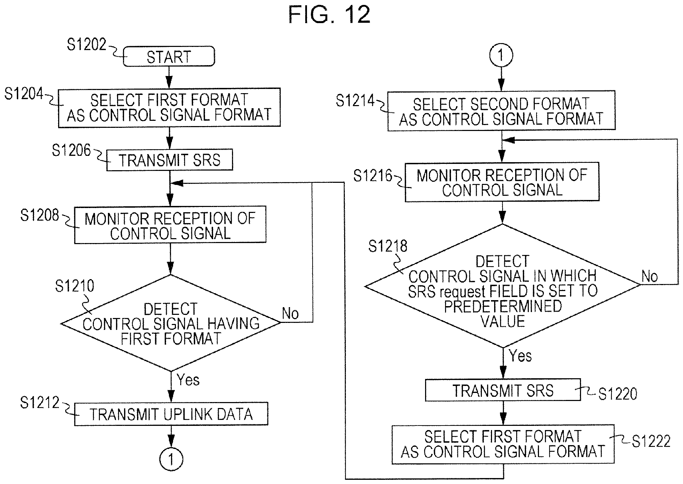

FIG. 12 is a flowchart illustrating a method of controlling data communication performed in the wireless terminal 304. Hereinafter, the method of controlling data communication performed in the wireless terminal 304 will be described with reference to FIG. 10 in addition to FIG. 12.

In step S1202, the wireless terminal 304 starts a series of data communication control processes.

Subsequently, in step S1204, the control signal format control unit 1008 selects the first format illustrated in FIG. 4, which includes the Resource Block Assignment (RBA) field, as the format of the control signal to be used when the control channel processing unit 1006 processes the control signal for scheduling the uplink data communication. The control signal format control unit 1008 designates the first format as the format of the control signal with regard to the control channel processing unit 1006.

Subsequently, in step S1206, the SRS generation unit 1014 generates a reference signal SRS for evaluating the state of the uplink channel. The generation of the reference signal SRS is periodically performed at fixed sub-frame intervals regardless of the process in each step below.

The control channel generation unit 1018 converts the reference signal SRS, which is generated by the SRS generation unit 1014, into a wireless signal of the frequency band, which is assigned to the SRS, and puts the wireless signal into a state which may be transmitted through the antenna. The wireless transmission unit 1022 converts the output signal of the shared channel generation unit 1016, which is received through the multiplexing unit 1020, into a wireless signal of the frequency band corresponding to the PUSCH, and transmits the wireless signal to the wireless relay station 302 through the antenna.

Subsequently, in step S1208, the wireless reception unit 1002 monitors whether or not the control signal for scheduling the uplink data communication is received from the wireless relay station 302 using the PDCCH.

Subsequently, in step S1210, when the wireless reception unit 1002 receives the control signal for scheduling the uplink data communication, the control channel processing unit 1006 receives the control signal which is received from the wireless reception unit 1002 through the separation unit 1004. The control channel processing unit 1006 determines whether or not the received control signal is a control signal having the first format which is designated by the control signal format control unit 1008. As a result, when the control signal having the first format is detected, the process proceeds to step S1212. In contrast, when the control signal having the first format is not detected, the process returns to step S1208.

Subsequently, in step S1212, the control channel processing unit 1006 processes the received control signal using the first format which is designated by the control signal format control unit 1008, and acquires the various communication parameters which are included in the control signal. The control channel processing unit 1006 acquires information of the frequency band (resource block), which is assigned to the wireless terminal 304, from the value of the acquired Resource Block Assignment (RBA) field. The control channel processing unit 1006 instructs the control signal format control unit 1008 to select the second format, which does not include the Resource Block Assignment (RBA) field, as the format of the control signal.

In contrast, the data generation unit 1012 generates the data signal to be transmitted to the wireless relay station 302. The shared channel generation unit 1016 converts the data signal, which is generated by the data generation unit 1012, into a signal which has a format suitable for the data format of the PUSCH, and puts the signal into a state which may be transmitted using the PUSCH. The wireless transmission unit 1022 converts the output signal of the shared channel generation unit 1016, which is received through the multiplexing unit 1020, into a wireless signal of a frequency band corresponding to the PUSCH which is assigned to the wireless terminal 304, and transmits the wireless signal to the wireless relay station 302 through the antenna.

Subsequently, in step S1214, the control signal format control unit 1008 selects the second format illustrated in FIG. 5, which does not include the Resource Block Assignment (RBA) field, as the format of the control signal based on the instruction from the control channel processing unit 1006. The control signal format control unit 1008 designates the second format as the format of the control signal with regard to the control channel processing unit 1006.

Subsequently, in step S1216, the wireless reception unit 1002 monitors whether or not the control signal for scheduling the uplink data communication is received from the wireless relay station 302 using the PDCCH.

Subsequently, in step S1218, when the wireless reception unit 1002 receives the control signal for scheduling the uplink data communication, the control channel processing unit 1006 receives the control signal which is received from the wireless reception unit 1002 through the separation unit 1004. The control channel processing unit 1006 determines whether or not the received control signal is the control signal having the second format which is designated by the control signal format control unit 1008 and the SRS transmission request (SRS request) field in the second format has the specific value indicative of the transmission request of the reference signal SRS. As a result, when a control signal, in which the SRS transmission request field is set to the specific value, is detected, the process proceeds to step S1220. In contrast, when the control signal, in which the SRS transmission request field is set to the specific value, is not detected, the process proceeds to step S1216.

In addition, when the control signal, in which the SRS transmission request field is set to the specific value, is detected, the control channel processing unit 1006 instructs the control signal format control unit 1008 to select the first formation, which includes the Resource Block Assignment (RBA) field, as the format of the control signal.

Subsequently, in step S1220, the SRS generation unit 1014 generates a reference signal SRS for evaluating the state of the uplink channel in response to a fact that the SRS transmission request field is set to the above-described specific value in step S1218.

The control channel generation unit 1018 converts the reference signal SRS, which is generated by the SRS generation unit 1014, into a wireless signal of a frequency band which is assigned to the SRS, and puts the wireless signal in a state which may be transmitted through the antenna. The wireless transmission unit 1022 converts the output signal of the shared channel generation unit 1016, which is received through the multiplexing unit 1020, into a wireless signal of the frequency band corresponding to the PUSCH, and transmits the wireless signal to the wireless relay station 302 through the antenna.

Subsequently, in step S1222, the control signal format control unit 1008 selects a first format, which includes the Resource Block Assignment (RBA) field, as the format of the control signal based on the instruction from the control channel processing unit 1006. The control signal format control unit 1008 designates the first format as the format of the control signal with regard to the control channel processing unit 1006. Thereafter, the process returns to step S1208.

As described above, after the wireless terminal 304 according to the first embodiment receives the first control signal having the first format, which includes the Resource Block Assignment (RBA), from the wireless relay station 302, the wireless terminal 304 converts the format of the control signal into the second format which does not include the Resource Block Assignment (RBA). When a notification that it is desired to change the resource block assignment is provided from the wireless relay station 302, the wireless terminal 304 converts the format of the control signal into the first format again. Therefore, in the scheduling for the data communication, it may be possible to achieve both the reduction in the overhead (data size) of the control signal and the flexibility of the scheduling.

In addition, when the wireless terminal 304 converts the format of the control signal from the second format into the first format, the wireless terminal 304 sets the SRS transmission request (SRS request) field in the second format to the specific value which indicates that the transmission of the reference signal SRS is requested, and then receives the second control signal having the second format from the wireless relay station 302. Therefore, it may be possible to appropriately recognize that the format of the control signal has been replaced, and it may be possible to securely perform the conversion on the format of the control signal.

### 2. SECOND EMBODIMENT

Hereinafter, a wireless station and a communication control method according to a second embodiment will be described. Similarly to the first embodiment, the second embodiment relates to dynamic scheduling for uplink data communication in LTE.

The configuration of a wireless communication system 1300 according to the second embodiment is the same as the configuration of the wireless communication system 300 illustrated in FIG. 3 according to the first embodiment, and includes a wireless relay station (first wireless station) 1302 and a wireless terminal (second wireless station) 1304. Accordingly, the detailed description thereof will not be repeated.

In addition, in dynamic scheduling performed by the wireless communication system 1300 according to the second embodiment, the formats of a control signal for scheduling the uplink data communication are the same as the formats of the control signal illustrated in FIG. 4 and FIG. 5 according to the first embodiment. Accordingly, the detailed description thereof will not be repeated.

### 2-1. COMMUNICATION CONTROL IN WIRELESS COMMUNICATION SYSTEM 1300

Subsequently, in the wireless communication system 1300 according to the second embodiment, a method of controlling data communication performed between the wireless relay station 1302 and the wireless terminal 1304 will be described.

The method of controlling data communication according to the second embodiment is acquired by improving the method of controlling data communication illustrated in FIG. 6 according to the first embodiment as follows:

### 2-1-1. CONVERSION PERFORMED ON CONTROL SIGNAL FORMAT FROM FIRST FORMAT INTO SECOND FORMAT

A method of controlling data communication according to the second embodiment is different from the cases in steps 6-1 and 6-2 illustrated in FIG. 6 according to the first embodiment. The method of controlling data communication according to the second embodiment is different in points that, when the wireless relay station 1302 transmits the first control signal having the first format to the wireless terminal 1304 and further receives the data signal corresponding to the transmitted first control signal by the wireless terminal 1304, the wireless relay station 1302 converts the format of the control signal from the first format into the second format.

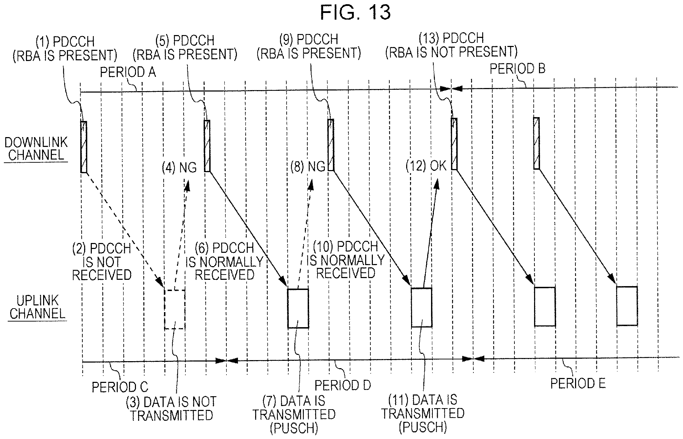

FIG. 13 is a diagram illustrating the method of controlling data communication performed between the wireless relay station 1302 and the wireless terminal 1304 in the wireless communication system 1300 according to the second embodiment, and is a diagram illustrating the method of controlling data communication performed when the format of the control signal is converted from the first format to the second format.

As illustrated in FIG. 13, in step 13-1, similarly to the case of step 6-1, the wireless relay station 1302 determines various communication parameters, such as the resource block assignment, with regard to the wireless terminal 1304 which is a communication target, and assigns a frequency band for the uplink channel which is used for the uplink data communication. The wireless relay station 1302 transmits a first control signal having the first format illustrated in FIG. 4 to the wireless terminal 1304 using the PDCCH (downlink channel) based on the determined communication parameters. The first control signal is a control signal for scheduling the uplink data communication, and includes the communication parameters, such as the Resource Block Assignment (RBA).

In step 13-2, the wireless terminal 1304 fails to receive the first control signal having the first format from the wireless relay station 1302 for some reason such as the bad state of the downlink communication channel (PDCCH).

In step 13-3, since the wireless terminal 1304 fails to receive the first control signal having the first format in step 13-2, it is not possible to acquire the communication parameters which are included in the first control signal and it is not possible to set the frequency band which is assigned to the uplink channel used for the uplink data communication. Therefore, it is not possible for the wireless terminal 1304 to transmit a corresponding data signal to the wireless relay station 1302.

In step 13-4, since the wireless terminal 1304 does not transmits the corresponding data signal, the wireless relay station 1302 fails to receive the data signal corresponding to the transmitted first control signal from the wireless terminal 1304.

When the wireless relay station 1302 fails to receive the data signal corresponding to the transmitted first control signal, the wireless relay station 1302 determines that the transmitted first control signal is not normally received in the wireless terminal 1304 and that the various communication parameters, such as the resource block assignment, are not normally notified to the wireless terminal 1304. Further, the wireless relay station 1302 does not convert the format of the control signal from the first format into the second format, and determines to transmit the first control signal having the first format to the wireless terminal 1302 even in subsequent data communication.

In step 13-5, the wireless relay station 1302 determines the various communication parameters, such as the resource block assignment, with regard to the wireless terminal 1304 again in response to a fact that the wireless relay station 1302 fails to receive the data signal corresponding to the first control signal in step 13-4, and assigns a frequency band for the uplink channel which is used for the uplink data communication. The wireless relay station 1302 transmits the first control signal having the first format again to the wireless terminal 1304 which is the communication target using the PDCCH (downlink channel) based on the determined communication parameters.

In step 13-6, the wireless terminal 1304 normally receives the first control signal having the first format, which is transmitted in step 13-5, from the wireless relay station 1302 using the PDCCH.

In step 13-7, the wireless terminal 1304 sets the frequency band assigned to the uplink channel which is used for the uplink data communication based on the communication parameters which are included in the received first control signal. The wireless terminal 1304 transmits the data signal to the wireless relay station 1302 using the PUSCH (uplink channel), which includes the set frequency band, after the predetermined number of sub-frames from the sub-frame which received the control signal.

In step 13-8, the wireless relay station 1302 fails to receive the data signal corresponding to the transmitted first control signal from the wireless terminal 1304 for some reason such as the bad state of the uplink communication channel (PUSCH).

When the wireless relay station 1302 fails to receive the data signal corresponding to the transmitted first control signal, the wireless relay station 1302 determines that the transmitted first control signal is not normally received in the wireless terminal 1304 and that the various communication parameters, such as the resource block assignment, are not normally notified to the wireless terminal 1304. Further, the wireless relay station 1302 does not convert the format of the control signal from the first format into the second format, and determines to transmit the first control signal having the first format to the wireless terminal 1302 even in subsequent data communication.

In step 13-9, the wireless relay station 1302 determines the various communication parameters, such as the resource block assignment, with regard to the wireless terminal 1304 again in response to the fact that the wireless relay station 1302 fails to receive the data signal corresponding to the transmitted first control signal, and assigns a frequency band for the uplink channel which is used for the uplink data communication. The wireless relay station 1302 transmits the first control signal having the first format again to the wireless terminal 1304 which is the communication target using the PDCCH (downlink channel) based on the determined communication parameters.

In step 13-10, the wireless terminal 1304 receives the first control signal having the first format, which is transmitted in step 13-9, from the wireless relay station 1302 using the PDCCH.

In step 13-11, the wireless terminal 1304 sets the frequency band assigned to the uplink channel which is used for the uplink data communication based on the communication parameters which are included in the received first control signal. The wireless terminal 1304 transmits the data signal to the wireless relay station 1302 using the PUSCH (uplink channel), which includes the set frequency band, after the predetermined number of sub-frames from the sub-frame which received the control signal.

In step 13-12, the wireless relay station 1302 normally receives the data signal corresponding to the transmitted first control signal from the wireless terminal 1304 using the PUSCH.

When the wireless relay station 1302 normally received the data signal corresponding to the transmitted first control signal, the wireless relay station 1302 determines that the transmitted first control signal is normally received in the wireless terminal 1304 and that the various communication parameters, such as the resource block assignment, were normally notified to the wireless terminal 1304. Further, the wireless relay station 1302 converts the format of the control signal from the first format into the second format.

In step 13-13, when the wireless relay station 1302 determines that it is not desired to change the resource block assignment similarly to step 6-2, the wireless relay station 1302 transmits the second control signal having the second format to the wireless terminal 1304 while not changing the frequency band which is assigned to the uplink channel. That is, the wireless relay station 1302 converts the format of the control signal from the first format into the second format.

The wireless terminal 1304 receives the second control signal having the second format from the wireless relay station 1302 using the PDCCH. Similarly to step 6-2, the wireless terminal 1304 transmits the data signal to the wireless relay station 1302 using the PUSCH (uplink channel), which includes the frequency band set already, after the predetermined number of sub-frames from the sub-frame, which received the second control signal, based on the communication parameters which are included in the received second control signal.

Here, as being understood from the above description, a period A is a period in which the wireless relay station 1302 uses the first format as the format of the control signal in FIG. 13. A period B is a period in which the wireless relay station 1302 uses the second format as the format of the control signal.

In addition, a period C is a period in which the wireless terminal 1304 uses the first format as the format of the control signal. A period E is a period in which the wireless terminal 1304 uses the second format as the format of the control signal.

In contrast, a period D is a period in which the wireless terminal 1304 uses both the first format and the second format as the format of the control signal.

During a period until the wireless terminal 1304 actually receives the second control signal having the second format after receiving the first control signal having the first format, the wireless terminal 1304 may use both the first format and the second format as the format of the control signal and may receive both the first control signal and the second control signal. The reason for this is, for example, when it is difficult for the wireless relay station 1302 to normally receive the data signal corresponding to the first control signal even though the wireless terminal 1304 normally receives the first control signal as in step 13-8, the wireless relay station 1302 determines that the various communication parameters, such as the resource block assignment, are not normally notified to the wireless terminal 1304, and thus the first control signal is transmitted again.

As described above, in the wireless communication system 1300 according to the second embodiment, when the wireless relay station 1302 transmits the first control signal having the first format, which includes the Resource Block Assignment (RBA), to the wireless terminal 1304 and then further receives the data signal corresponding to the transmitted first control signal from the wireless terminal 1304, the wireless relay station 1302 converts the format of the control signal from the first format into the second format. Therefore, when the format of the control signal is converted from the first format to the second format, it may be possible to recognize that the transmitted first control signal is normally received in the wireless terminal 1304 and that the various communication parameters, such as the resource block assignment, were normally notified to the wireless terminal 1304, and thus it may be possible to securely performs the conversion of the format of the control signal.

### 2-1-2. CONVERSION PERFORMED ON CONTROL SIGNAL FORMAT FROM SECOND FORMAT TO FIRST FORMAT

In addition, a method of controlling data communication according to the second embodiment is different from the cases of steps 6-3 and 6-4 illustrated in FIG. 6 according to the first embodiment. The method of controlling data communication according to the second embodiment is different in points that the wireless relay station 1302 transmits the second control signal having the second format to the wireless terminal 1304 after setting the SRS transmission request (SRS request) field of the second format to the specific value indicative of the transmission request of the reference signal SRS, and, when the reference signal SRS corresponding to the second control signal transmitted from the wireless terminal 1304 is received, the wireless relay station 1302 converts the format of the control signal from the second format into the first format.

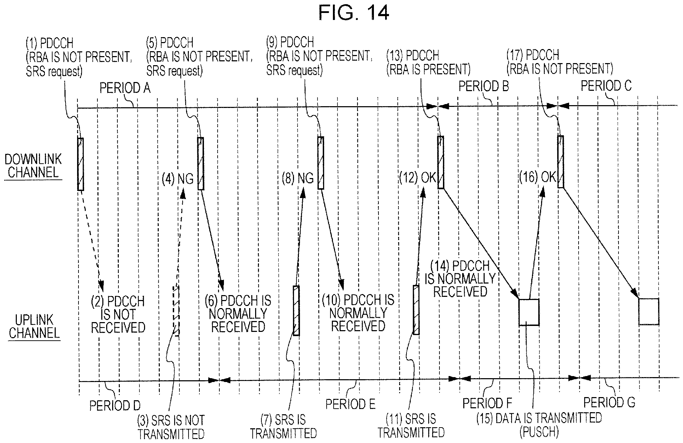

FIG. 14 is a diagram illustrating the method of controlling data communication performed between the wireless relay station 1302 and the wireless terminal 1304 in the wireless communication system 1300 according to the second embodiment, and is a diagram illustrating the method of controlling data communication when the format of the control signal is converted from the second format to the first format.

As illustrated in FIG. 14, similarly to the case of step 6-3, the wireless relay station 1302 continues monitoring of the state of the uplink channel, determines whether or not it is desired to change the resource block assignment, that is, the communication parameter which is omitted from the control signal having the second format in step 14-1.

Further, if the wireless relay station 1302 determines that it is desired to change the resource block assignment, that is, the communication parameter which is omitted from the control signal having the second format, the wireless relay station 1302 sets the SRS transmission request (SRS request) field of the second format to the specific value indicative of the transmission request of the reference signal SRS, and transmits the second control signal having the second format to the wireless terminal 1304.

In step 14-2, the wireless terminal 1304 fails to receive the second control signal having the second format from the wireless relay station 1302 for some reason such as the bad state of the downlink communication channel (PDCCH).

In step 14-3, since the wireless terminal 1304 fails to receive the second control signal having the second format in step 14-2, it is difficult for the wireless terminal 1304 to acquire the SRS transmission request (SRS request) parameter which is included in the second control signal. Therefore, it is difficult for the wireless terminal 1304 to transmit a corresponding reference signal SRS to the wireless relay station 1302.

In step 14-4, since the wireless terminal 1304 does not transmit the corresponding reference signal SRS, the wireless relay station 1302 fails to receive the reference signal SRS corresponding to the transmitted second control signal from the wireless terminal 1304.

When the wireless relay station 1302 fails to receive the reference signal SRS corresponding to the transmitted second control signal, the wireless relay station 1302 determines that the transmitted second control signal is not normally received in the wireless terminal 1304 and that a fact that it is desired to change the resource block assignment is not normally notified. Further, the wireless relay station 1302 does not convert the format of the control signal from the second format into the first format, and determines to transmit the second control signal having the second format to the wireless terminal 1302 after setting the SRS transmission request (SRS request) field to the specific value indicative of the transmission request of the reference signal SRS in the subsequent data communication.

In step 14-5, if the wireless relay station 1302 determines that it is desired to change the resource block assignment in response to the fact that the wireless relay station 1302 fails to receive the reference signal SRS corresponding to the second control signal in step 14-4, the wireless relay station 1302 sets the SRS transmission request (SRS request) field of the second format to the specific value indicative of the transmission request of the reference signal SRS, and then transmits the second control signal having the second format to the wireless terminal 1304 again using the PDCCH (downlink channel).

In step 14-6, the wireless terminal 1304 normally receives the second control signal having the second format which is transmitted from the wireless relay station 1302 using the PDCCH in step 14-5.

In step 14-7, the wireless terminal 1304 recognizes that the resource block (frequency band) which is assigned to the uplink channel (PUSCH) is changed from subsequent data communication based on a value of the SRS transmission request (SRS request) field included in the received second control signal. In addition, the wireless terminal 1304 recognizes that the frequency band, which is assigned to the uplink channel (PUSCH), is the same as a frequency band, which is assigned in advance, in the current data communication by receiving the second control signal having the second format.

The wireless terminal 1304 generates the reference signal SRS corresponding to the received second control signal, and transmits the generated reference signal SRS to the wireless relay station 1302 after the predetermined number of sub-frames from the sub-frame which received the control signal. Here, it may be possible to use the generated reference signal SRS to evaluate the state of the uplink channel in the entirety of or a part of the system band. In addition, although the reference signal SRS is transmitted using a single sub-frame in an example illustrated in FIG. 14, the reference signal may be divided into a plurality of sub-frames and the resulting sub-frames may be transmitted.

In step 14-8, the wireless relay station 1302 fails to receive the reference signal SRS corresponding to the transmitted second control signal from the wireless terminal 1304 for some reason such as the bad state of the uplink communication channel.

When the wireless relay station 1302 fails to receive the reference signal SRS corresponding to the transmitted second control signal, the wireless relay station 1302 determines that the transmitted second control signal is not normally received in the wireless terminal 1304 and that a fact that it is desired to change the resource block assignment is not normally notified to the wireless terminal 1304. Further, the wireless relay station 1302 does not convert the format of the control signal from the second format into the first format, and determines to transmit the second control signal having the second format to the wireless terminal 1302 after setting the SRS transmission request (SRS request) field to the specific value indicative of the transmission request of the reference signal SRS in the subsequent data communication.

In step 14-9, if the wireless relay station 1302 determines that it is desired to change the resource block assignment in response to the fact that the wireless relay station 1302 fails to receive the reference signal SRS corresponding to the second control signal in step 14-8, the wireless relay station 1302 sets the SRS transmission request (SRS request) field of the second format to the specific value indicative of the transmission request of the reference signal SRS, and then transmits the second control signal having the second format to the wireless terminal 1304 again using the PDCCH (downlink channel).

In step 14-10, the wireless terminal 1304 normally receives the second control signal having the second format which is transmitted from the wireless relay station 1302 using the PDCCH in step 14-9.

In step 14-11, the wireless terminal 1304 recognizes that the resource block (frequency band) which is assigned to the uplink channel (PUSCH) is changed from subsequent data communication based on a value of the SRS transmission request (SRS request) field included in the received second control signal. In addition, the wireless terminal 1304 recognizes that the frequency band, which is assigned to the uplink channel (PUSCH), is the same as a frequency band, which is assigned in advance, in the current data communication by receiving the second control signal having the second format.

The wireless terminal 1304 generates the reference signal SRS corresponding to the received second control signal, and transmits the generated reference signal SRS to the wireless relay station 1302 after the predetermined number of sub-frames from the sub-frame which received the control signal.

In step 14-12, the wireless relay station 1302 normally receives the reference signal SRS corresponding to the transmitted second control signal from the wireless terminal 1304.

When the wireless relay station 1302 normally receives the reference signal SRS corresponding to the transmitted second control signal, the wireless relay station 1302 determines that the transmitted second control signal is normally received in the wireless terminal 1304 and that the fact that it needs to change the resource block assignment is normally notified to the wireless terminal 1304. Further, the wireless relay station 1302 converts the format of the control signal from the second format into the first format.

In step 14-13, similarly to step 6-4, the wireless relay station 1302 newly determines various communication parameters, such as the resource block assignment and newly assigns a frequency band for the uplink channel which is used for the uplink data communication with regard to the wireless terminal 1304 which is the communication target. The wireless relay station 1302 transmits the first control signal having the first format to the wireless terminal 1304 which is the communication target using the PDCCH (downlink channel) based on the determined communication parameters. That is, the wireless relay station 1302 converts the format of the control signal from the second format into the first format.

In step 14-14, the wireless terminal 1304 normally receives the first control signal having the first format from the wireless relay station 1302 using the PDCCH.

In step 14-15, the wireless terminal 1304 sets the newly assigned frequency band for the uplink channel, which is used for the uplink data communication, based on the communication parameters which are included in the received first control signal.

The wireless terminal 1304 transmits the data signal to the wireless relay station 1302 using the PUSCH (uplink channel), which includes the newly set frequency band, after the predetermined number of sub-frames from the sub-frame which received the control signal.

In step 14-16, the wireless relay station 1302 normally receives the data signal corresponding to the transmitted first control signal from the wireless terminal 1304 using the PUSCH.

When the wireless relay station 1302 normally received the data signal corresponding to the transmitted first control signal, the wireless relay station 1302 determines that the transmitted first control signal is normally received in the wireless terminal 1304 and that the various communication parameters, such as the resource block assignment, were normally notified to the wireless terminal 1304. Further, the wireless relay station 1302 converts the format of the control signal from the first format into the second format.

In step 14-17, when the wireless relay station 1302 determines that it is not desired to change the resource block assignment, the wireless relay station 1302 does not perform conversion on the frequency band which is assigned to the uplink channel, and transmits the second control signal having the second format to the wireless terminal 1304. That is, the wireless relay station 1302 converts the format of the control signal from the first format into the second format.

Here, as being understood from the above description, in FIG. 14, the periods A and C are periods in which the wireless relay station 1302 uses the second format as the format of the control signal. The period B is a period in which the wireless relay station 1302 uses the first format as the format of the control signal.

In addition, the periods D and G are periods in which the wireless terminal 1304 uses the second format as the format of the control signal.

In contrast, the periods E and F are periods in which the wireless terminal 1304 uses both the first format and the second format as the format of the control signal.

During a period until the wireless terminal 1304 actually receives the first control signal having the first format after receiving the second control signal having the second format in which the SRS transmission request (SRS request) field is set to the specific value indicative of the transmission request of the reference signal SRS, the wireless terminal 1304 may use both the first format and the second format as the format of the control signal, and may receive the both the first control signal and the second control signal. The reason for this is, for example, if it was difficult for the wireless relay station 1302 to normally receive the reference signal SRS corresponding to the second control signal even when the wireless terminal 1304 normally received the second control signal in which the SRS transmission request field is set to the above-described specific value, as in step 14-8, the wireless relay station 1302 determines that the fact that it is desired to change the resource block assignment, was not normally notified to the wireless terminal 1304, and thus the wireless relay station 1302 transmits the second control signal, in which the SRS transmission request field was set to the specific value, again.

In addition, during a period until the second control signal having the second format is actually received after receiving the first control signal having the first format is received, the wireless terminal 1304 uses both the first format and the second format as the format of the control signal, and may receive both the first control signal and the second control signal. The reason for this is that, similarly to the case of period D in FIG. 13, if it was difficult for the wireless relay station 1302 to normally receive the data signal corresponding to the first control signal even when the wireless terminal 1304 normally received the first control signal, the wireless relay station 1302 determines that the various communication parameters, such as the resource block assignment, were not normally notified to the wireless terminal 1304, and thus wireless relay station 1302 transmits the first control signal again.

As described above, in the wireless communication system 1300 according to the second embodiment, when the wireless relay station 1302 transmitted the second control signal having the second format to the wireless terminal 1304 after setting the SRS transmission request (SRS request) field of the second format to the specific value indicative of the transmission request of the reference signal SRS and then further received the reference signal SRS corresponding to the transmitted second control signal from the wireless terminal 1304, the wireless relay station 1302 converted the format of the control signal from the second format into the first format. Therefore, when the format of the control signal is converted from the second format to the first format, the transmitted second control signal is normally received in the wireless terminal 1304, and thus it may be possible to recognize that a fact that it is desired to change the resource block assignment is normally notified to the wireless terminal 1304 and it may be possible to securely perform the conversion of the format of the control signal.

### 2-1-3. COMMUNICATION CONTROL IN WIRELESS COMMUNICATION SYSTEM 1300

Subsequently, the method of controlling the entire data communication performed between the wireless relay station 1302 and the wireless terminal 1304 in the wireless communication system 1300 according to the second embodiment will be described.

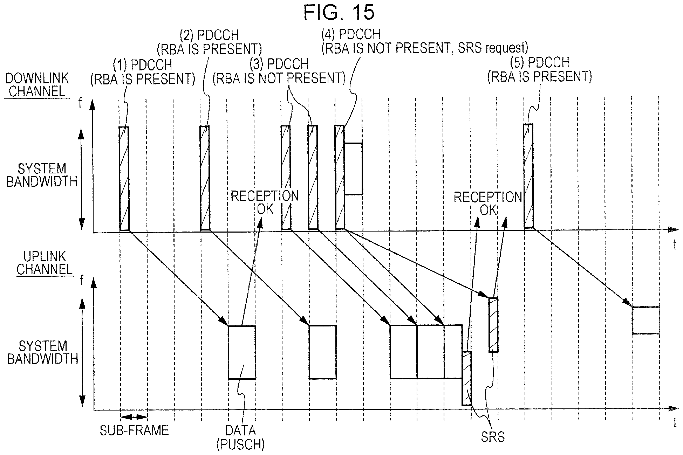

FIG. 15 is a diagram illustrating the method of controlling the entire data communication performed between the wireless relay station 1302 and the wireless terminal 1304 in the wireless communication system 1300 according to the second embodiment. FIG. 15 is a diagram illustrating the data communication control described with reference to FIGs. 13 and 14 again in an entire series of data communication.

As illustrated in FIG. 15, similarly to steps 13-1 and 13-12 illustrated in FIG. 13, when the wireless relay station 1302 starts the uplink data communication between the wireless relay station 1302 and the wireless terminal 1304, the wireless relay station 1302 determines various communication parameters, such as the resource block assignment, with regard to the wireless terminal 1304 which is the communication target, and assigns a frequency band for the uplink channel which is used for the uplink data communication in steps 15-1 and 15-2. The wireless relay station 1302 transmits the first control signal having the first format illustrated in FIG. 4 to the wireless terminal 1304 using the PDCCH (downlink channel) based on the determined communication parameters.

When the wireless relay station 1302 normally received the data signal corresponding to the transmitted first control signal from the wireless terminal 1304 using the PUSCH, the wireless relay station 1302 determines that the transmitted first control signal is normally received in the wireless terminal 1304 and that the various communication parameters, such as the resource block assignment, were normally notified to the wireless terminal 1304. Further, the wireless relay station 1302 converts the format of the control signal from the first format into the second format illustrated in FIG. 5.

In step 15-3, if the wireless relay station 1302 determines that it is not desired to change the resource block assignment similarly to the case of step 13-13, the wireless relay station 1302 does not perform conversion on the frequency band which is assigned to the uplink channel, and transmits the second control signal having the second format to the wireless terminal 1304. That is, the wireless relay station 1302 converts the format of the control signal from the first format into the second format.

The wireless terminal 1304 receives the second control signal having the second format from the wireless relay station 1302 using the PDCCH. The wireless terminal 1304 transmits the data signal to the wireless relay station 1302 using the PUSCH (uplink channel), which includes the frequency band set already after the predetermined number of sub-frames from the sub-frame which received the second control signal based on the communication parameters which are included in the received second control signal.

In step 15-4, similarly to the cases of steps 14-1 to 14-12 illustrated in FIG. 14, if the wireless relay station 1302 determines that it is desired to change the resource block assignment, the wireless relay station 1302 transmits the second control signal having the second format to the wireless terminal 1304 which is the communication target after setting the SRS transmission request (SRS request) field of the second format to the specific value indicative of the transmission request of the reference signal SRS.

When the wireless relay station 1302 normally received the reference signal SRS corresponding to the transmitted second control signal from the wireless terminal 1304 using the PUSCH, the wireless relay station 1302 determines that the transmitted second control signal was normally received in the wireless terminal 1304 and the fact that it is desired to change the block assignment was normally notified to the wireless terminal 1304. Further, the wireless relay station 1302 converts the format of the control signal from the second format into the first format.

In step 15-5, similarly to the cases in steps 14-13 to 14-17, the wireless relay station 1302 newly determines the various communication parameters, such as the resource block assignment, and newly assigns a frequency band for the uplink channel which is used for the uplink data communication with regard to the wireless terminal 1304. The wireless relay station 1302 transmits the first control signal having the first format to the wireless terminal 1304 which is the communication target using the PDCCH (downlink channel) based on the determined communication parameters. That is, the wireless relay station 1302 converts the format of the control signal from the second format into the first format.

When the wireless relay station 1302 normally received the data signal corresponding to the transmitted first control signal using the PUSCH, the wireless relay station 1302 determines that the transmitted first control signal is normally received in the wireless terminal 1304 and that the various communication parameters, such as the resource block assignment, were normally notified to the wireless terminal 1304. Further, the wireless relay station 1302 converts the format of the control signal from the first format into the second format.

### 2-2. WIRELESS RELAY STATION 1302

Subsequently, the configuration of the wireless relay station 1302 and a method of controlling data communication performed in the wireless relay station 1302 will be described.

### 2-2-1. CONFIGURATION OF WIRELESS RELAY STATION 1302

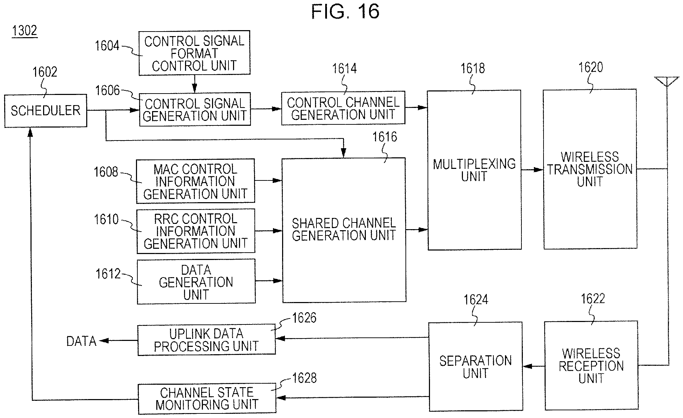

FIG. 16 is a functional block diagram illustrating the configuration of the wireless relay station 1302. As illustrated in FIG. 16, the wireless relay station 1302 includes a scheduler 1602, a control signal format control unit 1604, a control signal generation unit 1606, a MAC control information generation unit 1608, an RRC control information generation unit 1610, a user data generation unit 1612, a control channel generation unit 1614, a shared channel generation unit 1616, a multiplexing unit 1618, a wireless transmission unit 1620, a wireless reception unit 1622, a separation unit 1624, an uplink data processing unit 1626, and a channel state monitoring unit 1628.

The configuration of the functional blocks of the wireless relay station 1302 according to the second embodiment is the same as the configuration of the functional blocks of the wireless relay station 302 illustrated in FIG. 7. Each of the functional blocks of the wireless relay station 1302 illustrated in FIG. 16 has the same function as each of the functional blocks of the wireless relay station 302 illustrated in FIG. 7, which is indicated by the reference numeral having the same last two numbers. Accordingly, the detailed description thereof will not be repeated.

In addition, the hardware configuration of the wireless relay station 1302 is the same as the hardware configuration of the wireless relay station 302 illustrated in FIG. 8. It may be possible to realize the function of the each of the functional blocks of the wireless relay station 1302 using the hardware configuration which is the same as the hardware configuration of the wireless relay station 302 illustrated in FIG. 8. Accordingly, the detailed description thereof will not be repeated.

### 2-2-2. METHOD OF CONTROLLING DATA COMMUNICATION IN WIRELESS RELAY STATION 1302

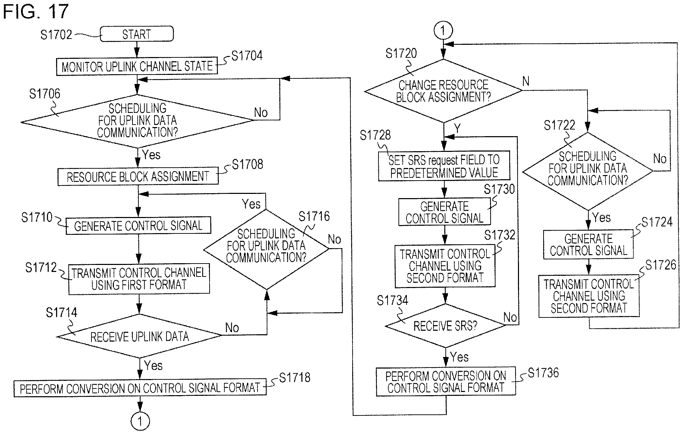

FIG. 17 is a flowchart illustrating a method of controlling data communication performed in the wireless relay station 1302. Hereinafter, the method of controlling data communication performed in the wireless relay station 1302 will be described with reference to FIG. 17.

Processes in steps S1702 to S1712 are the same as the processes in steps S902 to S912 illustrated in FIG. 9. Accordingly, the detailed description thereof will not be repeated.

Subsequently, in step S1714, the uplink data processing unit 1626 acquires data by performing a demodulation process on a received uplink data signal in the wireless reception unit 1722. The scheduler 1602 determines whether or not an uplink data signal corresponding to the control signal having the first format, which is transmitted to the wireless terminal 1304 in step S1712, is received from the wireless terminal 1304 based on the acquired data.

As a result, when the corresponding uplink data signal is received, the process proceeds to step S1718. When the corresponding uplink data signal is not received, the process proceeds to step S1716.

In step S1716, the scheduler 1602 receives uplink channel state monitoring results from the channel state monitoring unit 1428, and determines whether or not it is desired to perform scheduling on the uplink data communication based on the received state monitoring results. As a result, when it is determined that it is desired to perform scheduling, the process returns to step S1710. When it is determined that it is not desired to perform scheduling, process returns to step S1716.

Processes in steps S1718 to step S1732 are the same as the processes in steps S914 to step S928. Accordingly, the detailed description thereof will not be repeated.

In step S1734, the channel state monitoring unit 1628 receives the reference signal SRS which is received in the wireless reception unit 1622. channel state monitoring unit 1628 monitors the state of the uplink channel based on the received reference signal SRS, and supplies information indicative of the uplink channel state monitoring results to the scheduler 1602.

The scheduler 1602 determines whether or not the reference signal SRS corresponding to the control signal, which is transmitted to the wireless terminal 1304 in step S1732, is received from the wireless terminal 1304 based on the supplied information indicative of the uplink channel state monitoring results. Here, the control signal, which is transmitted to the wireless terminal 1304 in step S1732, includes the second format, and the SRS transmission request (SRS request) field is set to the specific value indicative of the transmission request of the reference signal SRS. As a result of determination, when the corresponding reference signal SRS is received, the process proceeds to step S1736. When the corresponding reference signal SRS is not received, the process proceeds to step S1728.

A process in step S1736 is the same as the process in step S930. Accordingly, the detailed description thereof will not be repeated.

As described above, when the wireless relay station 1302 according to the second embodiment transmits the first control signal having the first format, which includes the Resource Block Assignment (RBA), to the wireless terminal 1304 and then, further, receives the data signal corresponding to the first control signal transmitted by the wireless terminal 1304, the wireless relay station 1302 converts the format of the control signal from the first format into the second format. Therefore, when the control signal is converted from the first format to the second format, it may be possible to recognize that the transmitted first control signal is normally received in the wireless terminal 1304 and that various communication parameters, such as the resource block assignment, were normally notified to the wireless terminal 1304, and thus it may be possible to further securely perform the conversion on the format of the control signal.

In addition, when the wireless relay station 1302 transmits the second control signal having the second format to the wireless terminal 1304 after setting the SRS transmission request (SRS request) field of the second format to the specific value indicative of the transmission request of the reference signal SRS and then further receives the reference signal SRS corresponding to the second control signal transmitted by the wireless terminal 1304, the wireless relay station 1302 converts the format of the control signal from the second format into the first format. Therefore, when the format of the control signal is converted from the second format to the first format, it may be possible to recognize that the transmitted second control signal is normally received in the wireless terminal 1304 and that a fact that it is desired to change the resource block assignment is normally notified to the wireless terminal 1304, and thus it may be possible to further securely perform the conversion on the format of the control signal.

### 2-3. WIRELESS TERMINAL 1304

Subsequently, the configuration of the wireless terminal 1304 and a method of controlling data communication performed in the wireless terminal 1304 will be described.

### 2-3-1. CONFIGURATION OF WIRELESS TERMINAL 304

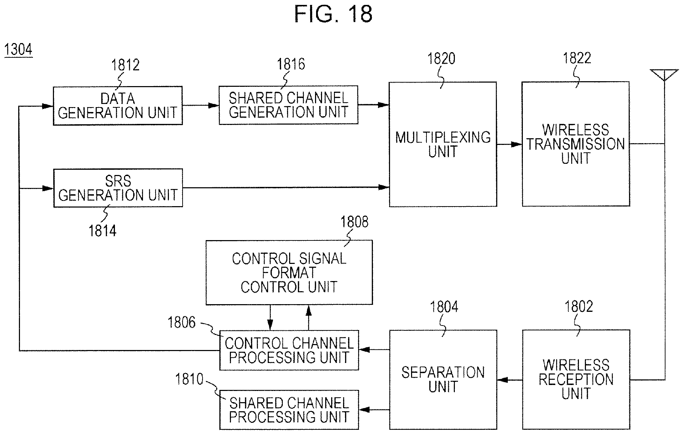

FIG. 18 is a functional block diagram illustrating the configuration of the wireless terminal 1304. As illustrated in FIG. 18, the wireless terminal 1304 includes a wireless reception unit 1802, a separation unit 1804, a control channel processing unit 1806, a control signal format control unit 1808, a shared channel processing unit 1810, a data generation unit 1812, an SRS generation unit 1814, a shared channel generation unit 1816, a multiplexing unit 1820, and a wireless transmission unit 1822.

The configuration of the functional blocks of the wireless terminal 1304 according to the second embodiment is the same as the configuration of the functional blocks of the wireless terminal 304 illustrated in FIG. 10. Each of the functional blocks of the wireless terminal 1304 illustrated in FIG. 18 has the same function as each of the functional blocks of the wireless terminal 304 illustrated in FIG. 10, which is indicated by the reference numeral having the same last two numbers. Accordingly, the detailed description thereof will not be repeated.

In addition, the hardware configuration of the wireless terminal 1304 is the same as the hardware configuration of the wireless terminal 304 illustrated in FIG. 11. It may be possible to realize the function of each of the functional blocks of the wireless terminal 1304 using the hardware configuration which is the same as the hardware configuration of the wireless terminal 304 illustrated in FIG. 11. Accordingly, the detailed description thereof will not be repeated.

### 2-3-2. METHOD OF CONTROLLING DATA COMMUNICATION IN WIRELESS TERMINAL 1304

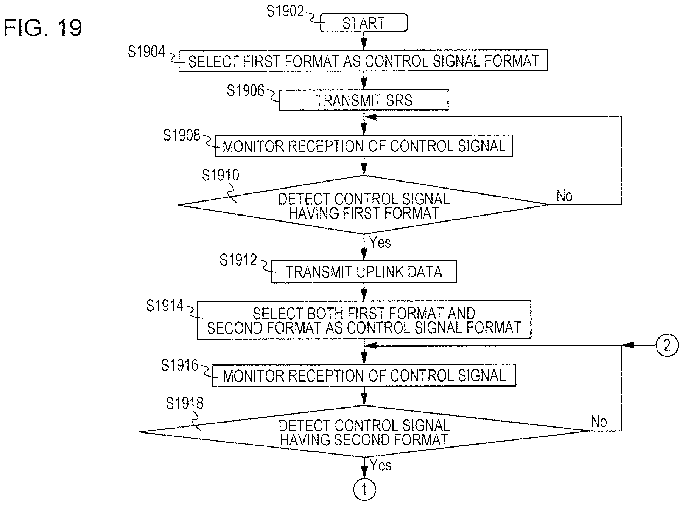

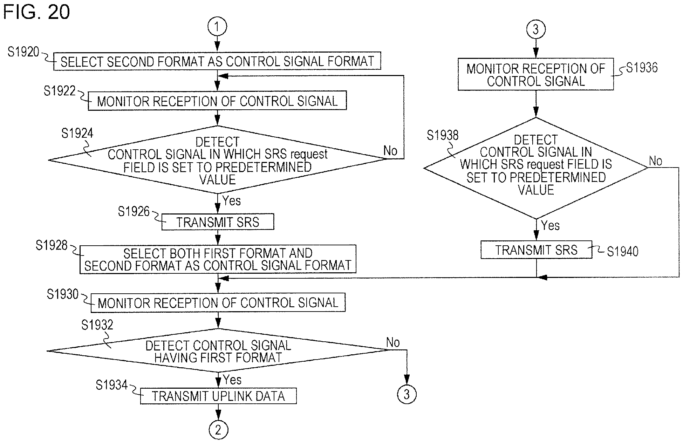

FIGs. 19 and 20 are flowcharts illustrating the method of controlling data communication performed in the wireless terminal 1304. Hereinafter, the method of controlling data communication performed in the wireless terminal 1304 will be described with reference to FIGs. 19 and 20.

Processes in steps S1902 to S1912 are the same as the processes in steps S1202 to S1212 illustrated in FIG. 12. Accordingly, the detailed description thereof will not be repeated.

In step S1914, the control signal format control unit 1808 selects both the first format illustrated in FIG. 4, which includes the Resource Block Assignment (RBA) field, and the second format illustrated in FIG. 5, which does not includes the Resource Block Assignment (RBA) field, as the format of the control signal to be used when the control channel processing unit 1806 processes the control signal for scheduling the uplink data communication. The control signal format control unit 1808 designates both the first format and the second format as the format of the control signal with regard to the control channel processing unit 1806.

Subsequently, in step S1916, the wireless reception unit 1802 monitors whether or not the control signal for scheduling the uplink data communication is received from the wireless relay station 1302 using the PDCCH.

Subsequently, in step S1918, when the wireless reception unit 1802 receives the control signal for scheduling the uplink data communication, the control channel processing unit 1806 receives the control signal which is received from the wireless reception unit 1802 through the separation unit 1804. The control channel processing unit 1806 determines whether or not the received control signal is the control signal which includes the second format designated by the control signal format control unit 1808. As a result, when the control signal which includes the second format is detected, the process proceeds to step S1920. In contrast, when the control signal which includes the second format is not detected, the process returns to step S1916.

Also, the processes in steps S1914 to S1918 correspond to the processes performed by the wireless terminal 1304 during the period D in FIG. 13.

Processes in steps S1920 to S1926 are the same as the processes in steps S1214 to S1220. Accordingly, the detailed description thereof will not be repeated. Also, in step S1920, since the control channel processing unit 1806 detects the control signal having the second format, the control format control unit 1808 recognizes that the wireless relay station 1302 normally receives the data signal which is transmitted from the wireless transmission unit 1802 in step S1912.

In step S1928, the control signal format control unit 1808 selects both the first format, which includes the Resource Block Assignment (RBA) field, and the second format, which does not include the Resource Block Assignment (RBA) field, as the format of the control signal to be used when the control channel processing unit 1806 processes the control signal for scheduling the uplink data communication. The control signal format control unit 1808 designates both the first format and the second format as the format of the control signal with regard to the control channel processing unit 1806.

Subsequently, in step S1930, the wireless reception unit 1802 monitors whether or not the control signal for scheduling the uplink data communication is received from the wireless relay station 1302 using the PDCCH.

Subsequently, in step S1932, when the wireless reception unit 1802 receives the control signal for scheduling the uplink data communication, the control channel processing unit 1806 receives the received control signal from the wireless reception unit 1802 through the separation unit 1804. The control channel processing unit 1806 determines whether or not the received control signal is the control signal having the first format which is designated by the control signal format control unit 1808. As a result, when the control signal having the first format is detected, the process proceeds to step S1934. In contrast, when the control signal having the first format is not detected, the process proceeds to step S1936.

In step S1934, the control channel processing unit 1806 processes the received control signal using the first format which is designated by the control signal format control unit 1808, and acquires the various communication parameters which are included in the control signal. The control channel processing unit 1806 acquires information of the frequency band (resource block), which is assigned to the wireless terminal 1304, from the value of the acquired Resource Block Assignment (RBA) field.

The data generation unit 1812 generates a data signal to be transmitted to the wireless relay station 1302. The shared channel generation unit 1816 converts the data signal, which is generated by the data generation unit 1812, into a signal which has a format suitable for the data format of the PUSCH, and puts the signal into a state which may be transmitted using the PUSCH. The wireless transmission unit 1822 converts the output signal of the shared channel generation unit 1816, which is received through the multiplexing unit 1820, into a wireless signal of a frequency band corresponding to the PUSCH assigned to the wireless terminal 1304, and transmits the wireless signal to the wireless relay station 1302 through the antenna. Thereafter, the process proceeds to step S1916.

In contrast, in step S1936, the wireless reception unit 1802 monitors whether or not the control signal for scheduling the uplink data communication is received from the wireless relay station 1302 using the PDCCH.

Subsequently, in step S1938, when the wireless reception unit 1802 receives the control signal for scheduling the uplink data communication, the control channel processing unit 1806 receives the received control signal from the wireless reception unit 1802 through the separation unit 1804. The control channel processing unit 1806 determines whether or not the received control signal is a control signal having the second format which is designated by the control signal format control unit 1808 and the SRS transmission request (SRS request) field in the second format has the specific value indicative of the transmission request of the reference signal SRS. As a result, when the control signal in which the SRS transmission request field is set to the specific value is detected, the process proceeds to step S1940. In contrast, when the control signal in which the SRS transmission request field is set to the specific value is not detected, the process returns to step S1930.

Subsequently, in step S1940, the SRS generation unit 1814 generates a reference signal SRS for evaluating the state of the uplink channel in response to a fact that the SRS transmission request field is set to the above-described specific value in step S1938.

The wireless transmission unit 1822 converts the output signal of the shared channel generation unit 1816, which is received through the multiplexing unit 1820, into a wireless signal of the frequency band corresponding to the PUSCH, and transmits the wireless signal to the wireless relay station 1302 through the antenna. Thereafter, the process returns to step S1930.

Also, processes in steps S1928 to S1932 and S1936 to S1940, correspond to the processes performed by the wireless terminal 1304 during the period E illustrated in FIG. 14. In addition, processes in steps S1934, S1916, and S1918 correspond to the processes performed by the wireless terminal 1304 during the period F illustrated in FIG. 14.

As described above, the wireless terminal 1304 according to the second embodiment receives the first control signal having the first format, which includes the Resource Block Assignment (RBA), from the wireless relay station 1302 and then selects both the first format and the second format as the format of the control signal without converting the format of the control signal into the second format. Therefore, if the format of the control signal is converted from the first format to the second format, it may be possible to appropriately receive the first control signal even when the data signal, which is transmitted in correspondence with the first control signal, is not normally received in the wireless relay station 1302 and the wireless relay station 1302 transmits the first control signal having the first format again, and thus it may be possible to further securely perform the conversion on the format of the control signal.

In addition, the wireless terminal 1304 receives the second control signal having the second format from the wireless relay station 1302 after setting the SRS transmission request (SRS request) field of the second format to the specific value indicative of the transmission request of the reference signal SRS, and then selects both the first format and the second format as the format of the control signal without converting the format of the control signal into the first format. Therefore, if the format of the control signal is converted from the second format to the first format, it may be possible to appropriately receive the second control signal even when the reference signal SRS, which is transmitted in correspondence with the second control signal, is not normally received in the wireless relay station 1302 and the wireless relay station 1302 transmits the second control signal having the second format again, and thus it may be possible to further securely perform the conversion on the format of the control signal.

### 3. THIRD EMBODIMENT

Hereinafter, a wireless station and a communication control method according to a third embodiment will be described. The third embodiment relates to dynamic scheduling for downlink data communication in LTE.

### 3-1. WIRELESS COMMUNICATION SYSTEM

The configuration of a wireless communication system 2100 according to the third embodiment is the same as the configuration of the wireless communication system 300 according to the first embodiment illustrated in FIG. 3, and thus the configuration is not illustrated in the drawing.

The wireless communication system 2100 includes a wireless relay station (first wireless station) 2102 and a wireless terminal (second wireless station) 2104. The wireless relay station 2102 sets a communication channel (uplink channel or downlink channel) between the wireless relay station 2102 and the wireless terminal 2104 by transmitting a control signal to the wireless terminal 2104, and performs data communication with the wireless terminal 2104 using the set communication channel.

Also, as the same as the case in the first embodiment, the embodiment is not limited to an example in which a single wireless terminal 2104 is present for a single wireless relay station 2102. A plurality of wireless terminals 2104 may be present for the single wireless relay station 2102. In addition, a plurality of wireless relay stations 2102 may be present or a plurality of wireless terminals 2104 may be present for a plurality of wireless relay stations 2102.

In addition, in the specification, the wireless communication system which includes the wireless relay station and the wireless terminal is described as the embodiment. However, both the wireless relay station and the wireless terminal are only examples of wireless stations which are included in the wireless communication system.

### 3-2. FORMAT OF CONTROL SIGNAL

In dynamic scheduling for the wireless communication system 2100 according to the third embodiment, a control signal having two formats is used as a control signal for scheduling the downlink data communication while conversion is performed thereon, as will be described later. Here, first, the two formats (third format and fourth format) of the control signal according to the third embodiment will be described.

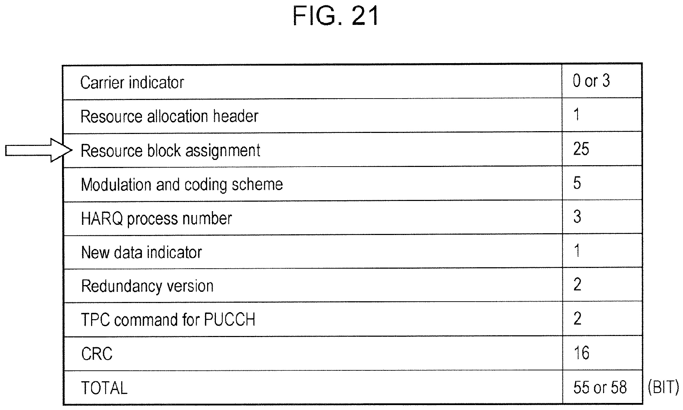

FIG. 21 is a diagram illustrating the format of the control signal for dynamic scheduling for downlink data communication in LTE, and is a diagram illustrating the third format of the control signal according to the third embodiment.

As illustrated in FIG. 21, the third format of the control signal corresponds to a Downlink Control Information (DCI) format 1 in LTE, and includes a plurality of fields. The third format includes, for example, a plurality of communication parameters, such as a Resource Block Assignment (RBA), a Modulation and Coding Scheme (MCS) and a Hybrid Automatic Request (HARQ) process number, and each of the communication parameters is stored in a relevant field.

A resource block is a unit of a frequency band which is included in a system band, and the frequency band is assigned to each wireless terminal in units of a resource block. In the third format illustrated in FIG. 21, the Resource Block Assignment (RBA) is a parameter for designating a frequency band assigned to a wireless terminal, which is a communication target, with regard to downlink data communication.

As will be described later, the third format of the control signal is used in a case of scheduling a downlink channel when data communication starts and in a case in which the Resource Block Assignment (RBA) is changed.

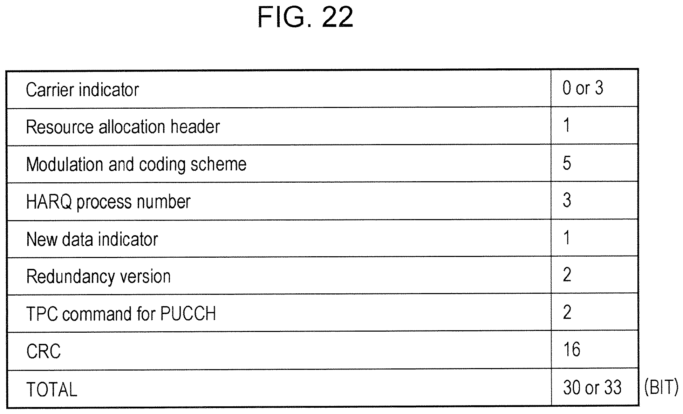

FIG. 22 is a diagram illustrating the format of the control signal for performing dynamic scheduling for the downlink data communication in LTE, and is a diagram illustrating the fourth format of the control signal according to the third embodiment.

As illustrated in FIG. 22, the fourth format of the control signal is acquired by omitting a field, in which the parameter (Resource block assignment) related to the Resource Block Assignment (RBA) is stored, from the third format illustrated in FIG. 21. That is, the fourth format of the control signal does not include a Resource Block Assignment (RBA), which is the parameter for designating the frequency band assigned to the wireless terminal which is the communication target, with regard to the downlink data communication.

As will be described later, the fourth format of the control signal is used for a period until a subsequent change is made to the resource block assignment after the resource block assignment has been completed once.

Here, as is apparent from FIGs. 21 and 22, the data size of the entirety of the third format of the control signal is 55 to 58 bits. In contrast, the data size of the entirety of the fourth format is 30 to 33 bits because some fields are omitted. Therefore, it may be possible to reduce an overhead of approximately 45% of the control signal by converting the format of the control signal from the third format to the fourth format.

Also, in the examples illustrated in FIGs. 21 and 22, the omitted parameter is the "Resource Block Assignment". However, it may be possible to select another communication parameter alternatively. For example, when data communication is repeatedly performed between the wireless relay station 2102 and the wireless terminal 2104, it may be possible to alternatively select a communication parameter which has a low change frequency.

In addition, in FIGs. 21 and 22, the DCI format 1 is used as the format of the control signal. However, the embodiment is not limited thereto. It may be possible to use another DCI format as the format of the control signal in order to perform scheduling for the downlink data communication. For example, it may be possible to use DCI formats 1A, 1B, 1C, ID, 2, 2A, 2B, and 2C.

### 3-3. COMMUNICATION CONTROL IN WIRELESS COMMUNICATION SYSTEM 2100

Subsequently, a method of controlling data communication which is performed between the wireless relay station 2102 and the wireless terminal 2104 in the wireless communication system 2100 according to the third embodiment will be described.

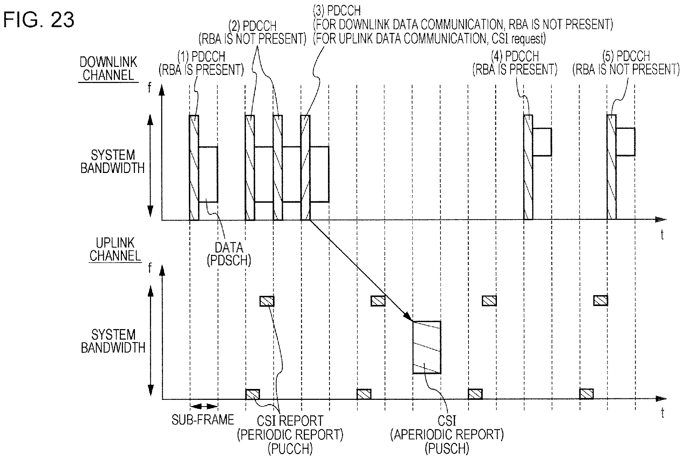

Also, hereinafter, in the description, for example, there is a case in which step (1) illustrated in FIG. 23 is described as step 23-1. The case is applied to other steps illustrated in FIG. 23 in the same manner and is applied to steps illustrated in other drawings in the same manner.

FIG. 23 is a diagram illustrating the method of controlling data communication performed between the wireless relay station 2102 and the wireless terminal 2104 in the wireless communication system 2100.

As illustrated in FIG. 23, in step 23-1, when the wireless relay station 2102 starts the downlink data communication between the wireless relay station 2102 and the wireless terminal 2104, the wireless relay station 2102 determines various communication parameters, such as the resource block assignment, with regard to the wireless terminal 2104 which is a communication target, and assigns a frequency band for a downlink channel which is used for the downlink data communication. The wireless relay station 2102 transmits a third control signal having the third format illustrated in FIG. 21 to the wireless terminal 2104 which is the communication target using a PDCCH (downlink channel) based on the determined communication parameters. The third control signal is a control signal for scheduling the downlink data communication, and includes the communication parameters, such as the Resource Block Assignment (RBA). The frequency band for the downlink channel of the predetermined system band is assigned to the wireless terminal 2104.

The wireless terminal 2104 receives the third control signal, which includes the third format, from the wireless relay station 2102 using the PDCCH. The wireless terminal 2104 sets the frequency band which is assigned to the downlink channel used for the downlink data communication based on the communication parameters which are included in the received third control signal. The downlink channel which is assigned to the wireless terminal 2104 is, for example, a PDSCH.

The wireless terminal 2104 receives a data signal from the wireless relay station 2102 using the PDSCH (downlink channel) which includes the set frequency band in a sub-frame which is the same as a sub-frame which received the control signal.

Subsequently, in step 23-2, the wireless relay station 2102 periodically receives a report signal Channel State Signal (CSI) for reporting a downlink channel state evaluation result in the wireless terminal 2104 from the wireless terminal 2104 at fixed sub-frame intervals using the PUCCH, thereby monitoring the state of the downlink channel which is assigned in step 23-2. The wireless relay station 2102 determines whether or not it is desired to change the resource block assignment based on the received reference signal CSI.

Further, when the wireless relay station 2102 determines that it is not desired to change the resource block assignment, the wireless relay station 2102 transmits the fourth control signal having the fourth format illustrated in FIG. 22 to the wireless terminal 2104 which is the communication target without changing the frequency band which is assigned to the downlink channel. That is, the wireless relay station 2102 converts the format of the control signal from the third format into the fourth format. Although the fourth control signal is the control signal for scheduling the downlink data communication, the fourth control signal does not includes the Resource Block Assignment (RBA) as a communication parameter. In the fourth control signal, a suitable value is appropriately determined with regard to the communication parameters except for the Resource Block Assignment (RBA) according to the downlink channel state monitoring results.

The wireless terminal 2104 receives the fourth control signal having the fourth format from the wireless relay station 2102 using the PDCCH. If the wireless terminal 2104 receives the fourth control signal having the fourth format, it is recognized that the frequency band which is assigned to the downlink channel is the same as the frequency band which is assigned in step 23-1. The wireless terminal 2104 receives the data signal from the wireless relay station 2102 using the PDSCH (downlink channel), which includes the frequency band set already, in the sub-frame which is the same as the sub-frame which received the fourth control signal based on the communication parameters which are included in the received fourth control signal.

Subsequently, in step 23-3, the wireless relay station 2102 continues monitoring of the state of the downlink channel, and determines whether or not it is desired to change the resource block assignment, that is, the communication parameter which is omitted from the control signal having the fourth format.

Further, if the wireless relay station 2102 determines that it is desired to change the resource block assignment, that is, the communication parameter which is omitted from the control signal having the fourth format, the wireless relay station 2102 transmits the fourth control signal having the fourth format to the wireless terminal 2104 which is the communication target, sets the CSI report request (CSI request) field of the first format illustrated in FIG. 4 or the second format illustrated in FIG. 5 to a specific value (for example, binary digit data "11") which indicates that the transmission of the report signal CSI is requested, and then transmits the first control signal having the first format or the second control signal having the second format to the wireless terminal 2104.

Here, in the first control signal having the first format and the second control signal having the second format, a fact that the CSI report request (CSI request) field has a specific value indicative of the transmission request of the report signal CSI means that the resource block (frequency band) which is assigned to the downlink channel from subsequent data communication, that is, the communication parameter which is omitted from the control signal having the fourth format is changed. The fact is settled in advance between the wireless relay station 2102 and the wireless terminal 2104. Therefore, although the first control signal and the second control signal are the controls signals for scheduling the uplink data communication as described above, it is possible for the wireless relay station 2102 to notify the wireless terminal 2104 that the resource block (frequency band), which is assigned to the downlink channel, is changed from subsequent data communication through the first control signal having the first format or the second control signal having the second format by setting the CSI report request (CSI request) field to the specific value which indicates the report signal CSI transmission request.

The wireless terminal 2104 receives the fourth control signal having the fourth format from the wireless relay station 2102 using the PDCCH, and the wireless terminal 2104 receives the first control signal having the first format or the second control signal having the second format in which the CSI report request (CSI request) field is set to the specific value which indicates the report signal CSI transmission request. The wireless terminal 2104 recognizes that the resource block (frequency band) which is assigned to the downlink channel is changed from subsequent data communication based on the value of the CSI transmission request (CSI request) field which is included in the received first control signal or the second control signal. In addition, the wireless terminal 2104 recognizes that the frequency band which is assigned to the downlink channel is the same as the frequency band which is assigned in step 23-1 in the current data communication by receiving the fourth control signal having the fourth format.

The wireless terminal 2104 receives the data signal from the wireless relay station 2102 using the PDSCH (downlink channel) which includes the frequency band set already in the sub-frame which is the same as the sub-frame which received the fourth control signal.

In addition, the wireless terminal 2104 generates the report signal CSI based on a fact that CSI report request (CSI request) field is set to the specific value which indicates the report signal CSI transmission request in the first control signal or the second control signal. The wireless terminal 2104 transmits the generated report signal CSI to the wireless relay station 2102 using the PUSCH (uplink channel) after the predetermined number of sub-frames from the sub-frame which received the first control signal or the second control signal. Here, the generated report signal CSI is used to report the evaluation of the downlink channel state in the entirety of or a part of the system band.

Subsequently, in step 23-4, the wireless relay station 2102 receives the report signal CSI which is received from the wireless terminal 2104 in step 23-3, and continues monitoring of the state of the downlink channel. The wireless relay station 2102 newly determines the various communication parameters, such as the resource block assignment, with regard to the wireless terminal 2104 which is the communication target according to the state monitoring results, and newly assigns a frequency band for the downlink channel which is used for the downlink data communication. The wireless relay station 2102 transmits the third control signal having the third format to the wireless terminal 2104 which is the communication target using the PDCCH (downlink channel) based on the determined communication parameters. That is, the wireless relay station 2102 converts the format of the control signal from the fourth format into the third format.

The wireless terminal 2104 receives the third control signal having the third format from the wireless relay station 2102 using the PDCCH. The wireless terminal 2104 sets the newly assigned frequency band with regard to the downlink channel which is used for the downlink data communication based on the communication parameters which are included in the received third control signal.

The wireless terminal 2104 receives the data signal form the wireless relay station 2102 using the PDSCH (downlink channel) which includes the newly set frequency band in a sub-frame which is the same as the sub-frame which received the third control signal.

In step 23-5, similarly to the case of step 23-2, the wireless relay station 2102 transmits the fourth control signal having the fourth format to the wireless terminal 2104 which is the communication target without changing the frequency band which is newly assigned to the downlink channel.

Similarly to the case of step 23-2, when the wireless terminal 2104 receives the fourth control signal having the fourth format from the wireless relay station 2102, the wireless terminal 2104 recognizes that the frequency band which is assigned to the downlink channel is the same as the frequency band which is assigned in step 23-4, and receives the data signal from the wireless relay station 2102 using the PDSCH (downlink channel) which includes the frequency band set already.

As described above, in the wireless communication system 2100 according to the third embodiment, the wireless relay station 2102 transmits the third control signal having the third format which includes the Resource Block Assignment (RBA) to the wireless terminal 2104, converts the format of the control signal into the fourth format which does not include the Resource Block Assignment (RBA), and then converts the format of the control signal into the third format again when the wireless relay station 2102 determines that it is desired to change the resource block assignment. Therefore, in the scheduling for the data communication, it may be possible to achieve both the reduction in the overhead (data size) of the control signal and the flexibility of the scheduling.

In addition, when the wireless relay station 2102 converts the format of the control signal from the fourth format into the third format, the wireless relay station 2102 sets the CSI report request (CSI request) field included in the first format or the second format to a specific value which indicates the report signal CSI transmission request, and then transmits the control signal having the first format or the second format to the wireless terminal 2104. Therefore, it may be possible to appropriately notify the wireless terminal 2104 that the format of the control signal has been replaced, and it may be possible to securely perform conversion on the format of the control signal.

### 3-4. WIRELESS RELAY STATION 2102

Subsequently, the configuration of the wireless relay station 2102 and a method of controlling data communication performed in the wireless relay station 2102 will be described.

### 3-4-1. CONFIGURATION OF WIRELESS RELAY STATION 2102

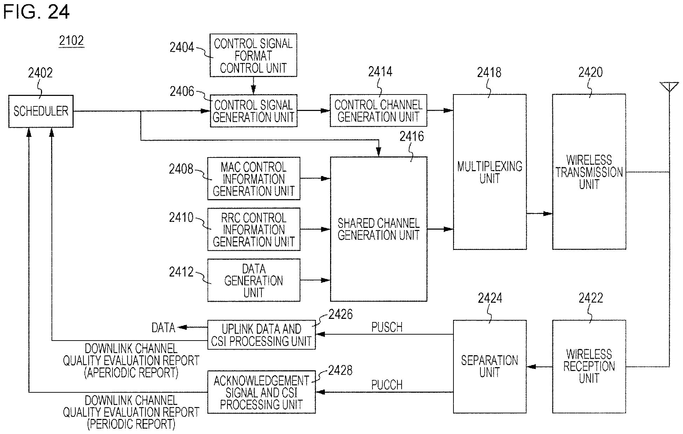

FIG. 24 is a functional block diagram illustrating the configuration of the wireless relay station 2102. As illustrated in FIG. 24, the wireless relay station 2102 includes a scheduler 2402, a control signal format control unit 2404, a control signal generation unit 2406, an MAC control information generation unit 2408, an RRC control information generation unit 2410, a data generation unit 2412, a control channel generation unit 2414, a shared channel generation unit 2416, a multiplexing unit 2418, a wireless transmission unit 2420, a wireless reception unit 2422, a separation unit 2424, an uplink data and CSI processing unit 2426, and a response signal and CSI processing unit 2428.

The scheduler 2402 receives information, which indicates a downlink channel state evaluation report in the wireless terminal 2104, from the response signal and CSI processing unit 2428, and determines various communication parameters which are included in the control signal to be transmitted to the wireless terminal 2104 based on the received downlink channel state evaluation report. In addition, the scheduler 2402 determines the content of a signal to be transmitted to the wireless terminal 2104 using the downlink shared channel (PDSCH) based on the output signals of the MAC control information generation unit 2408, the RRC control information generation unit 2410, and the data generation unit 2412 which will be described later.

The control signal format control unit 2404 controls the type of the format of the control signal to be transmitted using the PDCCH. That is, the control signal format control unit 2404 designates any one of the first format illustrated in FIG. 4, the second format illustrated in FIG. 5, the third format illustrated in FIG. 21, and the fourth format illustrated in FIG. 22 as the format of the control signal with regard to the control signal generation unit 2406 which will be described later under the control of the scheduler 2402. The third format and the fourth format have been described above in detail.

The control signal generation unit 2406 generates the control signal, which includes the various communication parameters determined by the scheduler 2402, using a format which is designated by the control signal format control unit 2404.

The control channel generation unit 2414 receives the control signal which is generated by the control signal generation unit 2406, converts the received control signal into a signal having a format that is suitable for the data format of the PDCCH, an puts the control signal into a state which may be transmitted using the PDCCH.

The Media Access Control (MAC) control information generation unit 2408 generates control information related to media access control in a data link layer (layer 2).

The RRC (Radio Resource Control) control information generation unit 2410 generates the control information related to wireless resource control in the data link layer (layer 2).

The data generation unit 2412 generates data to be transmitted to the wireless terminal 2104.

The shared channel generation unit 2416 receives signals from the MAC control information generation unit 2408, the RRC control information generation unit 2410, and the data generation unit 2412, converts the received signals into a signal which is suitable for the data format of the PDSCH, and puts the signal into a state which may be transmitted using the PDSCH.

The multiplexing unit 2418 receives output signals from the control channel generation unit 2414 and the shared channel generation unit 2416, and outputs the received output signals to the wireless transmission unit 2420.

The wireless transmission unit 2420 receives an output signal from the multiplexing unit 2418, converts the received output signal into a wireless signal of a frequency band corresponding to the PDCCH or the PDSCH which is assigned to the wireless terminal 2104, and transmits the wireless signal to the wireless terminal 2104 through an antenna.

The wireless reception unit 2422 receives the wireless signal of the frequency band corresponding to the PUCCH or the PUSCH, which is assigned to the wireless terminal 2104, from the wireless terminal 2104 through the antenna, converts the received wireless signal into a signal of a frequency which may be processed in the wireless relay station 2102, and outputs the signal to the separation unit 2424.

The separation unit 2424 receives the output signal from the wireless reception unit 2422. When the output signal of the wireless reception unit 2422 is a signal which is received using the PUSCH, the separation unit 2424 outputs the received signal to an uplink data and CSI processing unit 2426. The signal which is received using the PUSCH is, for example, a data signal or a report signal CSI which is transmitted from the wireless terminal 2104 in response to the CSI transmission request (CSI request) from the wireless relay station 2102. In addition, when the output signal from the wireless reception unit 722 is a signal which is received using the PUCCH, the separation unit 2424 outputs the received signal to the response signal and CSI processing unit 2428. The signal which is received using the PUCCH is, for example, the response signal (positive acknowledgement (ACK) or negative acknowledgement (NACK)) of the data signal which is transmitted from the wireless transmission unit 2420 or the report signal CSI which is periodically transmitted from the wireless terminal 2104 at fixed sub-frame intervals.

When the uplink data and CSI processing unit 2426 receives the data signal from the separation unit 2424, the uplink data and CSI processing unit 2426 acquires data by performing a demodulation process on the received data signal. In addition, when the uplink data and CSI processing unit 2426 receives the report signal CSI from the separation unit 2424, the uplink data and CSI processing unit 2426 acquires information which indicates a downlink channel state evaluation report (aperiodic report) by processing the received report signal CSI. The uplink data and CSI processing unit 2426 supplies the acquired downlink channel state evaluation report (aperiodic report) to the scheduler 2402.

The response signal and CSI processing unit 2428 periodically receives the report signal CSI from the separation unit 2424 at fixed sub-frame intervals, and acquires information which indicates a downlink channel state evaluation report (periodic report) by processing the received report signal CSI. The response signal and CSI processing unit 2428 supplies the acquired downlink channel state evaluation report (periodic report) to the scheduler 2402. In addition, when the response signal and CSI processing unit 2428 receives a response signal (positive acknowledgement (ACK) or negative acknowledgement (NACK)) corresponding to the data signal, which is transmitted from the wireless transmission unit 2420, from the separation unit 2424, the response signal and CSI processing unit 2428 supplies information, which indicates whether or not the response signal is normally received, to the scheduler 2402.

Also, the hardware configuration of the wireless relay station 2102 is the same as the hardware configuration of the wireless relay station 302 illustrated in FIG. 8. It may be possible to realize the function of each of the functional blocks of the wireless relay station 2102 illustrated in FIG. 24 using the hardware configuration which is the same as the hardware configuration of the wireless relay station 302 illustrated in FIG. 8.

It may be possible to realize the function and the process of each of the functional blocks of the scheduler 2402, the control signal format control unit 2404, the control signal generation unit 2406, the MAC control information generation unit 2408, the RRC control information generation unit 2410, the data generation unit 2412, the control channel generation unit 2414, the shared channel generation unit 2416, the multiplexing unit 2418, the separation unit 2424, the uplink data and CSI processing unit 2426, and the response signal and CSI processing unit 2428 illustrated in FIG. 24 in such a way that the processor executes a processing program in which relevant functions and processes are described. The processing program is stored in the storage device, and the above-described each of the functional blocks illustrated in FIG. 24 is realized in such a way that the processor expands the processing program which is stored in the storage device to the memory, and executes each process described in the processing program. Here, a memory is, for example, a RAM. The storage device is, for example, a non-volatile memory, such as a ROM or a flash memory, or a magnetic disk device, such as a Hard Disk Drive (HDD).

Also, the above-described each of the functional blocks illustrated in FIG. 24 may be realized using an LSI, such as an Application Specified Integrated Circuit (ASIC) or a Field Programmable Gate Array (FPGA), in addition to a hardware configuration which is the same as that illustrated in FIG. 8.

It may be possible to realize the wireless transmission unit 2420 and the wireless reception unit 2422 illustrated in FIG. 24 using a wireless communication interface. The wireless communication interface is, for example, an LSI such as a Radio Frequency Integrated Circuit (RFIC).

The wireless communication interface receives a digital signal from the bus, and converts the received digital signal to an analog signal. Further, the wireless communication interface converts the analog signal acquired after the conversion into a wireless signal of a frequency band which is used in the wireless communication, and transmits the wireless signal to the wireless terminal 2104 through the antenna which is not illustrated in the drawing. In addition, the wireless communication interface receives the wireless signal of the frequency band which is used in the wireless communication from the wireless terminal 2104 through the antenna which is not illustrated in the drawing, and converts the received wireless signal into an analog signal of a frequency which may be processed by the processor. Further, the wireless communication interface converts the analog signal acquired after the conversion into a digital signal, and outputs the digital signal acquired after the conversion to the bus.

### 3-4-2. METHOD OF CONTROLLING DATA COMMUNICATION IN WIRELESS RELAY STATION 2102

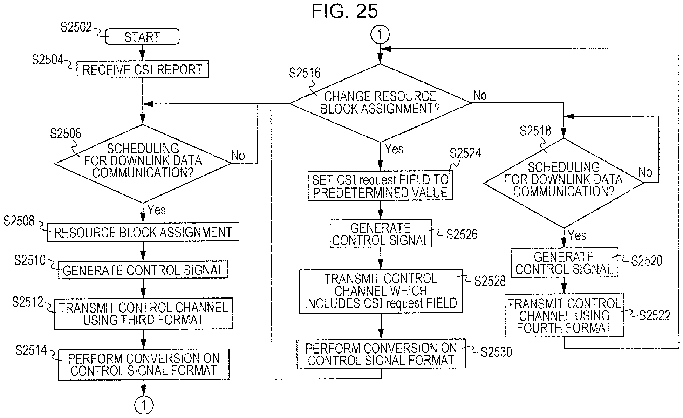

FIG. 25 is a flowchart illustrating a method of controlling data communication performed in the wireless relay station 2102. Hereinafter, the method of controlling the data communication performed in the wireless relay station 2102 will be described with reference to FIG. 24 in addition to FIG. 25.

In step S2502, the wireless relay station 2102 starts a series of data communication control processes.

Subsequently, in step S2504, the response signal and CSI processing unit 2428 periodically receives a report signal CSI from the wireless terminal 2404 through the wireless reception unit 2422 and the separation unit 2424 at fixed sub-frame intervals, and acquires a downlink channel state evaluation report based on the received report signal CSI. The uplink data and CSI processing unit 2426 continues the reception of the downlink channel state evaluation report in the same manner.

Subsequently, in step S2506, the scheduler 2402 receives the downlink channel state evaluation report, which is received in step S2504, from the response signal and CSI processing unit 2428, and determines whether or not it is desired to perform scheduling for the downlink data communication based on the received state evaluation report. As a result, when it is determined that it is desired to perform scheduling, the process proceeds to step S2508. For example, when the wireless relay station 2102 starts the downlink data communication forward the wireless terminal 2104 or when downlink data which is transmitted from the wireless relay station 2102 to the wireless terminal 2104 is present, it is determined that it is desired to perform scheduling. In contrast, when it is determined that it is not desired to perform scheduling, the process returns to step S2506 again.

In step S2508, the scheduler 2402 determines a value of a Resource Block Assignment (RBA) field, which is included in the control signal to be transmitted to the wireless terminal 2104, based on the channel state evaluation report received in step S2506.

Subsequently, in step S2510, the scheduler 2402 determines various communication parameters, except for the Resource Block Assignment (RBA), which are included in the control signal to be transmitted to the wireless terminal 2104 based on the channel state evaluation report which is received in step S2406. Under the control of the scheduler 2402, the control signal generation unit 2406 generates the third control signal having the third format illustrated in FIG. 21 based on the determined various communication parameters which include the Resource Block Assignment (RBA). Also, at this time, the control signal format control unit 2404 performs designation such that the third format illustrated in FIG. 21 is used as the format of the control signal with regard to the control signal generation unit 2406.

Subsequently, in step S2512, the control channel generation unit 2414 converts the control signal which is generated in step S2510 into a signal which has a format suitable for the data format of the PDCCH, and puts the signal into a state which may be transmitted using the PDCCH. The wireless transmission unit 2420 receives the output signal of the control channel generation unit 2414 through the multiplexing unit 2418, converts the received output signal into a wireless signal of the frequency band corresponding to the PDCCH, and transmits the wireless signal to the wireless terminal 2104 through the antenna.

Further, the shared channel generation unit 2416 converts the data signal which is generated in the data generation unit 2412 into a signal which is suitable for the data format of the PDSCH, and puts the signal into a state which may be transmitted using the PDSCH. The wireless transmission unit 2420 receives the output signal of the shared channel generation unit 2416 through the multiplexing unit 2418, converts the received output signal into the wireless signal of the frequency band corresponding to the PDSCH, and transmits the wireless signal to the wireless terminal 2104 through the antenna.

Subsequently, in step 2514, the scheduler 2402 instructs the control signal format control unit 2404 to convert the format of the control signal from the third format to the fourth format illustrated in FIG. 22. The control signal format control unit 2404 performs designation such that the fourth format is used as the format of the control signal with regard to the control signal generation unit 2406.

Subsequently, in step S2416, the scheduler 2402 receives the downlink channel state evaluation report from the response signal and CSI processing unit 2428, and determines whether or not it is desired to change the resource block assignment with regard to the downlink channel for the downlink data communication based on the received state evaluation report. As a result, when it is determined that it is not desired to change the resource block assignment, the process proceeds to step S2518. When it is determined that it is desired to change the resource block assignment, the process proceeds to step S2524.

In step S2518, the scheduler 2402 determines whether or not it is desired to perform scheduling for the downlink data communication based on the channel state evaluation report which is received in step S2416. As a result, when it is determined that it is desired to perform scheduling, the process proceeds to step S2520. In contrast, when it is determined that scheduling is not desired, the process returns to step S2518 again.

Subsequently, in step S2520, the scheduler 2402 determines various communication parameters, except for the Resource Block Assignment (RBA), which are included in the control signal to be transmitted to the wireless terminal 2104 based on the channel state evaluation report which is received in step S2416. Under the control of the scheduler 2402, the control signal generation unit 2406 generates the control signal having the fourth format based on the determined various communication parameters.

Also, at this time, the control signal format control unit 2404 performs designation such that the fourth format is used as the format of the control signal with regard to the control signal generation unit 2406. In addition, as described above, the fourth format does not include the Resource Block Assignment (RBA) field. However, a value which is the same as the value determined in step S2508 is maintained as the value of the Resource Block Assignment (RBA) (assigned frequency band value).

Subsequently, in step S2522, the control channel generation unit 2414 converts the control signal which is generated in step S2520 into a signal having a format which is suitable for the data format of the PDCCH, and puts the signal into a state which may be transmitted using the PDCCH. The wireless transmission unit 2420 receives the output signal of the control channel generation unit 2414 through the multiplexing unit 2418, converts the received output signal into the wireless signal of the frequency band corresponding to the PDCCH, and transmits the wireless signal to the wireless terminal 2104 through the antenna.

In contrast, in step S2524, the scheduler 2402 instructs the control signal generation unit 2406 to set the CSI report request (CSI request) field included in the first format or the second format to a specific value which indicates the report signal CSI transmission request.

Subsequently, in step S2526, under the control of the scheduler 2402, the control signal generation unit 2406 generates the first control signal having the first format or the second control signal having the second format, in which the CSI report request (CSI request) field is set to the specific value which indicates the report signal CSI transmission request, based on the communication parameters which are determined in step S2524.

Here, in the first control signal having the first format and the second control signal having the second format, the fact that the CSI transmission request (CSI request) field is the specific value which indicates the report signal CSI transmission request means that the resource block (frequency band) which is assigned to the downlink channel, that is, the communication parameters which are omitted from the fourth format are changed from subsequent data communication. The fact is settled in advance between the wireless relay station 2102 and the wireless terminal 2104.

Subsequently, in step S2528, the control channel generation unit 2414 converts the control signal which is generated in step S2526 into a signal having a format which is suitable for the data format of the PDCCH, and puts the signal into a state which may be transmitted using the PDCCH. The wireless transmission unit 2420 receives the output signal of the control channel generation unit 2414 through the multiplexing unit 2418, converts the received output signal into a wireless signal of the frequency band corresponding to the PDCCH, and transmits the wireless signal to the wireless terminal 2104 through the antenna.

Subsequently, in step S2530, the scheduler 2402 instructs the control signal format control unit 2404 to convert the format of the control signal from the fourth format to the third format. The control signal format control unit 2404 performs designation such that the third format is used as the format of the control signal with regard to the control signal generation unit 2406. Thereafter, the process returns to step S2506.

As described above, after the wireless relay station 2102 according to the third embodiment transmits the third control signal having the third format which includes the Resource Block Assignment (RBA) to the wireless terminal 2104, the wireless relay station 2102 converts the format of the control signal into the fourth format which does not include the Resource Block Assignment (RBA), and then converts the format of the control signal into the third format again when the wireless relay station 2102 determines that it is desired to change the resource block assignment. Therefore, in the scheduling for the data communication, it may be possible to achieve both the reduction in the overhead (data size) of the control signal and the flexibility of the scheduling.

In addition, when the wireless relay station 2102 converts the format of the control signal from the fourth format into the third format, the wireless relay station 2102 sets the CSI report request (CSI request) field included in the first format or the second format to the specific value which indicates the report signal CSI transmission request, and then transmits the control signal having the first format or the second format to the wireless terminal 2104. Therefore, it may be possible to appropriately notify the wireless terminal 2104 that the format of the control signal has been replaced, and it may be possible to securely perform conversion on the format of the control signal.

### 3-5. WIRELESS TERMINAL 2104

Subsequently, the configuration of the wireless terminal 2104 and the method of controlling data communication performed in the wireless terminal 2104 will be described.

### 3-5-1. CONFIGURATION OF WIRELESS TERMINAL 2104

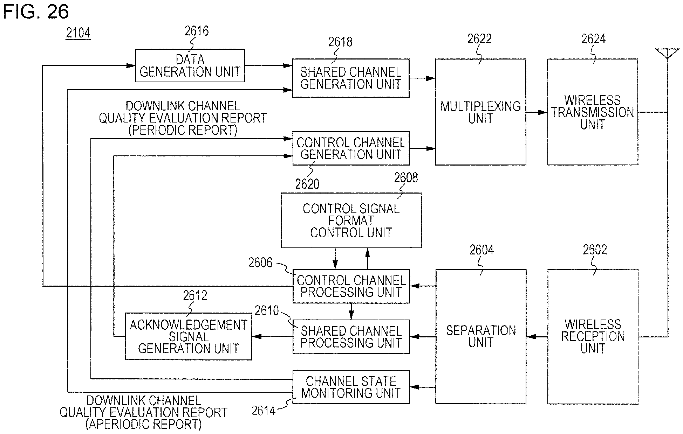

FIG. 26 is a functional block diagram illustrating the configuration of the wireless terminal 2104. As illustrated in FIG. 26, the wireless terminal 2104 includes a wireless reception unit 2602, a separation unit 2604, a control channel processing unit 2606, a control signal format control unit 2608, a shared channel processing unit 2610, a response signal generation unit 2612, a channel state monitoring unit 2614, data generation unit 2616, a shared channel generation unit 2618, a control channel generation unit 2620, a multiplexing unit 2622, and a wireless transmission unit 2624.

The wireless reception unit 2602 receives the wireless signal of the frequency band corresponding to the PDCCH or the PDSCH which is assigned to the wireless terminal 2104 from the wireless relay station 2102 through the antenna, converts the received wireless signal into a signal of a frequency which may be processed in the wireless terminal 2104, and outputs the signal acquired through the conversion to the separation unit 2604.

The separation unit 2604 receives the output signal of the wireless reception unit 2602. When the output signal of the wireless reception unit 2602 is the signal which is received using the downlink control channel (PDCCH) (for example, a control signal for scheduling the uplink data communication or downlink data communication), the separation unit 2604 outputs the received reception signal to the control channel processing unit 2606. When the output signal of the wireless reception unit 2602 is the signal (for example, data signal) which is received using the downlink shared channel (PDSCH), the separation unit 2604 outputs the received reception signal to the shared channel processing unit 2610. In addition, when the output signal of the wireless reception unit 2602 is a reference signal for evaluating the state of the downlink channel, the separation unit 2604 outputs the received reception signal to the channel state monitoring unit 2612.

The control signal format control unit 2608 selects the format of the control signal to be used when the control channel processing unit 2606 processes the control signal for scheduling the uplink data communication and the format of the control signal to be used when the control channel processing unit 2606 processes the control signal for scheduling the downlink data communication. The control signal format control unit 2608 designates which of the first format illustrated in FIG. 4 and the second format illustrated in FIG. 5 is used as the format of the control signal for scheduling the uplink data communication with regard to the control channel processing unit 2606. The control signal format control unit 2608 designates which of the third format illustrated in FIG. 21 and the fourth format illustrated in FIG. 22 is used as the format of the control signal for scheduling the downlink data communication with regard to the control channel processing unit 2606.

When the reception signal from the separation unit 2604 is the control signal for scheduling the uplink data communication or downlink data communication, the control channel processing unit 2606 processes the received control signal using the format which is designated by the control signal format control unit 2608, and acquires the various communication parameters which are included in the control signal.

When the third format is designated as the format of the control signal for scheduling the downlink data communication and the Resource Block Assignment (RBA) is included in the acquired communication parameters, the control channel processing unit 2606 acquires information of the frequency band (resource block) which is assigned to the wireless terminal 2104 for the downlink data communication. The control channel processing unit 2606 instructs the control signal format control unit 2608 to selects the fourth format, which does not include the Resource Block Assignment (RBA) field, as the format of the control signal for scheduling the downlink data communication from subsequent data communication.

In addition, when the control channel processing unit 2606 detects that the CSI report request (CSI request) field is the specific value, which indicates the report signal CSI transmission request, in the format of the control signal for scheduling the uplink data communication (first format or second format), the control channel processing unit 2606 instructs the control signal format control unit 2608 to selects the third format, which includes the Resource Block Assignment (RBA) field, as the format of the control signal for scheduling the downlink data communication from subsequent data communication.

The shared channel processing unit 2610 receives the various communication parameters which are included in the control signal from the control channel processing unit 2606. When the reception signal from the separation unit 2604 is the data signal, the shared channel processing unit 2610 acquires data by performing a demodulation process on the received data signal. The shared channel processing unit 2610 supplies information which indicates whether or not it was possible to normally acquire the data to the response signal generation unit 2612.

The response signal generation unit 2612 determines whether or not the data was normally acquired based on the information which is supplied from the shared channel processing unit 2610, and generates a response signal which indicates whether or not the data is normally acquired. When the data is normally acquired, the response signal generation unit 2612 generates a positive acknowledgement (ACK) signal. In contrast, when the data is not normally acquired, the response signal generation unit 2612 generates a negative acknowledgement (NACK) signal. The response signal generation unit 2612 outputs the generated response signal to the control channel generation unit 2620.

The channel state monitoring unit 2614 receives the reference signal for evaluating the state of the downlink channel from the separation unit 2604, monitors the state of the downlink channel based on the received reference signal, and evaluates the state of the downlink channel. The channel state monitoring unit 2614 periodically performs the downlink channel state evaluation at fixed sub-frame intervals, prepares a downlink channel state evaluation report (periodic report), and supplies the downlink channel state evaluation report to the control channel generation unit 2620. In addition, the channel state monitoring unit 2614 performs the downlink channel state evaluation when a fact that the CSI report request (CSI request) field in the first format or the second format of the control signal is the specific value indicative of the report signal CSI transmission request, is detected, prepares the downlink channel state evaluation report (aperiodic report), and supplies the downlink channel state evaluation report to the shared channel generation unit 2618.

The, when a communication parameter for the uplink data communication is acquired in the control channel processing unit 2606, the data generation unit 2616 generates the data signal to be transmitted to the wireless relay station 2102.

The shared channel generation unit 2618 receives a signal which indicates the downlink channel state evaluation report (aperiodic report) from the channel state monitoring unit 2614. In addition, the shared channel generation unit 2618 receives the data signal which is generated by the data generation unit 2616. The shared channel generation unit 2618 converts the received signal into the signal having a suitable format for the data format of the PUSCH, and puts the signal into a state which may be transmitted using the PUSCH.

The control channel generation unit 2620 receives the signal which indicates the downlink channel state evaluation report (periodic report) from the channel state monitoring unit 2614. In addition, the control channel generation unit 2620 receives the response signal (positive response signal or negative response signal) from the response signal generation unit 2612. The control channel generation unit 2620 converts the received signal into a signal having a format which is suitable for the data format of the PUCCH, and puts the signal in a state which may be transmitted using the PUCCH.

The multiplexing unit 2622 receives output signals from the shared channel generation unit 2618 and the control channel generation unit 2620, and outputs the received output signals to the wireless transmission unit 2624.

The wireless transmission unit 2624 receives an output signal from the multiplexing unit 2622, converts the received output signal into a wireless signal of the frequency band corresponding to the PUCCH or the PUSCH which is assigned to the wireless terminal 2104, and transmits the wireless signal to the wireless relay station 2102 through the antenna.

Also, the hardware configuration of the wireless terminal 2104 is the same as the hardware configuration of the wireless terminal 304 illustrated in FIG. 11. It may be possible to realize the function of each of the functional blocks of the wireless terminal 2104 illustrated in FIG. 26 using the hardware configuration which is the same as the hardware configuration of the wireless terminal 304 illustrated in FIG. 11.

It may be possible to realize the function and process of each of the functional blocks of the separation unit 2604, the control channel processing unit 2606, the control signal format control unit 2608, the shared channel processing unit 2610, the response signal generation unit 2612, the channel state monitoring unit 2614, the data generation unit 2616, the shared channel generation unit 2618, the control channel generation unit 2620, and the multiplexing unit 2622 illustrated in FIG. 26 in such a way that a processor executes a processing program in which a relevant function and process is described. The processing program is stored in the storage device and the above-described each of the functional blocks which are illustrated in FIG. 26 is realized in such a way that the processor expands the processing program which is stored in the storage device to the memory, and executes each process which is described in the processing program. Here, the memory is, for example, a RAM. The storage device is, for example, a non-volatile memory, such as a ROM or a flash memory, or a magnetic disk device, such as a Hard Disk Drive (HDD).

Also, the above-described each of the functional blocks illustrated in FIG. 26 may be realized using an LSI, such as an ASIC or an FPGA, in addition to a hardware configuration which is the same as that illustrated in FIG. 11.

It may be possible to realize the wireless reception unit 2602 and the wireless transmission unit 2622 illustrated in FIG. 26 using a wireless communication interface. The wireless communication interface is, for example, an LSI, such as a Radio Frequency Integrated Circuit (RFIC).

The wireless communication interface receives a digital signal from the bus, and converts the received digital signal into an analog signal. Further, the wireless communication interface converts the analog signal which is acquired through the conversion into a wireless signal of the frequency band which is used in the wireless communication, and transmits the wireless signal to the wireless relay station 2102 through the antenna which is not illustrated in the drawing. In addition, the wireless communication interface receives the wireless signal of the frequency band which is used in the wireless communication from the wireless relay station 2102 through the antenna which is not illustrated in the drawing, and converts the received wireless signal to an analog signal of a frequency band which may be processed by the processor. Further, the wireless communication interface converts the analog signal which is acquired through the conversion into a digital signal, and outputs the digital signal which is acquired through the conversion to the bus.

### 3-5-2. METHOD OF CONTROLLING DATA COMMUNICATION IN WIRELESS TERMINAL 2104

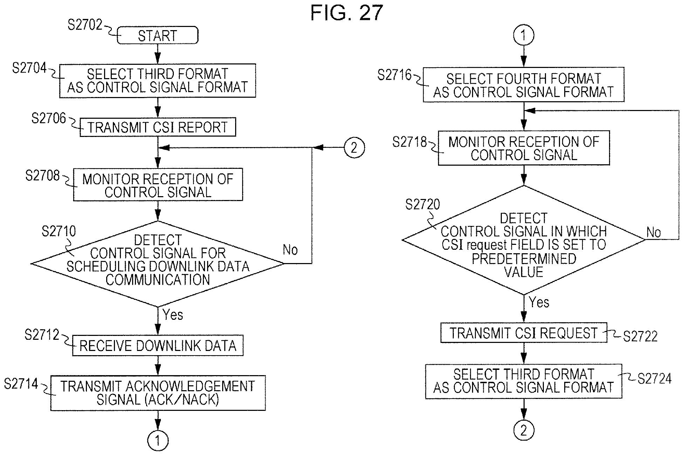

FIG. 27 is a flowchart illustrating a method of controlling data communication which is performed in the wireless terminal 2104. Hereinafter, the method of controlling data communication which is performed in the wireless terminal 2104 will be described with reference to FIG. 26 in addition to FIG. 27.

In step S2702, the wireless terminal 2104 starts a series of data communication control processes.

Subsequently, in step S2704, the control signal format control unit 2608 selects the third format illustrated in FIG. 21, which includes the Resource Block Assignment (RBA) field, as the format of the control signal to be used when the control channel processing unit 2606 processes a control signal for scheduling the downlink data communication. The control signal format control unit 2608 designates the third format as the format of the control signal with regard to the control channel processing unit 2606.

Subsequently, in step S2706, the channel state monitoring unit 2614 periodically executes the downlink channel state evaluation at fixed sub-frame intervals based on the reference signal for evaluating the state of the downlink channel, and prepares a downlink channel state evaluation report (periodic report). The CSI report is periodically prepared at fixed sub-frame intervals regardless of the process performed in each steps below.

The control channel generation unit 2620 converts the signal, which indicates the downlink channel state evaluation report (periodic report), supplied from the channel state monitoring unit 2614 into a signal having a format which is suitable for the data format of the PUCCH, and puts the signal in a state which may be transmitted using the PUCCH. The wireless transmission unit 2624 converts the output signal of the control channel generation unit 2620 which is received through the multiplexing unit 2622 into a wireless signal of the frequency band corresponding to the PUCCH, and transmits the wireless signal to the wireless relay station 2102 through the antenna.

Subsequently, in step S2708, the wireless reception unit 2602 monitors whether or not the control signal for scheduling the downlink data communication from the wireless relay station 2102 using the PDCCH.

Subsequently, in step S2710, when the wireless reception unit 2602 receives the control signal for scheduling the downlink data communication, the control channel processing unit 2606 receives the received control signal from the wireless reception unit 2602 through the separation unit 2604. The control channel processing unit 2606 determines whether or not the received control signal is a control signal having the third format which is designated by the control signal format control unit 2608. As a result, when the control signal having the third format is detected, the process proceeds to step S2712. In contrast, when the control signal having the third format is not detected, the process proceeds to step S2708.

Subsequently, in step S2712, the control channel processing unit 2606 processes the received control signal using the third format which is designated by the control signal format control unit 2608, and acquires various communication parameters which are included in the control signal. The control channel processing unit 2606 acquires information of the frequency band (resource block), which is assigned to the wireless terminal 2104, based on the value of the acquired Resource Block Assignment (RBA) field. The control channel processing unit 2606 instructs the control signal format control unit 2608 to select the fourth format which does not include the Resource Block Assignment (RBA) field as the format of the control signal.

In contrast, the wireless reception unit 2602 receives a data signal corresponding to the control signal, which is received in step S2710, from the wireless relay station 2102 using the PDSCH. The shared channel processing unit 2610 receives the received data signal through the separation unit 2604, and acquires data by performing a demodulation process on the received data signal. The shared channel processing unit 2610 supplies information, which indicates whether or not the data is normally acquired, to the response signal generation unit 2614.

Subsequently, in step S2714, the response signal generation unit 2612 determines whether or not the data is normally acquired based on the information which is supplied from the shared channel processing unit 2610, and generates a response signal which indicates whether or not the data is normally acquired. When the data is normally acquired, the response signal generation unit 2612 generates a positive acknowledgement (ACK) signal. In contrast, when the data is not normally acquired, the response signal generation unit 2612 generates a negative acknowledgement (NACK) signal.

The control channel generation unit 2620 receives the response signal (the positive response signal or the negative response signal) from the response signal generation unit 2612. The control channel generation unit 2620 converts the received response signal into a signal having a format which is suitable for the data format of the PUCCH, and puts the signal in a state which may be transmitted using the PUCCH. The wireless transmission unit 2624 converts the output signal of the control channel generation unit 2620, which is received through the multiplexing unit 2622, into a wireless signal of the frequency band corresponding to PUCCH, and transmits the wireless signal to the wireless relay station 2102 through the antenna.

Subsequently, in step S2716, the control signal format control unit 2608 selects the fourth format illustrated in FIG. 22, which does not include the Resource Block Assignment (RBA) field, as the format of the control signal for scheduling the downlink data communication based on the instruction from the control channel processing unit 2606. The control signal format control unit 2608 designates the fourth format as the format of the control signal with regard to the control channel processing unit 2606.

Subsequently, in step S2718, the wireless reception unit 2602 monitors whether or not the control signal for scheduling the uplink data communication (the control signal having the first format or the second format) is received from the wireless relay station 2102 using the PDCCH.

Subsequently, in step S2720, when the wireless reception unit 2602 receives the control signal for scheduling the uplink data communication, the control channel processing unit 2606 receives the received control signal from the wireless reception unit 2602 through the separation unit 2604. The control channel processing unit 2606 determines whether or not the CSI report request (CSI request) field is the specific value, which indicates the report signal CSI transmission request, in the format of the received control signal (the first format or the second format). As a result, when the control signal, in which the CSI transmission request field is set to the specific value, is detected, the process proceeds to step S2722. In contrast, when the control signal, in which the CSI transmission request field is set to the specific value, is not detected, the process returns to step S2718.

In addition, when the control signal, in which the CSI transmission request field is set to the specific value, is detected, the control channel processing unit 2606 instructs the control signal format control unit 2608 to select the third format which includes the Resource Block Assignment (RBA) field as the format of the control signal for scheduling the downlink data communication.

Subsequently, in step S2722, the channel state monitoring unit 2614 performs the downlink channel state evaluation in response to a fact that the CSI transmission request field is set to the above-described specific value in step S2620 based on the reference signal for evaluating the state of the downlink channel, and prepares a downlink channel state evaluation report (aperiodic report).

The shared channel generation unit 2618 converts the signal, which indicates the downlink channel state evaluation report (aperiodic report) and which is supplied from the channel state monitoring unit 2614, into the signal having a suitable format for the data format of the PUSCH, and puts the signal into a state which may be transmitted using the PUSCH. The wireless transmission unit 2624 converts the output signal of the shared channel generation unit 2618 which is received through the multiplexing unit 2622 into a wireless signal of the frequency band corresponding to the PUSCH, and transmits the wireless signal to the wireless relay station 2102 through the antenna.

Subsequently, in step S2724, the control signal format control unit 2608 selects the third format, which includes the Resource Block Assignment (RBA) field, as the format of the control signal for scheduling the downlink data communication based on the instruction from the control channel processing unit 2606. The control signal format control unit 2608 designates the third format as the format of the control signal with regard to the control channel processing unit 2606. Thereafter, the process returns to step S2708.

As described above, the wireless terminal 2104 according to the third embodiment receives the third control signal having the third format, which includes the Resource Block Assignment (RBA) from the wireless relay station 2102, and then converts the format of the control signal into the fourth format which does not include the Resource Block Assignment (RBA). Therefore, when it is notified that it is desired to change the resource block assignment from the wireless relay station 2102, the format of the control signal is converted into the third format again. Therefore, in the scheduling for the data communication, it may be possible to achieve both a reduction in the overhead (data size) of the control signal and flexibility of the scheduling.

In addition, when the format of the control signal is converted from the fourth format to the third format, the wireless terminal 2104 sets the CSI report request (CSI request) field included in the first format or the second format to the specific value which indicates the report signal CSI transmission request, and then receives the control signal having the first format or the second format from the wireless relay station 2102. Therefore, it may be possible to appropriately notify that the format of the control signal has been replaced, and it may be possible to securely perform conversion on the format of the control signal.

### 4. FOURTH EMBODIMENT

Hereinafter, a wireless station and communication control method according to the fourth embodiment will be described. Similarly to the third embodiment, the fourth embodiment relates to dynamic scheduling for downlink data communication in LTE.

The configuration of the wireless communication system 2800 according to the fourth embodiment is the same as the configuration of the wireless communication system 300 according to the first embodiment illustrated in FIG. 3, and includes a wireless relay station (first wireless station) 2802 and a wireless terminal (second wireless station) 2804. Accordingly, the detailed description thereof will not be repeated.

In addition, in dynamic scheduling for the wireless communication system 2800 according to the fourth embodiment, the format of the control signal for scheduling the downlink data communication is the same as the format of the control signal according to the third embodiment illustrated in FIGs. 21 and 22. Accordingly, the detailed description thereof will not be repeated.

### 4-1. COMMUNICATION CONTROL IN WIRELESS COMMUNICATION SYSTEM 2800

Subsequently, in the wireless communication system 2800 according to the fourth embodiment, a method of controlling data communication which is executed between the wireless relay station 2802 and the wireless terminal 2804 will be described.

The method of controlling data communication according to the fourth embodiment is acquired by improving the method of controlling data communication according to the third embodiment illustrated in FIG. 23 as will be described below.

### 4-1-1. CONVERSION PERFORMED ON CONTROL SIGNAL FORMAT FROM THIRD FORMAT TO FOURTH FORMAT

A method of controlling data communication according to the fourth embodiment is different from the cases in steps 23-1 and 23-2 illustrated in FIG. 23 according to the third embodiment. The method of controlling data communication according to the fourth embodiment is different in points that, when the wireless relay station 2802 transmits the third control signal having the third format to the wireless terminal 2804 and then further receives a response signal corresponding to the data signal that corresponds to the transmitted third control signal from the wireless terminal 2804, the wireless relay station 2802 converts the format of the control signal from the third format into the fourth format.

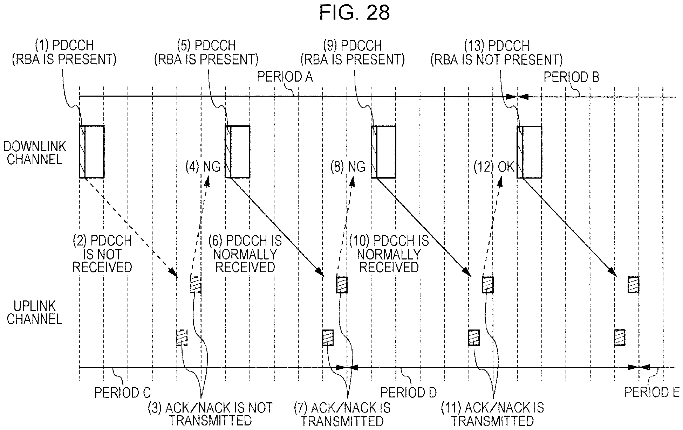

FIG. 28 is a diagram illustrating the method of controlling data communication which is executed between the wireless relay station 2802 and the wireless terminal 2804 in the wireless communication system 2800 according to the fourth embodiment, and is a diagram illustrating the method of controlling data communication executed when the format of the control signal is converted from the third format to the fourth format.

As illustrated in FIG. 28, in step 28-1, the wireless relay station 2802 determines various communication parameters, such as the resource block assignment, with regard to the wireless terminal 2804, which is the communication target, similar to the case in step 23-1, and assigns a frequency band for the downlink channel which is used for the downlink data communication. The wireless relay station 2802 transmits the third control signal having the third format illustrated in FIG. 21 to the wireless terminal 2804 using the PDCCH (downlink channel) based on the determined communication parameters. The third control signal is a control signal for scheduling the downlink data communication, and includes a communication parameter, such as the Resource Block Assignment (RBA).

In step 28-2, the wireless terminal 2804 fails to receive the third control signal having the third format from the wireless relay station 2802 for some reason such as the bad state of the downlink communication channel (PDCCH).

In step 28-3, since the wireless terminal 2804 fails to receive the third control signal having the third format in step 28-2, it is not possible to acquire the communication parameters which are included in the third control signal, and it is not possible to set the frequency band which is assigned to the downlink channel used for the downlink data communication. Therefore, it is not possible for the wireless terminal 2804 to receive corresponding data signal from the wireless relay station 2802 and to transmit the response signal (positive acknowledgement (ACK) signal or negative acknowledgement (NACK) signal) which indicates whether or not the data is normally acquired to the wireless relay station 2802.

In step 28-4, since the wireless terminal 2804 does not transmit the response signal corresponding to the corresponding data signal, the wireless relay station 2802 fails to receive the response signal corresponding to the data signal that corresponds to the transmitted third control signal from the wireless terminal 2804.

When the wireless relay station 2802 fails to receive the response signal with regard to the data signal corresponding to the transmitted third control signal, the wireless relay station 2802 determines that the transmitted third control signal is not normally received in the wireless terminal 2804 and that the various communication parameters, such as the resource block assignment, are not normally notified to the wireless terminal 2804. Further, the wireless relay station 2802 does not convert the format of the control signal from the third format to the fourth format, and determines to transmit the third control signal having the third format to the wireless terminal 2802 in subsequent data communication.

In step 28-5, the wireless relay station 2802 determines the various communication parameters, such as the resource block assignment, again with regard to the wireless terminal 2804 in response to a fact that the wireless relay station 2802 fails to receive the data signal corresponding to the third control signal in step 28-4, and assigns a frequency band for the downlink channel which is used for the downlink data communication. The wireless relay station 2802 transmits the third control signal having the third format again to the wireless terminal 2804 which is the communication target using the PDCCH (downlink channel) based on the determined communication parameters.

In step 28-6, the wireless terminal 2804 normally receives the third control signal having the third format, which is transmitted in step 28-5, from the wireless relay station 2802 using the PDCCH.

In step 28-7, the wireless terminal 2804 sets the frequency band which is assigned to the downlink channel used for the downlink data communication based on the communication parameters which are included in the received third control signal. The wireless terminal 2804 receives the data signal from the wireless relay station 2802 using the PDSCH (downlink channel,) which includes the set frequency band, in a sub-frame which is the same as the sub-frame which received the control signal. Further, the wireless terminal 2804 executes a data demodulation process in response to the reception of the data signal, and generates a response signal which indicates that the data is normally acquired. The wireless terminal 2804 transmits the generated response signal (positive acknowledgement (ACK) signal or negative acknowledgement (NACK) signal) to the wireless relay station 2802 using the PUCCH.

In step 28-8, the wireless relay station 2802 fails to receive the response signal corresponding to the data signal that corresponds to the transmitted third control signal from the wireless terminal 2804 for some reason such as the bad state of the uplink communication channel (PUCCH).

When the wireless relay station 2802 fails to receive the response signal corresponding to the data signal that corresponds to the transmitted third control signal, the wireless relay station 2802 determines that the transmitted third control signal is not normally received in the wireless terminal 2804 and that the various communication parameters, such as the resource block assignment, are not normally notified to the wireless terminal 2804. Further, the wireless relay station 2802 does not convert the format of the control signal from the third format into the fourth format, and determines to transmit the third control signal having the third format to the wireless terminal 2802 in subsequent data communication.

In step 28-9, the wireless relay station 2802 determines the various communication parameters, such as the resource block assignment, again with regard to the wireless terminal 2804 in response to the fact that the wireless relay station 2802 fails to receive the response signal corresponding to the data signal that corresponds to the transmitted third control signal, and assigns a frequency band for the downlink channel which is used for the downlink data communication. The wireless relay station 2802 transmits the third control signal having the third format again to the wireless terminal 2804, which is the communication target, using the PDCCH (downlink channel) based on the determined communication parameters.

In step 28-10, the wireless terminal 2804 receives the third control signal having the third format, which is transmitted in step 28-9, from the wireless relay station 2802 using the PDCCH.

In step 28-11, the wireless terminal 2804 sets the frequency band which is assigned to the downlink channel used for the downlink data communication based on the communication parameters which are included in the received third control signal. The wireless terminal 2804 transmits the data signal to the wireless relay station 2802 in the sub-frame, which is the same as the sub-frame which received the control signal, using the PDSCH (downlink channel) which includes the set frequency band. Further, the wireless terminal 2804 performs the data demodulation process in response to the reception of the data signal, and generates the response signal which indicates that the data is normally acquired. The wireless terminal 2804 transmits the generated response signal (positive acknowledgement (ACK) signal or negative acknowledgement (NACK) signal) to the wireless relay station 2802 using the PUCCH.

In step 28-12, the wireless relay station 2802 normally receives the response signal with regard to the data signal corresponding to the transmitted third control signal form the wireless terminal 2804 using the PUCCH.

When the wireless relay station 2802 normally received the response signal with regard to the data signal corresponding to the transmitted third control signal, the wireless relay station 2802 determines that the transmitted third control signal is normally received in the wireless terminal 2804 and that the various communication parameters, such as the resource block assignment, were normally notified to the wireless terminal 2804. Further, the wireless relay station 2802 converts the format of the control signal from the third format into the fourth format.

In step 28-13, similarly to step 23-2, when the wireless relay station 2802 determines that it is not desired to change the resource block assignment, the wireless relay station 2802 does not change the frequency band which is assigned to the downlink channel and transmits the fourth control signal having the fourth format to the wireless terminal 2804. That is, the wireless relay station 2802 converts the format of the control signal from the third format into the fourth format.

The wireless terminal 2804 receives the fourth control signal having the fourth format from the wireless relay station 2802 using the PDCCH. Similarly to the case of step 23-2, the wireless terminal 2804 receives the data signal from the wireless relay station 2802 in the sub-frame, which is the same as the sub-frame which received the fourth control signal, using the PDSCH (downlink channel) which includes the frequency band set already based on the communication parameters which are included in the received fourth control signal. Further, the wireless terminal 2804 performs the data demodulation process in response to the reception of the data signal, and generates a response signal which indicates that the data is normally acquired. The wireless terminal 2804 transmits the generated response signal (positive acknowledgement (ACK) signal or negative acknowledgement (NACK) signal) to the wireless relay station 2802 using the PUCCH.

Here, as being understood from the above description, a period A is a period in which the wireless relay station 2802 uses the third format as the format of the control signal in FIG. 28. A period B is a period in which the wireless relay station 2802 uses the fourth format as the format of the control signal.

In addition, a period C is a period in which the wireless terminal 2804 uses the third format as the format of the control signal. A period E is a period in which the wireless terminal 2804 uses the fourth format as the format of the control signal.

In contrast, a period D is a period in which the wireless terminal 2804 uses both the third format and the fourth format as the format of the control signal.

During a period until the wireless terminal 2804 receives the third control signal having the third format, actually receives the fourth control signal having the fourth format after transmitting the response signal corresponding to the data signal that corresponds to the received third control signal, and then transmitting the response signal corresponding to the data signal that corresponds to the received fourth control signal, the wireless terminal 2804 may use both the third format and the fourth format as the format of the control signal, and may receive both the third control signal and the fourth control signal.

The reason for this is that, for example, if it is difficult for the wireless relay station 2802 to normally receive the response signal even when the wireless terminal 2804 normally receives the third control signal and normally transmits the response signal with regard to the data signal corresponding to the received third control signal as in step 28-8, the wireless relay station 2802 determines that the various communication parameters, such as the resource block assignment, are not normally notified to the wireless terminal 2804, and thus the wireless relay station 2802 transmits the third control signal again.

As described above, in the wireless communication system 2800 according to the fourth embodiment, the wireless relay station 2802 transmits the third control signal having the third format, which includes the Resource Block Assignment (RBA), to the wireless terminal 2804 and then further receives the response signal corresponding to the data signal that corresponds to the transmitted third control signal from the wireless terminal 2804. At that time, the wireless relay station 2802 converts the format of the control signal from the third format into the fourth format. Therefore, when the format of the control signal is converted from the third format into the fourth format, it may be possible to recognize that the transmitted third control signal is normally received in the wireless terminal 2804 and that the various communication parameters, such as the resource block assignment, were normally notified to the wireless terminal 2804, and thus it may be possible to further securely perform the conversion on the format of the control signal.

### 4-1-2. CONVERSION PERFORMED ON CONTROL SIGNAL FORMAT FROM FOURTH FORMAT TO THIRD FORMAT

In addition, a method of controlling data communication according to the fourth embodiment is different from the cases of steps 23-3 and 23-4 according to the third embodiment illustrated in FIG. 23. The method of controlling data communication according to the fourth embodiment is different in points that the wireless relay station 2802 transmits the first control signal having the first format or the second control signal having the second format to the wireless terminal 2804 after setting the CSI report request (CSI request) field of the first format of the first control signal or the second format of the second control signal to the specific value which indicates the report signal CSI transmission request, and that, when the report signal CSI corresponding to the transmitted first control signal or the second control signal is received from the wireless terminal 2804, the wireless relay station 2802 converts the format of the control signal from the fourth format into the third format.

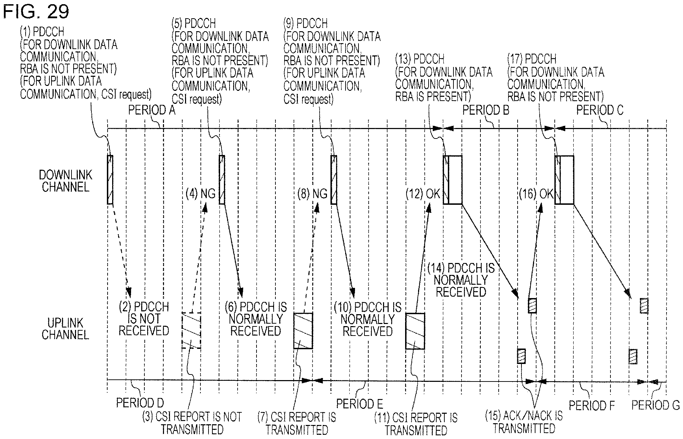

FIG. 29 is a diagram illustrating the method of controlling data communication performed between the wireless relay station 2802 and the wireless terminal 2804 in the wireless communication system 2800 according to the fourth embodiment, and is a diagram illustrating the method of controlling data communication when the format of the control signal is converted from the fourth format to the third format.

As illustrated in FIG. 29, similarly to the case of step 23-3, the wireless relay station 2802 continues monitoring of the state of the downlink channel, determines whether or not it is desired to change the resource block assignment, that is, the communication parameter which is omitted from the control signal having the fourth format in step 29-1.

Further, if the wireless relay station 2802 determines that it is desired to change the resource block assignment, that is, the communication parameter which is omitted from the control signal having the fourth format, the wireless relay station 2802 transmits the fourth control signal having the fourth format to the wireless terminal 304 which is the communication target, and transmits the first control signal having the first format or the second control signal having the second format to the wireless terminal 2804 after setting the CSI report request (CSI request) field of the first format illustrated in FIG. 4 or the second format illustrated in FIG. 5 to the specific value which indicates the report signal CSI transmission request.

In step 29-2, the wireless terminal 2804 fails to receive the first control signal having the first format or the second control signal having the second format from the wireless relay station 2802 for some reason such as the bad state of the downlink communication channel (PDCCH).

In step 29-3, since the wireless terminal 2804 fails to receive the first control signal having the first format or the second control signal having the second format in step 29-2, it is difficult for the wireless terminal 2804 to acquire the CSI report request (CSI request) parameter which is included in the first control signal or the second control. Therefore, it is difficult for the wireless terminal 2804 to transmit the corresponding report signal CSI to the wireless relay station 2802.

In step 29-4, since the wireless terminal 2804 does not transmit the corresponding report signal CSI, the wireless relay station 2802 fails to receive the report signal CSI corresponding to the transmitted first control signal or the second control signal from the wireless terminal 2804.

When the wireless relay station 2802 fails to receive the report signal CSI corresponding to the transmitted first control signal or the second control signal, the wireless relay station 2802 determines that the transmitted first control signal or the second control signal is not normally received in the wireless terminal 2804 and that a fact that it is desired to change the resource block assignment is not normally notified. Further, the wireless relay station 2802 does not convert the format of the control signal for scheduling the downlink data communication from the fourth format to the third format, and determines to transmit the first control signal having the first format or the second control signal having the second format to the wireless terminal 2802 after setting the CSI report request (CSI request) field to the specific value which indicates the report signal CSI transmission request in the subsequent data communication.

In step 29-5, if the wireless relay station 2802 determines that it is desired to change the resource block assignment in response to the fact that the wireless relay station 2802 fails to receive the report signal CSI corresponding to the first control signal or the second control signal in 29-4, the wireless relay station 2802 transmits the fourth control signal having the fourth format to the wireless terminal 304, and transmits the first control signal having the first format or the second control signal having the second format to the wireless terminal 2804 using the PDCCH (downlink channel) after setting the CSI report request (CSI request) field included in the first format or the second format to the specific value which indicates the report signal CSI transmission request again.

In step 29-6, the wireless terminal 2804 normally receives the first control signal having the first format or the second control signal having the second format which is transmitted in step 29-5 from the wireless relay station 2802 using the PDCCH.

In step 29-7, the wireless terminal 2804 recognizes that resource block (frequency band) assigned to the downlink channel (PDSCH) is changed from subsequent data communication based on a value of the CSI report request (CSI request) field which is included in the received first control signal or the second control signal. In addition, the wireless terminal 2804 recognizes that the frequency band assigned to the downlink channel (PDSCH) is the same as the previously assigned frequency band in current data communication by receiving the fourth control signal having the fourth format.

The wireless terminal 2804 generates the report signal CSI corresponding to the received first control signal or the second control signal, and transmits the generated report signal CSI to the wireless relay station 2802 using the PUSCH (uplink channel) after the predetermined number of sub-frames from the sub-frame which received the control signal. Here, the generated report signal CSI is used to report downlink channel state evaluation in entirety of or a part of the system band.

In step 29-8, the wireless relay station 2802 fails to receive the report signal CSI corresponding to the transmitted first control signal or the second control signal from the wireless terminal 2804 for some reason such as the bad state of the uplink communication channel (PUSCH).

When the wireless relay station 2802 fails to receive the report signal CSI corresponding to the transmitted first control signal or the second control signal, the wireless relay station 2802 determines that the transmitted first control signal or the second control signal is not normally received in the wireless terminal 2804 and that a fact that it is desired to change the resource block assignment is not normally notified to the wireless terminal 2804. Further, the wireless relay station 2802 does not convert the format of the control signal for scheduling the downlink data communication from the fourth format to the third format, and determines to transmit the first control signal having the first format or the second control signal having the second format to the wireless terminal 2802 after setting the CSI report request (CSI request) field to the specific value which indicates the report signal CSI transmission request in the subsequent data communication.

In step 29-9, if the wireless relay station 2802 determines that it is desired to change the resource block assignment in response to the fact that the wireless relay station 2802 fails to receive the report signal CSI corresponding to the first control signal or the second control signal in step 29-8, the wireless relay station 2802 transmits the fourth control signal having the fourth format to the wireless terminal 304 and transmits the first control signal having the first format or the second control signal having the second format to the wireless terminal 2804 using the PDCCH (downlink channel) after setting the CSI report request (CSI request) field included in the first format or the second format again to the specific value which indicates the report signal CSI transmission request.

In step 29-10, the wireless terminal 2804 normally receives the first control signal having the first format or the second control signal having the second format which is transmitted from the wireless relay station 2802 using the PDCCH in step 29-5.

In step 29-11, the wireless terminal 2804 recognizes that the resource block (frequency band) assigned to the downlink channel (PDSCH) is changed from subsequent data communication based on a value of the CSI report request (CSI request) field which is included in the received first control signal or the second control signal. In addition, the wireless terminal 2804 recognizes that the frequency band, which is assigned to the downlink channel (PDSCH), is the same as a frequency band, which is assigned in advance, in the current data communication by receiving the fourth control signal having the fourth format.

The wireless terminal 2804 generates the report signal CSI corresponding to the received first control signal or the second control signal, and transmits the generated report signal CSI to the wireless relay station 2802 after the predetermined number of sub-frames from the sub-frame which received the control signal.

In step 29-12, the wireless relay station 2802 normally receives the report signal CSI corresponding to the transmitted first control signal or the second control from the wireless terminal 2804 using the PUSCH.

When the wireless relay station 2802 normally receives the report signal CSI corresponding to the transmitted first control signal or the second control signal, the wireless relay station 2802 determines that the transmitted first control signal or the second control signal is normally received in the wireless terminal 2804 and the fact that it is desired to change the resource block assignment is normally notified to the wireless terminal 2804. Further, the wireless relay station 2802 converts the format of the control signal for scheduling the downlink data communication from the fourth format to the third format.

In step 29-13, similarly to step 23-4, the wireless relay station 2802 newly determines the various communication parameters, such as the resource block assignment, and newly assigns a frequency band for the downlink channel which is used for the downlink data communication with regard to the wireless terminal 2804 which is the communication target. The wireless relay station 2802 transmits the third control signal having the third format to the wireless terminal 2804 which is the communication target using the PDCCH (downlink channel) based on the determined communication parameters. That is, the wireless relay station 2802 converts the format of the control signal for scheduling the downlink data communication from the fourth format to the third format.

In step 29-14, the wireless terminal 2804 normally receives the third control signal having the third format from the wireless relay station 2802 using the PDCCH.

The wireless terminal 2804 sets the newly assigned frequency band with regard to the downlink channel which is used for the downlink data communication based on the communication parameters which are included in the received third control signal.

The wireless terminal 2804 receives the data signal from the wireless relay station 2802 using the PDSCH (downlink channel) which includes the newly set frequency band in the sub-frame which is the same as the sub-frame which received the third control signal. Further, the wireless terminal 2804 performs the data demodulation process in response to the reception of the data signal, and generates a response signal which indicates that the data is normally acquired.

In step 29-15, the wireless terminal 2804 receives the generated response signal (positive acknowledgement (ACK) signal or negative acknowledgement (NACK) signal) from the wireless relay station 2802 using the PUCCH.

In step 29-16, the wireless relay station 2802 normally receives the response signal with regard to the data signal corresponding to the transmitted third control signal from the wireless terminal 2804 using the PUCCH.

When the wireless relay station 2802 normally received the response signal with regard to the data signal corresponding to the transmitted third control signal, the wireless relay station 2802 determines that the transmitted third control signal is normally received in the wireless terminal 2804, and that the various communication parameters, such as the resource block assignment, were normally notified to the wireless terminal 2804. Further, the wireless relay station 2802 converts the format of the control signal for scheduling the downlink data communication from the third format into the fourth format.

In step 29-17, if the wireless relay station 2802 determines that it is not desired to change the resource block assignment, the wireless relay station 2802 does not change the frequency band which is assigned to the downlink channel, and transmits the fourth control signal having the fourth format to the wireless terminal 2804. That is, the wireless relay station 2802 converts the format of the control signal from the third format into the fourth format.

Here, as being understood from the above description, in FIG. 29, the periods A and C are period in which the wireless relay station 2802 uses the fourth format as the format of the control signal for scheduling the downlink data communication. The period B is a period in which the wireless relay station 2802 uses the third format as the format of the control signal.

In addition, the periods D and G are period in which the wireless terminal 2804 uses the fourth format as the format of the control signal for scheduling the downlink data communication.

In contrast, the periods E and F are periods in which the wireless terminal 2804 uses both the third format and the fourth format as the format of the control signal.

During a period until the wireless terminal 2804 receives the first control signal having the first format or the second control signal having the second format, in which the CSI report request (CSI request) field is set to the specific value which indicates the report signal CSI transmission request, actually receives the third control signal having the third format after transmitting the received report signal CSI corresponding to the first control signal or the second control signal, and transmits the response signal corresponding to the data signal that corresponds to the received third control signal, it may be possible to use both the third format and the fourth format as the format of the control signal for scheduling the downlink data communication, and to receive both the third control signal and the fourth control signal.

The reason for this is that, for example, if it is difficult for the wireless relay station 2802 to normally receive the report signal CSI even when the wireless terminal 2804 normally receives the first control signal or the second control signal, in which the CSI report request field is set to the specific value, and normally transmits the received report signal CSI corresponding to the first control signal or the second control signal as in step 29-8, the wireless relay station 2802 determines that the fact that it is desired to change the resource block assignment is not normally notified to the wireless terminal 2804, and thus the wireless relay station 2802 transmits the fourth control signal having the fourth format again, and transmits the first control signal or the second control signal in which the CSI report request field is set to the specific value.

In addition, during a period until the wireless terminal 2804 receives the third control signal having the third format, actually receives the fourth control signal having the fourth format after transmitting the response signal corresponding to the data signal that corresponds to the received third control signal, and then transmits the response signal corresponding to the data signal that corresponds to the received fourth control signal, the wireless terminal 2804 may use both the third format and the fourth format as the format of the control signal and may receive both the third control signal and the fourth control signal.

The reason for this is that, similarly to the case of the period D in FIG. 28, if it is difficult for the wireless relay station 2802 to normally receive the response signal even when the wireless terminal 2804 normally receives the third control signal and normally transmits the response signal corresponding to the data signal that corresponds to the received third control signal, the wireless relay station 2802 determines that the various communication parameters, such as the resource block assignment, are not normally notified to the wireless terminal 2804, and thus the wireless relay station 2802 transmits the third control signal.

As described above, in the wireless communication system 2800 according to the fourth embodiment, when the wireless relay station 2802 transmits the control signal having the first format or the second format to the wireless terminal 2804 after setting the CSI report request (CSI request) field included in the first format or the second format to the specific value which indicates the report signal CSI transmission request, and, further, receives a report signal CSI corresponding to the transmitted control signal from the wireless terminal 2804, the wireless relay station 2802 converts the format of the control signal from the fourth format into the third format. Therefore, when the format of the control signal is converted from the fourth format into the third format, it may be possible to recognize that the transmitted control signal is normally received in the wireless terminal 2804 and the fact that it is desired to change the resource block assignment is normally notified to the wireless terminal 2804, and thus it may be possible to further securely perform the conversion on the format of the control signal.

### 4-1-3. COMMUNICATION CONTROL IN WIRELESS COMMUNICATION SYSTEM 2800

Subsequently, a method of controlling the entire data communication which is performed between the wireless relay station 2802 and the wireless terminal 2804 in the wireless communication system 2800 according to the fourth embodiment will be described.

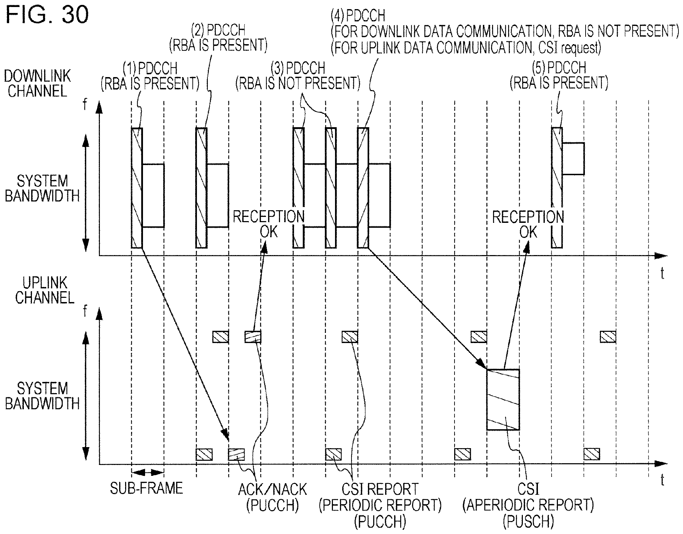

FIG. 30 is a diagram illustrating the method of controlling the entire data communication performed between the wireless relay station 2802 and the wireless terminal 2804 in the wireless communication system 2800 according to the fourth embodiment. FIG. 30 is a diagram illustrating the data communication control described with reference to FIGs. 28 and 29 again in the entire series of data communication.

As illustrated in FIG. 30, similarly to steps 28-1 to 28-12 illustrated in FIG. 28, when the wireless relay station 2802 starts the downlink data communication between the wireless relay station 2802 and the wireless terminal 2804, the wireless relay station 2802 determines various communication parameters, such as the resource block assignment, with regard to the wireless terminal 2804 which is the communication target, and assigns a frequency band for the downlink channel which is used for the downlink data communication in steps 30-1 and 30-2. The wireless relay station 2802 transmits the third control signal having the third format illustrated in FIG. 21 using the PDCCH (downlink channel) based on the determined communication parameters, to the wireless terminal 2804.

When the wireless relay station 2802 normally received the response signal with regard to the data signal corresponding to the transmitted third control signal from the wireless terminal 2804 using the PUCCH, the wireless relay station 2802 determines that the third control signal is normally received in the wireless terminal 2804 and that the various communication parameters, such as the resource block assignment, were normally notified to the wireless terminal 2804. Further, the wireless relay station 2802 converts the format of the control signal for scheduling the downlink data communication from the third format into the fourth format illustrated in FIG. 22.

In step 30-3, similarly to the case in step 28-13, if the wireless relay station 2802 determines that it is not desired to change the resource block assignment, the wireless relay station 2802 does not change the frequency band which is assigned to the downlink channel, and transmits the fourth control signal having the fourth format to the wireless terminal 2804. That is, the wireless relay station 2802 converts the format of the control signal for scheduling the downlink data communication from the third format to the fourth format.

The wireless terminal 2804 receives the fourth control signal having the fourth format from the wireless relay station 2802 using the PDCCH. The wireless terminal 2804 receives the data signal from the wireless relay station 2802 using the PDSCH (downlink channel) which includes the frequency band set already in the sub-frame which is the same as the sub-frame which received the fourth control signal based on the communication parameters which are included in the received fourth control signal.

In step 30-4, similarly to the cases in steps 29-1 to 29-12 illustrated in FIG. 29, if the wireless relay station 2802 determines that it is desired to change the resource block assignment, the wireless relay station 2802 transmits the fourth control signal having the fourth format to the wireless terminal 2804, which is the communication target, and transmits the first control signal having the first format or the second control signal having the second format to the wireless terminal 2804 after setting the CSI report request (CSI request) field in the first format illustrated in FIG. 4 or the second format illustrated in FIG. 5 to the specific value which indicates the report signal CSI transmission request.

When the wireless relay station 2802 normally receives the report signal CSI corresponding to the transmitted first control signal or the second control signal from the wireless terminal 2804 using the PUSCH, the wireless relay station 2802 determines that the transmitted first control signal or the second control signal is normally received in the wireless terminal 2804 and that a fact that it is desired to change the resource block assignment is normally notified to the wireless terminal 2804. Further, the wireless relay station 2802 converts the format of the control signal for scheduling the downlink data communication from the fourth format into the third format.

In step 30-5, similarly to the cases in steps 29-13 to 29-17, the wireless relay station 2802 newly determines the various communication parameters, such as the resource block assignment, with regard to the wireless terminal 2804, and newly assigns a frequency band for the downlink channel which is used for the downlink data communication. The wireless relay station 2802 transmits the third control signal having the third format to the wireless terminal 2804, which is the communication target, using the PDCCH (downlink channel) based on the determined communication parameters. That is, the wireless relay station 2802 converts the format of the control signal from the fourth format into the third format.

When the wireless relay station 2802 normally received the response signal with regard to the data signal corresponding to the transmitted third control signal using the PUCCH, the wireless relay station 2802 determines that the transmitted third control signal is normally received in the wireless terminal 2804 and that the various communication parameters, such as the resource block assignment, were normally notified to the wireless terminal 2804. Further, the wireless relay station 2802 converts the format of the control signal for scheduling the downlink data communication from the third format into the fourth format.

### 4-2. WIRELESS RELAY STATION 2802

Subsequently, the configuration of the wireless relay station 2802 and the method of controlling data communication performed in the wireless relay station 2802 will be described.

### 4-2-1. CONFIGURATION OF WIRELESS RELAY STATION 2802

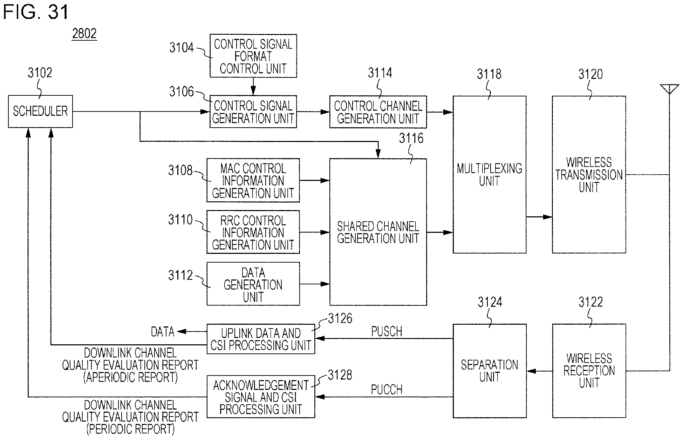

FIG. 31 is a functional block diagram illustrating the configuration of the wireless relay station 2802. As illustrated in FIG. 31, the wireless relay station 2802 includes a scheduler 3102, a control signal format control unit 3104, a control signal generation unit 3106, a MAC control information generation unit 3108, an RRC control information generation unit 3110, a data generation unit 3112, a control channel generation unit 3114, a shared channel generation unit 3116, a multiplexing unit 3118, a wireless transmission unit 3120, a wireless reception unit 3122, a separation unit 3124, an uplink data and CSI processing unit 3126, and a response signal and CSI processing unit 3128.

The configuration of the functional blocks of the wireless relay station 2802 according to the fourth embodiment is the same as the configuration of the functional blocks of the wireless relay station 2102 illustrated in FIG. 24. Each of the functional blocks of the wireless relay station 2802 illustrated in FIG. 31 has the same function as each of the functional blocks of the wireless relay station 2102 illustrated in FIG. 24, which is indicated by the reference numeral having the same last two numbers. Accordingly, the detailed description thereof will not be repeated.

In addition, the hardware configuration of the wireless relay station 2802 is the same as the hardware configuration of the wireless relay station 302 illustrated in FIG. 8. It may be possible to realize the function of each of the functional blocks of the wireless relay station 2802 using the hardware configuration which is the same as the hardware configuration of the wireless relay station 302 illustrated in FIG. 8. Accordingly, the detailed description thereof will not be repeated.

### 4-2-2. METHOD OF CONTROLLING DATA COMMUNICATION IN WIRELESS RELAY STATION 2802

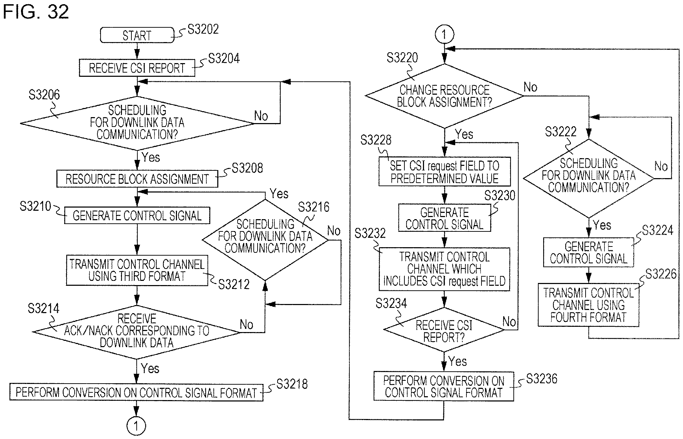

FIG. 32 is a flowchart illustrating a method of controlling data communication performed in the wireless relay station 2802. Hereinafter, the method of controlling data communication performed in the wireless relay station 2802 will be described with reference to FIG. 32.

Processes in steps S3202 to S3212 are the same as the processes in steps S2502 to S2512 illustrated in FIG. 25. Accordingly, the detailed description thereof will not be repeated.

Subsequently, in step S3214, when the response signal and CSI processing unit 3128 receives a response signal (positive acknowledgement (ACK) or negative acknowledgement (NACK) corresponding to the data signal which is transmitted from the wireless transmission unit 3120 in step 3112, the response signal and CSI processing unit 3128 supplies information, which indicates whether or not the response signal is normally received, to the scheduler 3102. The scheduler 3102 determines whether or not the response signal corresponding to the third control signal having the third format, which is transmitted to the wireless terminal 2804 in step S3112, is received from the wireless terminal 2804 based on the supplied information.

As a result, when the corresponding response signal is received, the process proceeds to step S3218. When the corresponding response signal is not received, the process proceeds to step S3216.

In step S3216, the scheduler 3102 receives the downlink channel state evaluation report from the uplink data and CSI processing unit 3126, and determines whether or not it is desired to perform scheduling on the downlink data communication based on the received channel state evaluation report. As a result, when it is determined that it is desired to perform scheduling, the process returns to step S3210. When it is determined that it is not desired to perform scheduling, process returns to step S3216.

Processes in steps S3218 to step S3232 are the same as the processes in steps S2514 to step S2528. Accordingly, the detailed description thereof will not be repeated.

In step S3234, the uplink data and CSI processing unit 3126 receives the report signal CSI which is received in the wireless reception unit 3122. The uplink data and CSI processing unit 3126 acquires a downlink channel state evaluation report (aperiodic report) by processing the received report signal CSI, and supplies the acquired information to the scheduler 3102.

The scheduler 3102 determines whether or not the report signal CSI corresponding to the control signal, which is transmitted to the wireless terminal 2804 in step S3232, is received from the wireless terminal 2804 based on the supplied information which indicates the downlink channel state evaluation report (aperiodic report). Here, the control signal, which is transmitted to the wireless terminal 2804 in step S3232, includes the first format or the second format, and the CSI report request (CSI request) field is set to a specific value which indicates a report signal CSI transmission request. As a result of determination, when the corresponding report signal CSI is received, the process proceeds to step S3236. When the corresponding report signal CSI is not received, the process returns to step S3228.

The process in step S3236 is the same as the process in step S2530. Accordingly, the detailed description thereof will not be repeated.

As described above, when the wireless relay station 2802 according to the fourth embodiment transmits the third control signal having the third format which includes the Resource Block Assignment (RBA) to the wireless terminal 2804 and then receives a response signal corresponding to the data signal that corresponds to the third control signal from the wireless terminal 2804, the wireless relay station 2802 converts the format of the control signal from the third format into the fourth format. Therefore, when the format of the control signal is converted from the third format to the fourth format, it may be possible to recognize that the transmitted third control signal is normally received in the wireless terminal 2804 and that the various communication parameters, such as the resource block assignment, is normally notified to the wireless terminal 2804, and thus it may be possible to further securely perform the conversion on the format of the control signal.

In addition, when the wireless relay station 2802 sets the CSI report request (CSI request) field included in the first format or the second format to the specific value which indicates the report signal CSI transmission request, transmits the control signal having the first format or the second format to the wireless terminal 2804, and then receives the report signal CSI corresponding to the transmitted control signal from the wireless terminal 2804, the wireless relay station 2802 converts the format of the control signal from the fourth format into the third format. Therefore, when the format of the control signal is converted from the fourth format into the third format, it may be possible to recognize that the transmitted control signal is normally received in the wireless terminal 2804 and the fact that it is desired to change the resource block assignment is normally notified to the wireless terminal 2804, and thus it may be possible to further securely perform the conversion on the format of the control signal.

### 4-3. WIRELESS TERMINAL 2804

Subsequently, the configuration of the wireless terminal 2804 and a method of controlling data communication which is performed in the wireless terminal 2804 will be described.

### 4-3-1. CONFIGURATION OF WIRELESS TERMINAL 2804

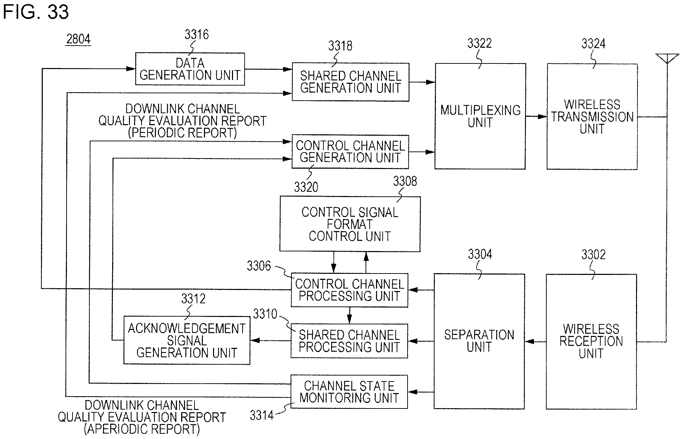

FIG. 33 is a functional block diagram illustrating the configuration of the wireless terminal 2804. As illustrated in FIG. 33, the wireless terminal 2804 includes a wireless reception unit 3302, a separation unit 3304, a control channel processing unit 3306, a control signal format control unit 3308, a shared channel processing unit 3310, a response signal generation unit 3312, a channel state monitoring unit 3314, a data generation unit 3316, a shared channel generation unit 3318, a control channel generation unit 3320, a multiplexing unit 3322, and a wireless transmission unit 3324.

The configuration of the functional blocks of the wireless terminal 2804 according to the fourth embodiment is the same as the configuration of the functional blocks of the wireless terminal 2104 illustrated in FIG. 26. Each of the functional blocks of the wireless terminal 2804 illustrated in FIG. 33 has the same function as each of the functional blocks of the wireless terminal 2104 illustrated in FIG. 26, which is indicated by the reference numeral having the same last two numbers. Accordingly, the detailed description thereof will not be repeated.

In addition, the hardware configuration of the wireless terminal 2804 is the same as the hardware configuration of the wireless terminal 304 illustrated in FIG. 11. It may be possible to realize the function of each of the functional blocks of the wireless terminal 2104 using a hardware configuration which is the same as the hardware configuration of the wireless terminal 304 illustrated in FIG. 11. Accordingly, the detailed description thereof will not be repeated.

### 4-3-2. METHOD OF CONTROLLING DATA COMMUNICATION IN WIRELESS TERMINAL 2804

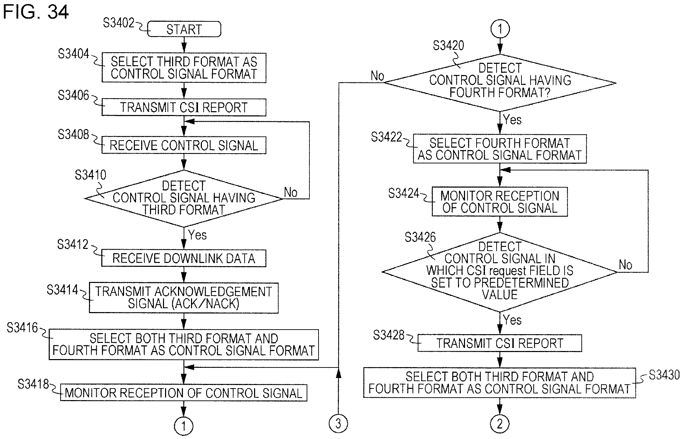

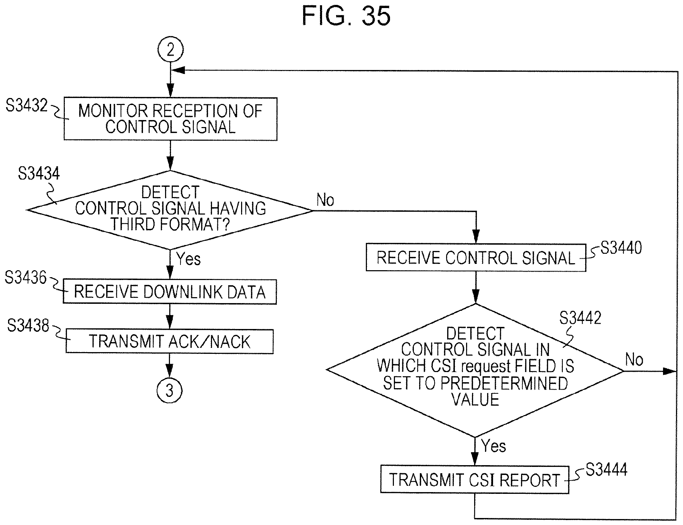

FIGs. 34 and 35 are flowcharts illustrating the method of controlling data communication performed in the wireless terminal 2804. Hereinafter, the method of controlling data communication performed in the wireless terminal 2804 will be described with reference to FIGs. 34 and 35.

Process in steps S3402 to S3414 are the same as the process in steps S2702 to S2714 illustrated in FIG. 27. Accordingly, the detailed description thereof will not be repeated.

In step S3416, the control signal format control unit 3308 selects both the third format illustrated in FIG. 21, which includes the Resource Block Assignment (RBA) field, and the fourth format illustrated in FIG. 22, which does not include the Resource Block Assignment (RBA) field, as the format of the control signal to be used when the control channel processing unit 3306 processes the control signal for scheduling the downlink data communication. The control signal format control unit 3308 designates both the third format and the fourth format as the format of the control signal for scheduling the downlink data communication with regard to the control channel processing unit 3306.

Subsequently, in step S3418, the wireless reception unit 3302 monitors whether or not the control signal for scheduling the downlink data communication is received from the wireless relay station 2802 using the PDCCH.

Subsequently, in step S3420, when the wireless reception unit 3302 receives the control signal for scheduling the downlink data communication, the control channel processing unit 3306 receives the received control signal from the wireless reception unit 3302 through the separation unit 3304. The control channel processing unit 3306 determines whether or not the received control signal is a control signal having the fourth format which is designated by the control signal format control unit 3308. As a result, when the control signal having the fourth format is detected, the process proceeds to step S3422. In contrast, when the control signal having the fourth format is not detected, the process returns to step S3418.

Also, the process in steps S3416 to S3420 corresponds to the process performed by the wireless terminal 2804 during the period D in FIG. 28.

The process in steps S3422 to S3428 is the same as the process in steps S2716 to S2722. Accordingly, the detailed description thereof will not be repeated. Also, in step S3422, the control format control unit 3308 recognizes that the wireless relay station 2802 normally receives the response signal which is transmitted from the wireless transmission unit 3324 in step S3414 based on a fact that the control channel processing unit 3306 detects the control signal having the fourth format.

In step S3430, the control signal format control unit 3308 selects both the third format, which includes the Resource Block Assignment (RBA) field, and the fourth format, which does not include the Resource Block Assignment (RBA) field, as the format of the control signal to be used when the control channel processing unit 3306 processes the control signal for scheduling the downlink data communication. The control signal format control unit 3308 designates both the third format and the fourth format as the format of the control signal for scheduling the downlink data communication with regard to the control channel processing unit 3306.

Subsequently, in step S3432, the wireless reception unit 3302 monitors whether or not the control signal for scheduling the downlink data communication is received from the wireless relay station 2802 using the PDCCH.

Subsequently, in step S3434, when the wireless reception unit 3302 receives the control signal for scheduling the downlink data communication, the control channel processing unit 3306 receives the received control signal from the wireless reception unit 3302 through the separation unit 3304. The control channel processing unit 3306 determines whether or not the received control signal is the control signal having the third format which is designated by the control signal format control unit 3308. As a result, when the control signal having the third format is detected, the process proceeds to step S3436. In contrast, when the control signal having the third format is not detected, the process proceeds to step S3440.

In step S3436, the control channel processing unit 3306 processes the received control signal using the third format which is designated by the control signal format control unit 3308, and acquires the various communication parameters which are included in the control signal. The control channel processing unit 3306 acquires information of the frequency band (resource block) which is assigned to the wireless terminal 2804 based on the value of the acquired Resource Block Assignment (RBA) field.

In contrast, the wireless reception unit 3302 receives the data signal corresponding to the control signal, which is received in step S3434, from the wireless relay station 2802 using the PDSCH. The shared channel processing unit 3310 receives the received data signal through the separation unit 3304, and acquires data by performing a demodulation process on the received data signal. The shared channel processing unit 3310 supplies information, which indicates whether or not the data is normally acquired, to the response signal generation unit 3314.

Subsequently, in step S3438, the response signal generation unit 3312 determines whether or not the data is normally acquired based on the information which is supplied from the shared channel processing unit 3310, and generates a response signal which indicates that the data is normally acquired. When the data is normally acquired, the response signal generation unit 3312 generates a positive acknowledgement (ACK) signal. In contrast, when the data is not normally acquired, the response signal generation unit 3312 generates a negative acknowledgement (NACK) signal.

The control channel generation unit 3320 receives the response signal (positive response signal or negative response signal) from the response signal generation unit 3312. The control channel generation unit 3320 converts the received response signal into a signal having a format which is suitable for the data format of the PUCCH, and puts the signal in a state which may be transmitted using the PUCCH. The wireless transmission unit 3324 converts the output signal of the control channel generation unit 3320, which is received through the multiplexing unit 3322, into a wireless signal of the frequency band corresponding to PUCCH, and transmits the wireless signal to the wireless relay station 2802 through the antenna.

In contrast, in step S3440, the wireless reception unit 3302 monitors whether or not the control signal for scheduling the uplink data communication (the control signal having the first format or the second format) is received from the wireless relay station 2802 using the PDCCH.

Subsequently, in step S3442, when the wireless reception unit 3302 receives the control signal for scheduling the uplink data communication, the control channel processing unit 3306 receives the received control signal from the wireless reception unit 3302 through the separation unit 3304. The control channel processing unit 3306 determines whether or not the CSI report request (CSI request) field is the specific value which indicates the report signal CSI transmission request in the format of the received control signal (first format or the second format). As a result, when the control signal, in which the CSI transmission request field is set to the specific value, is detected, the process proceeds to step S3444. In contrast, when the control signal, in which the CSI transmission request field is set to the specific value, is not detected, the process returns to step S3432.

Subsequently, in step S3444, the channel state monitoring unit 3314 performs downlink channel state evaluation based on the reference signal for evaluating the state of the downlink channel in response to a fact that the CSI transmission request field is set to the above-described specific value in step S3442, and prepares a downlink channel state evaluation report (aperiodic report).

The shared channel generation unit 3318 converts a signal, which indicates the downlink channel state evaluation report (aperiodic report) and which is supplied from the channel state monitoring unit 3314, into a signal having a suitable format for the data format of the PUSCH, and puts the signal into a state which may be transmitted using the PUSCH. The wireless transmission unit 3324 converts the output signal of the shared channel generation unit 3318, which is received through the multiplexing unit 3322, into a wireless signal of the frequency band corresponding to the PUSCH, and transmits the wireless signal to the wireless relay station 2802 through the antenna. Thereafter, the process returns to step S3432.

Also, the process in steps S3430 to S3444 corresponds to the process performed by the wireless terminal 2804 during the period E illustrated in FIG. 29. In addition, the process in step S3418 (where, a route from step S3438) to S3420 corresponds to the process performed by the wireless terminal 2804 during the period E illustrated in FIG. 29.

As described above, the wireless terminal 2804 according to the fourth embodiment does not convert the format of the control signal into the fourth format after receiving the first control signal having the third format, which includes the Resource Block Assignment (RBA), from the wireless relay station 2802, and selects both the third format and the fourth format as the format of the control signal. Therefore, when the format of the control signal is converted from the third format into the fourth format, it may be possible to appropriately receive the third control signal even when the response signal corresponding to the data signal that corresponds to the third control signal is not normally received in the wireless relay station 2802 and when the wireless relay station 2802 transmits the third control signal having the third format again, and thus it may be possible to further securely perform the conversion on the format of the control signal.

In addition, the wireless terminal 2804 receives the control signal having the first format or the second format from the wireless relay station 2802 after setting the CSI transmission request (CSI request) field of the first format or the second format to the specific value which indicates the report signal CSI transmission request, and then selects both the third format and the fourth format as the format of the control signal without converting the format of the control signal into the third format. Therefore, if the format of the control signal is converted from the fourth format to the third format, it may be possible to appropriately receive the fourth control signal even when the report signal CSI, which is transmitted in correspondence with the received control signal, is not normally received in the wireless relay station 2802 and the wireless relay station 2802 transmits the fourth control signal having the fourth format again, and thus it may be possible to further securely perform the conversion on the format of the control signal.

### 5. OTHER EMBODIMENTS AND MODIFICATION EXAMPLE

(1) In the first and second embodiments, each of the conversion of the format of the control signal from the first format into the second format and the conversion of the format of the control signal from the second format into the first format may be explicitly instructed using an upper layer signaling, for example, the control signal of the data link layer (layer 2), such as MAC signaling or RRC signaling. In addition, the conversion of the format of the control signal may be periodically performed.
(2) In the third and fourth embodiments, each of the conversion of the format of the control signal from the third format into the fourth format and the conversion of the format of the control signal from the fourth format into the third format may be explicitly instructed using an upper layer signaling, for example, the control signal of the data link layer (layer 2), such as MAC signaling or RRC signaling. In addition, the conversion of the format of the control signal may be periodically performed. In addition, the conversion of the format of the control signal may be periodically performed.
(3) The wireless relay station may provide notification whether or not to perform the method of controlling data communication (for example, the conversion of the format of the control signal) according to the first to fourth embodiments to the wireless terminal in advance using the upper layer signaling (for example, RRC signaling).
   The wireless relay station may provide notification whether or not to perform, for example, the conversion of the format of the control signal according to the first to fourth embodiments to the wireless terminal using the upper layer signaling (for example, RRC signaling).
(4) In each of the first to fourth embodiments, when the wireless relay station detects the fluctuation speed of a communication channel state or the movement speed of the wireless terminal and a value of the detected fluctuation speed or the movement speed is less than a predetermined threshold, the method of controlling data communication (for example, the conversion of the format of the control signal) according to the first to fourth embodiments may be executed.
   When the fluctuation speed of the communication channel is high or when the movement speed of the wireless terminal is high, the number of times that execution of the frequency band assignment is requested is large, or when the frequency band assignment is not changed, the variation in communication characteristic is large. Therefore, it is not preferable to use the control signal having the second format or the fourth format which does not use the Resource Block Assignment (RBA).
   In contrast, when the fluctuation speed of the communication channel is low or when the movement speed of the wireless terminal is slow, a case in which it is determined that it is not desired to change the frequency band assignment increases. Therefore, in such a case, it may be possible to selectively perform the method of controlling data communication (for example, the conversion of the format of the control signal) according to the first to fourth embodiments.
(5)In the first and second embodiments, during the period in which the second format is selected as the format of the control signal (for example, the period E of FIG. 13 or the period D of FIG. 14), the resource block (frequency band assignment) is not changed. Therefore, the wireless terminal does not enable the reference signal SRS, which is periodically transmitted, to be used to evaluate the uplink channel state in the entire system band, and enables the reference signal SRS to be used to evaluate the channel state only in a part of the band which includes a frequency band previously assigned by the first control signal having the first format.
   Accordingly, since it is possible for the wireless terminal to concentrate transmission power of the reference signal SRS on only the part of band, it may be possible to increase the transmission power of the reference signal SRS in the wireless relay station. In addition, since the wireless relay station does not scan a wide band in the system band, it may be possible to improve following property for time fluctuation of the communication channel state.
(6) In the third and fourth embodiments, during the period in which the fourth format is selected as the format of the control signal (for example, the period E of FIG. 28 or the period D of FIG. 29), the resource block (frequency band assignment) is not changed. Therefore, the wireless terminal does not enable the report signal CSI, which is periodically transmitted, to be used to report the downlink channel state evaluation in the entire system band, and enables to be used to report the channel state evaluation in only a part of the band which includes a frequency band previously assigned by the third control signal having the third format.
   Accordingly, it may be possible to reduce the report signal CSI overhead (data size), and it may be possible to improve following property for the time fluctuation of the communication channel state in such a way that the wireless terminal repeatedly reports the channel state evaluation in the part of the band.
   (7) In each of the first to fourth embodiments, frequency band assignment (resource block assignment) may be a distributed type.

Accordingly, when the selectivity of the frequency of the communication channel is strong, the format of the control signal (second format or fourth format) which does not include Resource Block Assignment (RBA) is used. Therefore, even when the frequency band assignment is not changed, it may be possible to perform data communication in which the change in the communication property is relatively small.

Hereinabove, although the wireless communication system, the wireless relay station, the wireless terminal, and the method of controlling data communication have been described as the examples of the embodiments of the present invention, the present invention is not limited to the embodiments disclosed in detail, and various modifications and changes are possible without departing from the claims. The technologies disclosed in the respective embodiments may be appropriately combined with each other without a contradiction therebetween.

### Reference Signs List

- 300: WIRELESS COMMUNICATION SYSTEM
- 302: WIRELESS RELAY STATION (FIRST WIRELESS STATION)
- 304: WIRELESS TERMINAL (SECOND WIRELESS STATION)
- 702: SCHEDULER
- 704: CONTROL SIGNAL FORMAT CONTROL UNIT
- 706: CONTROL SIGNAL GENERATION UNIT
- 708: MAC CONTROL INFORMATION GENERATION UNIT
- 710: RRC CONTROL INFORMATION GENERATION UNIT
- 712: DATA GENERATION UNIT
- 714: CONTROL CHANNEL GENERATION UNIT
- 716: SHARED CHANNEL GENERATION UNIT
- 718: MULTIPLEXING UNIT
- 720: WIRELESS TRANSMISSION UNIT
- 722: WIRELESS RECEPTION UNIT
- 724: SEPARATION UNIT
- 726: UPLINK DATA PROCESSING UNIT
- 728: CHANNEL STATE MONITORING UNIT
- 802: PROCESSOR
- 804: MEMORY
- 806: STORAGE DEVICE
- 808: WIRELESS COMMUNICATION INTERFACE
- 810: BUS
- 1002: WIRELESS RECEPTION UNIT
- 1004: SEPARATION UNIT
- 1006: CONTROL CHANNEL PROCESSING UNIT
- 1008: CONTROL SIGNAL FORMAT CONTROL UNIT
- 1010: SHARED CHANNEL PROCESSING UNIT
- 1012: DATA GENERATION UNIT
- 1014: SRS GENERATION UNIT
- 1016: SHARED CHANNEL GENERATION UNIT
- 1020: MULTIPLEXING UNIT
- 1022: WIRELESS TRANSMISSION UNIT
- 1102: PROCESSOR
- 1104: MEMORY
- 1106: STORAGE DEVICE
- 1108: WIRELESS COMMUNICATION INTERFACE
- 1110: BUS
- 1602: SCHEDULER
- 1604: CONTROL SIGNAL FORMAT CONTROL UNIT
- 1606: CONTROL SIGNAL GENERATION UNIT
- 1608: MAC CONTROL INFORMATION GENERATION UNIT
- 1610: RRC CONTROL INFORMATION GENERATION UNIT
- 1612: USER DATA GENERATION UNIT
- 1614: CONTROL CHANNEL GENERATION UNIT
- 1616: SHARED CHANNEL GENERATION UNIT
- 1618: MULTIPLEXING UNIT
- 1620: WIRELESS TRANSMISSION UNIT
- 1622: WIRELESS RECEPTION UNIT

- 1624: SEPARATION UNIT
- 1626: UPLINK DATA PROCESSING UNIT
- 1628: CHANNEL STATE MONITORING UNIT
- 1802: WIRELESS RECEPTION UNIT
- 1804: SEPARATION UNIT
- 1806: CONTROL CHANNEL PROCESSING UNIT
- 1808: CONTROL SIGNAL FORMAT CONTROL UNIT
- 1810: SHARED CHANNEL PROCESSING UNIT
- 1812: DATA GENERATION UNIT
- 1814: SRS GENERATION UNIT
- 1816: SHARED CHANNEL GENERATION UNIT
- 1820: MULTIPLEXING UNIT
- 1822: WIRELESS TRANSMISSION UNIT
- 2102: WIRELESS RELAY STATION (FIRST WIRELESS STATION)
- 2104: WIRELESS TERMINAL (SECOND WIRELESS STATION)
- 2402: SCHEDULER
- 2404: CONTROL SIGNAL FORMAT CONTROL UNIT
- 2406: CONTROL SIGNAL GENERATION UNIT
- 2408: MAC CONTROL INFORMATION GENERATION UNIT
- 2410: RRC CONTROL INFORMATION GENERATION UNIT
- 2412: DATA GENERATION UNIT
- 2414: CONTROL CHANNEL GENERATION UNIT
- 2416: SHARED CHANNEL GENERATION UNIT
- 2418: MULTIPLEXING UNIT
- 2420: WIRELESS TRANSMISSION UNIT
- 2422: WIRELESS RECEPTION UNIT
- 2424: SEPARATION UNIT
- 2426: UPLINK DATA AND CSI PROCESSING UNIT
- 2428: RESPONSE SIGNAL AND CSI PROCESSING UNIT
- 2602: WIRELESS RECEPTION UNIT
- 2604: SEPARATION UNIT
- 2606: CONTROL CHANNEL PROCESSING UNIT
- 2608: CONTROL SIGNAL FORMAT CONTROL UNIT
- 2610: SHARED CHANNEL PROCESSING UNIT
- 2612: RESPONSE SIGNAL GENERATION UNIT
- 2614: CHANNEL STATE MONITORING UNIT
- 2616: DATA GENERATION UNIT
- 2618: SHARED CHANNEL GENERATION UNIT
- 2620: CONTROL CHANNEL GENERATION UNIT
- 2622: MULTIPLEXING UNIT
- 2624: WIRELESS TRANSMISSION UNIT
- 3102: SCHEDULER
- 3104: CONTROL SIGNAL FORMAT CONTROL UNIT
- 3106: CONTROL SIGNAL GENERATION UNIT
- 3108: MAC CONTROL INFORMATION GENERATION UNIT
- 3110: RRC CONTROL INFORMATION GENERATION UNIT
- 3112: DATA GENERATION UNIT
- 3114: CONTROL CHANNEL GENERATION UNIT
- 3116: SHARED CHANNEL GENERATION UNIT
- 3118: MULTIPLEXING UNIT
- 3120: WIRELESS TRANSMISSION UNIT
- 3122: WIRELESS RECEPTION UNIT
- 3124: SEPARATION UNIT
- 3126: UPLINK DATA AND CSI PROCESSING UNIT
- 3128: RESPONSE SIGNAL AND CSI PROCESSING UNIT
- 3302: WIRELESS RECEPTION UNIT
- 3304: SEPARATION UNIT
- 3306: CONTROL CHANNEL PROCESSING UNIT
- 3308: CONTROL SIGNAL FORMAT CONTROL UNIT
- 3310: SHARED CHANNEL PROCESSING UNIT
- 3312: RESPONSE SIGNAL GENERATION UNIT
- 3314: CHANNEL STATE MONITORING UNIT
- 3316: DATA GENERATION UNIT
- 3318: SHARED CHANNEL GENERATION UNIT
- 3320: CONTROL CHANNEL GENERATION UNIT
- 3322: MULTIPLEXING UNIT
- 3324: WIRELESS TRANSMISSION UNIT

## Claims

1. A communication system (300, 1300, 2100, 2800) comprising:
a first wireless station (302, 1302, 2102, 2802); and
a second wireless station (304, 1304, 2104, 2804) that communicates with the first wireless station (302, 1302, 2102, 2802),
wherein, for uplink communication, the first wireless station (302, 1302, 2102, 2802) is configured to:
transmit a first control signal, which is a control signal for controlling communication from the second wireless station (304, 1304, 2104, 2804) to the first wireless station (302, 1302, 2102, 2802) and which includes a plurality of parameters of a communication channel from the second wireless station (304, 1304, 2104, 2804) to the first wireless station (302, 1302, 2102, 2802), to the second wireless station (304, 1304, 2104, 2804), and
transmit a second control signal, which is a control signal for controlling the communication from the second wireless station (304, 1304, 2104, 2804) to the first wireless station (302, 1302, 2102, 2802), to the second wireless station (304, 1304, 2104, 2804) after transmitting the first control signal, wherein the second control signal includes fewer parameters than the first control signal due to an omission of a parameter from among the plurality of parameters that were included in the first control signal, in the second control signal, wherein, for the uplink communication, the second wireless station (304, 1304, 2104, 2804) is configured to:
transmit a first data signal to the first wireless station (302, 1302, 2102, 2802) in response to reception of the first control signal, based on the plurality of parameters which are included in the first control signal, and
transmit a second data signal to the first wireless station (302, 1302, 2102, 2802) in response to reception of the second control signal, based on parameters that are included in the second control signal and the parameter that is included in the first control signal that corresponds to the parameter omitted from the second control signal, and
wherein the first wireless station (302, 1302, 2102, 2802) is configured to transmit the second control signal to the second wireless station (304, 1304, 2104, 2804) after the first data signal corresponding to the first control signal is received from the second wireless station (304, 1304, 2104, 2804).

2. The communication system (300, 1300, 2100, 2800) according to Claim 1,
wherein the first wireless station (302, 1302, 2102, 2802) is configured to transmit a request signal for requesting transmission of a sounding reference signal in order to evaluate a state of the communication channel to the second wireless station (304, 1304, 2104, 2804) when setting of the communication channel is changed, and to transmit the first control signal which includes the plurality of parameters to the second wireless station (304, 1304, 2104, 2804) after the request signal is transmitted.

3. The communication system (300, 1300, 2100, 2800) according to Claim 2,
wherein the second wireless station (304, 1304, 2104, 2804) is configured to transmit the sounding reference signal to the first wireless station (302, 1302, 2102, 2802) in response to reception of the request signal, and
wherein the first wireless station (302, 1302, 2102, 2802) is configured to transmit the first control signal which includes the plurality of parameters to the second wireless station (304, 1304, 2104, 2804) after the sounding reference signal corresponding to the request signal is received from the second wireless station (304, 1304, 2104, 2804).

4. A first wireless station (302, 1302, 2102, 2802) for use in uplink communication in a communication system (300, 1300, 2100, 2800), the first wireless station (302, 1302, 2102, 2802) comprising:
a management unit (702, 1602, 2402, 3102) configured to manage communication from a second wireless station (304, 1304, 2104, 2804) to the first wireless station (302, 1302, 2102, 2802);
a control signal generation unit (706, 1606, 2406, 3106) configured to generate a first control signal which is for controlling the communication from the second wireless station (304, 1304, 2104, 2804) to the first wireless station (302, 1302, 2102, 2802) and which includes a plurality of parameters of a communication channel from the second wireless station (304, 1304, 2104, 2804) to the first wireless station (302, 1302, 2102, 2802), based on an instruction from the management unit (702, 1602, 2402, 3102); and
a wireless transmission unit (720, 1620, 2420, 3120) configured to transmit the first control signal to the second wireless station (304, 1304, 2104, 2804),
wherein the control signal generation unit (706, 1606, 2406, 3106) is configured to generate a second control signal after the wireless transmission unit (720, 1620, 2420, 3120) transmits the first control signal, wherein the second control signal includes fewer parameters than the first control signal due to an omission of a parameter from among the plurality of parameters that were included in the first control signal, in the second control signal,
wherein the wireless transmission unit (720, 1620, 2420, 3120) is configured to transmit the second control signal to the second wireless station (304, 1304, 2104, 2804) after a first data signal corresponding to the first control signal is received from the second wireless station (304, 1304, 2104, 2804), and
wherein the first wireless station (302, 1302, 2102, 2802) is configured to receive a second data signal, based on parameters that are included in the second control signal and the parameter that is included in the first control signal that corresponds to the parameter omitted from the second control signal, after the second control signal has been transmitted to the second wireless station (304, 1304, 2104, 2804).

5. A second wireless station (304, 1304, 2104, 2804) for use in uplink communication in a communication system (300, 1300, 2100, 2800), the second wireless station (304, 1304, 2104, 2804), comprising:
a wireless reception unit (1002, 1802, 2602, 3302) configured to receive a first control signal, which is for controlling communication from the second wireless station (304, 1304, 2104, 2804) to a first wireless station (302, 1302, 2102, 2802) and which includes a plurality of parameters of a communication channel from the second wireless station (304, 1304, 2104, 2804) to the first wireless station (302, 1302, 2102, 2802), from the first wireless station (302, 1302, 2102, 2802);
a control signal processing unit (1006, 1806, 2624, 3306) configured to process the first control signal and detect the plurality of parameters which are included in the first control signal;
a data signal generation unit (1012, 1812, 2616, 3316) configured to generate a first data signal which is transmitted to the first wireless station (302, 1302, 2102, 2802) in response to the reception of the first control signal; and
a wireless transmission unit (1022, 1822, 2624, 3324) configured to transmit the first data signal to the first wireless station (302, 1302, 2102, 2802) based on the detected plurality of parameters which are included in the first control signal,
wherein the wireless reception unit (1002, 1802, 2602, 3302) is configured to receive a second control signal which is for controlling communication from the second wireless station (304, 1304, 2104, 2804) to the first wireless station (302, 1302, 2102, 2802), from the first wireless station (302, 1302, 2102, 2802) after the first data signal is transmitted, wherein the second control signal includes fewer parameters than the first control signal due to an omission of a parameter from among the plurality of parameters that were included in the first control signal, in the second control signal,
wherein the data signal generation unit (1012, 1812, 2616, 3316) is configured to generate a second data signal which is transmitted to the first wireless station (302, 1302, 2102, 2802) in response to the reception of the second control signal,
wherein the wireless transmission unit (1022, 1822, 2624, 3324) is configured to transmit the second data signal to the first wireless station (302, 1302, 2102, 2802) based on parameters included in the second control signal and the parameter that is included in the first control signal that correspond to the parameter omitted from the second control signal.

6. A communication control method for controlling uplink communication between a first wireless station (302, 1302, 2102, 2802) and a second wireless station (304, 1304, 2104, 2804), the communication control method comprising:
transmitting from the first wireless station (302, 1302, 2102, 2802) to the second wireless station (304, 1304, 2104, 2804) a first control signal, which is a control signal for controlling communication from the second wireless station (304, 1304, 2104, 2804) to the first wireless station (302, 1302, 2102, 2802) and which includes a plurality of parameters of a communication channel from the second wireless station (304, 1304, 2104, 2804) to the first wireless station (302, 1302, 2102, 2802),
transmitting from the second wireless station (304, 1304, 2104, 2804) to the first wireless station (302, 1302, 2102, 2802) a first data signal in response to reception of the first control signal based on the plurality of parameters which are included in the first control signal,
transmitting from the first wireless station (302, 1302, 2102, 2802) to the second wireless station (304, 1304, 2104, 2804), after transmitting the first control signal, a second control signal, wherein the second control signal is a control signal for controlling the communication from the second wireless station (304, 1304, 2104, 2804) to the first wireless station (302, 1302, 2102, 2802), and wherein the second control signal includes fewer parameters than the first control signal due to an omission of a parameter from among the plurality of parameters that were included in the first control signal, in the second control signal, and
transmitting from the second wireless station (304, 1304, 2104, 2804) to the first wireless station (302, 1302, 2102, 2802) a second data signal in response to reception of the second control signal based on parameters that are included in the second control signal and the parameter that is included in the first control signal that corresponds to the parameter omitted from the second control signal,
wherein the first wireless station (302, 1302, 2102, 2802) transmits the second control signal to the second wireless station (304, 1304, 2104, 2804) after the first data signal corresponding to the first control signal is received from the second wireless station (304, 1304, 2104, 2804).

7. A communication control method for controlling downlink communication between a first wireless station (302, 1302, 2102, 2802) and a second wireless station (304, 1304, 2104, 2804), the communication control method comprising:
transmitting a first control signal, which is a control signal for controlling communication from the first wireless station (302, 1302, 2102, 2802) to the second wireless station (304, 1304, 2104, 2804) and which includes a plurality of parameters of a communication channel from the first wireless station (302, 1302, 2102, 2802) to the second wireless station (304, 1304, 2104, 2804), to the second wireless station (304, 1304, 2104, 2804) by using the first wireless station (302, 1302, 2102, 2802), and then transmitting a first data signal from the first wireless station (302, 1302, 2102, 2802) to the second wireless station (304, 1304, 2104, 2804) based on the plurality of parameters included in the first control signal;
receiving the first data signal from the first wireless station (302, 1302, 2102, 2802) following reception of the first control signal, the first data signal being based on the plurality of parameters included in the first control signal, by using the second wireless station (304, 1304, 2104, 2804);
transmitting a second control signal, which is a control signal for controlling the communication from the first wireless station (302, 1302, 2102, 2802) to the second wireless station (304, 1304, 2104, 2804), to the second wireless station (304, 1304, 2104, 2804) by using the first wireless station (302, 1302, 2102, 2802) after transmitting the first control signal, and then transmitting a second data signal from the first wireless station (302, 1302, 2102, 2802) to the second wireless station (304, 1304, 2104, 2804), wherein the second control signal includes fewer parameters than the first control signal due to an omission of a parameter from among the plurality of parameters that were included in the first control signal, in the second control signal, and
wherein the second data signal is based on parameters that are included in the second control signal and the parameter that is included in the first control signal that corresponds to the parameter omitted from the second control signal; and
receiving by using the second wireless station (304, 1304, 2104, 2804) the second data signal from the first wireless station (302, 1302, 2102, 2802) following reception of the second control signal, the second data signal being based on the parameters that are included in the second control signal and the parameter that is included in the first control signal that corresponds to the parameter omitted from the second control signal,
the communication method further comprising transmitting a response signal corresponding to the first data signal to the first wireless station (302, 1302, 2102, 2802) in response to the reception of the first data signal, by using the second wireless station (304, 1304, 2104, 2804), and
transmitting the second control signal to the second wireless station (304, 1304, 2104, 2804) by using the first wireless station (302, 1302, 2102, 2802) after the response signal corresponding to the first data signal that corresponds to the first control signal is received from the second wireless station (304, 1304, 2104, 2804).

8. The communication control method according to Claim 7, further comprising:
transmitting a request signal for requesting transmission of a channel state information signal indicative of a communication channel state evaluation result to the second wireless station (304, 1304, 2104, 2804) by using the first wireless station (302, 1302, 2102, 2802) when setting of the communication channel is changed; and
transmitting the first control signal which includes the plurality of parameters to the second wireless station (304, 1304, 2104, 2804) by using the first wireless station (302, 1302, 2102, 2802) after the request signal is transmitted.

9. The communication control method according to Claim 8, further comprising:
transmitting the channel state information signal to the first wireless station (302, 1302, 2102, 2802) in response to reception of the request signal by using the second wireless station (304, 1304, 2104, 2804), and
transmitting the first control signal to the second wireless station (304, 1304, 2104, 2804) by using the first wireless station (302, 1302, 2102, 2802) after the channel state information signal corresponding to the request signal is received from the second wireless station (304, 1304, 2104, 2804).

10. A communication system (300, 1300, 2100, 2800) comprising:
a first wireless station (302, 1302, 2102, 2802); and
a second wireless station (304, 1304, 2104, 2804) that communicates with the first wireless station (302, 1302, 2102, 2802),
wherein, for downlink communication, the first wireless station (302, 1302, 2102, 2802) is configured to:
transmit a first control signal, which is a control signal for controlling communication from the first wireless station (302, 1302, 2102, 2802) to the second wireless station (304, 1304, 2104, 2804) and which includes a plurality of parameters of a communication channel from the first wireless station (302, 1302, 2102, 2802) to the second wireless station (304, 1304, 2104, 2804), to the second wireless station (304, 1304, 2104, 2804), and then transmit a first data signal to the second wireless station (304, 1304, 2104, 2804) based on the plurality of parameters included in the first control signal; and
transmit a second control signal, which is a control signal for controlling the communication from the first wireless station (302, 1302, 2102, 2802) to the second wireless station (304, 1304, 2104, 2804), to the second wireless station (304, 1304, 2104, 2804) after transmitting the first control signal, and then transmit a second data signal from the first wireless station (302, 1302, 2102, 2802) to the second wireless station (304, 1304, 2104, 2804),
wherein the second control signal includes fewer parameters than the first control signal due to an omission of a parameter from among the plurality of parameters that were included in the first control signal, in the second control signal, and
wherein the second data signal is based on the parameters that are included in the second control signal and the parameter that is included in the first control signal that corresponds to the parameter omitted from the second control signal;
wherein, for the downlink communication, the second wireless station (304, 1304, 2104, 2804) is configured to:
receive the first data signal from the first wireless station (302, 1302, 2102, 2802) following reception of the first control signal, based on the plurality of parameters included in the first control signal; and
receive the second data signal from the first wireless station (302, 1302, 2102, 2802) following reception of the second control signal, based on the parameters included in the second control signal and the parameter that is included in the first control signal that corresponds to the parameter omitted from the second control signal,
the second wireless station (304, 1304, 2104, 2804) being further configured to transmit a response signal corresponding to the first data signal to the first wireless station (302, 1302, 2102, 2802) in response to the reception of the first data signal,
the first wireless station (302, 1302, 2102, 2802) being further configured to transmit the second control signal to the second wireless station (304, 1304, 2104, 2804) after the response signal corresponding to the first data signal that corresponds to the first control signal is received from the second wireless station (304, 1304, 2104, 2804).

11. A first wireless station (302, 1302, 2102, 2802) for use in downlink communication in a communication system (300, 1300, 2100, 2800), the first wireless station (302, 1302, 2102, 2802) comprising:
a management unit (702, 1602, 2402, 3102) configured to manage communication to a second wireless station (304, 1304, 2104, 2804) from the first wireless station (302, 1302, 2102, 2802);
a control signal generation unit (706, 1606, 2406, 3106) configured to generate a first control signal, which is for controlling communication to the second wireless station (304, 1304, 2104, 2804) from the first wireless station (302, 1302, 2102, 2802) and which includes a plurality of parameters of a communication channel to the second wireless station (304, 1304, 2104, 2804) from the first wireless station (302, 1302, 2102, 2802), based on an instruction from the management unit (702, 1602, 2402, 3102);
a data signal generation unit (712, 1612, 2412, 3112) configured to generate a first data signal which is transmitted to the second wireless station (304, 1304, 2104, 2804) after the first control signal; and
a wireless transmission unit (720, 1620, 2420, 3120) configured to transmit the first control signal and the first data signal to the second wireless station (304, 1304, 2104, 2804),
wherein the first wireless station (302, 1302, 2102, 2802) is configured to:
transmit the first control signal, which is a control signal for controlling the communication from the first wireless station (302, 1302, 2102, 2802) to the second wireless station (304, 1304, 2104, 2804) and which includes the plurality of parameters of the communication channel from the first wireless station (302, 1302, 2102, 2802) to the second wireless station (304, 1304, 2104, 2804), to the second wireless station (304, 1304, 2104, 2804) by using the first wireless station (302, 1302, 2102, 2802), and then transmit the first data signal to the second wireless station (304, 1304, 2104, 2804) based on the plurality of parameters in the first control signal; and
transmit a second control signal, which is a control signal for controlling the communication from the first wireless station (302, 1302, 2102, 2802) to the second wireless station (304, 1304, 2104, 2804), to the second wireless station (304, 1304, 2104, 2804) by using the first wireless station (302, 1302, 2102, 2802) after transmitting the first control signal, and then transmit a second data signal from the first wireless station (302, 1302, 2102, 2802) to the second wireless station (304, 1304, 2104, 2804),
wherein the second control signal includes fewer parameters than the first control signal due to an omission of a parameter from among the plurality of parameters that were included in the first control signal, in the second control signal, and
wherein the second data signal is based on the parameters that are included in the second control signal and the parameter that is included in the first control signal that corresponds to the parameter omitted from the second control signal;
the first wireless station (302, 1302, 2102, 2802) being further configured to transmit the second control signal to the second wireless station (304, 1304, 2104, 2804) after receiving a response signal corresponding to the first data signal that corresponds to the first control signal, from the second wireless station (304, 1304, 2104, 2804).

12. A second wireless station (304, 1304, 2104, 2804) for use in downlink communication in a communication system (300, 1300, 2100, 2800), the second wireless station (304, 1304, 2104, 2804), comprising:
a wireless reception unit (1002, 1802, 2602, 3302) configured to receive a first control signal, which is a control signal for controlling communication to the second wireless station (304, 1304, 2104, 2804) from a first wireless station (302, 1302, 2102, 2802) and which includes a plurality of parameters of a communication channel to the second wireless station (304, 1304, 2104, 2804) from the first wireless station (302, 1302, 2102, 2802), from the first wireless station (302, 1302, 2102, 2802);
a control signal processing unit (1006, 1806, 2624, 3306) configured to process the first control signal and detect the plurality of parameters included in the first control signal;
a response signal generation unit configured to generate a response signal corresponding to a first data signal, the response signal being transmitted to the first wireless station (302, 1302, 2102, 2802) in response to the reception of the first data signal; and
a wireless transmission unit (1022, 1822, 2624, 3324) configured to transmit the response signal corresponding to the first data signal to the first wireless station (302, 1302, 2102, 2802),
wherein the second wireless station (304, 1304, 2104, 2804) is configured to receive the first data signal from the first wireless station (302, 1302, 2102, 2802) following reception of the first control signal, based on the plurality of parameters included in the first control signal; and
to receive a second data signal from the first wireless station (302, 1302, 2102, 2802) following reception of a second control signal, wherein the second control signal includes fewer parameters than the first control signal due to an omission of a parameter from among the plurality of parameters that were included in the first control signal, in the second control signal,
wherein the second data signal is based on parameters that are included in the second control signal and the parameter that is included in the first control signal that corresponds to the parameter omitted from the second control signal,
the second wireless station (304, 1304, 2104, 2804) being further configured to receive the second control signal from the first wireless station (302, 1302, 2102, 2802) after the response signal corresponding to the first data signal that corresponds to the first control signal is sent by the second wireless station (304, 1304, 2104, 2804).

## Patentansprüche

1. Kommunikationssystem (300, 1300, 2100, 2800) umfassend:
eine erste drahtlose Station (302, 1302, 2102, 2802); und
eine zweite drahtlose Station (304, 1304, 2104, 2804), die mit der ersten drahtlosen Station (302, 1302, 2102, 2802) kommuniziert,
wobei die erste drahtlose Station (302, 1302, 2102, 2802) für die Uplink-Kommunikation konfiguriert ist zum:
Senden eines ersten Steuersignals, das ein Steuersignal für die Steuerung der Kommunikation von der zweiten drahtlosen Station (304, 1304, 2104, 2804) an die erste drahtlose Station (302, 1302, 2102, 2802) ist, und das mehrere Parameter eines Kommunikationskanals von der zweiten drahtlosen Station (304, 1304, 2104, 2804) an die erste drahtlose Station (302, 1302, 2102, 2802) umfasst, an die zweite drahtlose Station (304, 1304, 2104, 2804), und
Senden eines zweiten Steuersignals, das ein Steuersignal zur Steuerung der Kommunikation von der zweiten drahtlosen Station (304, 1304, 2104, 2804) an die erste drahtlose Station (302, 1302, 2102, 2802) ist, an die zweite drahtlose Station (304, 1304, 2104, 2804) nach Senden des ersten Steuersignals, wobei das zweite Steuersignal weniger Parameter umfasst als das erste Steuersignal, weil ein Parameter aus den mehreren Parametern, die in dem ersten Steuersignal enthalten waren, in dem zweiten Steuersignal ausgelassen wird,
wobei für die Uplink-Kommunikation die zweite drahtlose Station (304, 1304, 2104, 2804) konfiguriert ist zum:
Senden eines ersten Datensignals an die erste drahtlose Station (302, 1302, 2102, 2802) in Antwort auf den Empfang des ersten Steuersignals, auf Grundlage der mehreren Parameter, die in dem ersten Steuersignal enthalten sind, und
Senden eines zweiten Datensignals an die erste drahtlose Station (302, 1302, 2102, 2802) in Antwort auf den Empfang des zweiten Steuersignals auf Grundlage von Parametern, die in dem zweiten Steuersignal enthalten sind, und dem Parameter, der in dem ersten Steuersignal enthalten ist und der dem Parameter entspricht, der aus dem zweiten Steuersignal ausgelassen ist, und
wobei die erste drahtlose Station (302, 1302, 2102, 2802) konfiguriert ist zum Senden des zweiten Steuersignals an die zweite drahtlose Station (304, 1304, 2104, 2804), nachdem das erste Datensignal, das dem ersten Steuersignal entspricht, von der zweiten drahtlosen Station (304, 1304, 2104, 2804) empfangen wird.

2. Kommunikationssystem (300, 1300, 2100, 2800) nach Anspruch 1,
wobei die erste drahtlose Station (302, 1302, 2102, 2802) konfiguriert ist zum Senden eines Anfragesignals zum Anfordern des Sendens eines Sondierungsreferenzsignals, um einen Zustand des Kommunikationskanals an die zweite drahtlose Station (304, 1304, 2104, 2804) zu bewerten, wenn die Einstellung des Kommunikationskanals geändert wird, und zum Senden des ersten Steuersignals, das die mehreren Parameter enthält, an die zweite drahtlose Station (304, 1304, 2104, 2804) nachdem das Anfragesignal gesendet wird.

3. Kommunikationssystem (300, 1300, 2100, 2800) nach Anspruch 2,
wobei die zweite drahtlose Station (304, 1304, 2104, 2804) konfiguriert ist zum Senden des Sondierungsreferenzsignals an die erste drahtlose Station (302, 1302, 2102, 2802) in Antwort auf den Empfang des Anfragesignals und
wobei die erste drahtlose Station (302, 1302, 2102, 2802) konfiguriert ist zum Senden des ersten Steuersignals, das die mehreren Parameter enthält, an die zweite drahtlose Station (304, 1304, 2104, 2804), nachdem das Sondierungsreferenzsignal, das dem ersten Anfragesignal entspricht, von der zweiten drahtlosen Station (304, 1304, 2104, 2804) empfangen wird.

4. Erste drahtlose Station (302, 1302, 2102, 2802) zur Verwendung in Uplink-Kommunikation in einem Kommunikationssystem (300, 1300, 2100, 2800), wobei die erste drahtlose Station (302, 1302, 2102, 2802) umfasst:
eine Managementeinheit (702, 1602, 2402, 3102), konfiguriert zum Management der Kommunikation von einer zweiten drahtlosen Station (304, 1304, 2104, 2804) an die erste drahtlose Station (302, 1302, 2102, 2802);
eine Einheit zum Erzeugen eines Steuersignals (706, 1606, 2406, 3106), konfiguriert zum Erzeugen eines ersten Steuersignals, das der Steuerung der Kommunikation von der zweiten drahtlosen Station (304, 1304, 2104, 2804) an die erste drahtlose Station (302, 1302, 2102, 2802) dient und das mehrere Parameter eines Kommunikationskanals von der zweiten drahtlosen Station (304, 1304, 2104, 2804) an die erste drahtlose Station (302, 1302, 2102, 2802) umfasst, auf Grundlage einer Anweisung von der Managementeinheit (702, 1602, 2402, 3102), und
einen drahtlosen Sender (720, 1620, 2420, 3120), konfiguriert zum Senden des ersten Steuersignals an die zweite drahtlose Station (304, 1304, 2104, 2804),
wobei die Einheit zum Erzeugen des Steuersignals (706, 1606, 2406, 3106) konfiguriert ist, ein zweites Steuersignal zu erzeugen, nachdem der drahtlose Sender (720, 1620, 2420, 3120) das erste Steuersignal sendet, wobei das zweite Steuersignal weniger Parameter umfasst als das erste Steuersignal, weil ein Parameter aus den mehreren Parametern, die in dem ersten Steuersignal enthalten waren, in dem zweiten Steuersignal ausgelassen wird,
wobei der drahtlose Sender (720, 1620, 2420, 3120) konfiguriert ist zum Senden des zweiten Steuersignals an die zweite drahtlose Station (304, 1304, 2104, 2804), nachdem ein erstes Datensignal, das dem ersten Steuersignal entspricht, von der zweiten drahtlosen Station (304, 1304, 2104, 2804) empfangen wird, und
wobei die erste drahtlose Station (302, 1302, 2102, 2802) konfiguriert ist zum Empfang eines zweiten Datensignals auf Grundlage von Parametern, die in dem zweiten Steuersignal enthalten sind, und dem Parameter, der in dem ersten Steuersignal enthalten ist, der dem Parameter entspricht, der aus dem zweiten Steuersignal ausgelassen wurde, nachdem das zweite Steuersignal an die zweite drahtlose Station (304, 1304, 2104, 2804) gesendet wurde.

5. Zweite drahtlose Station (304, 1304, 2104, 2804) zur Verwendung in Uplink-Kommunikation in einem Kommunikationssystem (300, 1300, 2100, 2800), wobei die zweite drahtlose Station (304, 1304, 2104, 2804) umfasst:
einen drahtlosen Empfänger (1002, 1802, 2602, 3302), konfiguriert zum Empfangen eines ersten Steuersignals, das der Steuerung der Kommunikation von der zweiten drahtlosen Station (304, 1304, 2104, 2804) an eine erste drahtlose Station (302, 1302, 2102, 2802) dient und das mehrere Parameter eines Kommunikationskanals von der zweiten drahtlosen Station (304, 1304, 2104, 2804) an die erste drahtlose Station (302, 1302, 2102, 2802) umfasst, von der ersten drahtlosen Station (302, 1302, 2102, 2802);
eine Einheit zur Verarbeitung des Steuersignals (1006, 1806, 2624, 3306), konfiguriert zum Verarbeiten des ersten Steuersignals und Erkennen der mehreren Parameter, die in dem ersten Steuersignal enthalten sind;
eine Einheit zum Erzeugen eines Datensignals (1012, 1812, 2616, 3316), konfiguriert zum Erzeugen eines ersten Datensignals, das in Antwort auf den Empfang des ersten Steuersignals an die erste drahtlose Station (302, 1302, 2102, 2802) gesendet wird; und
einen drahtlosen Sender (1022, 1822, 2624, 3324), konfiguriert zum Senden des ersten Datensignals an die erste drahtlose Station (302, 1302, 2102, 2802) auf Grundlage der erkannten mehreren Parameter, die in dem ersten Steuersignal enthalten sind,
wobei der drahtlose Empfänger (1002, 1802, 2602, 3302) konfiguriert ist, ein zweites Steuersignal zu empfangen, das der Steuerung der Kommunikation von der zweiten drahtlosen Station (304, 1304, 2104, 2804) an die erste drahtlose Station (302, 1302, 2102, 2802) dient, von der ersten drahtlosen Station (302, 1302, 2102, 2802) nach dem Senden des ersten Datensignals, wobei das zweite Steuersignal weniger Parameter umfasst als das erste Steuersignal, weil ein Parameter aus den mehreren Parametern, die in dem ersten Steuersignal enthalten waren, in dem zweiten Steuersignal ausgelassen wird,
wobei die Einheit zum Erzeugen eines Datensignals (1012, 1812, 2616, 3316) konfiguriert ist zum Erzeugen eines zweiten Datensignals, das in Antwort auf den Empfang des zweiten Steuersignals an die erste drahtlose Station (302, 1302, 2102, 2802) gesendet wird,
wobei der drahtlose Sender (1022, 1822, 2624, 3324) konfiguriert ist, das zweite Datensignal auf Grundlage von Parametern, die in dem zweiten Steuersignal enthalten sind, und dem Parameter, der in dem ersten Steuersignal enthalten ist und der dem Parameter entspricht, der aus dem zweiten Steuersignal ausgelassen ist, an die erste drahtlose Station (302, 1302, 2102, 2802) zu senden.

6. Kommunikationssteuerverfahren zur Steuerung der Uplink-Kommunikation zwischen einer ersten drahtlosen Station (302, 1302, 2102, 2802) und einer zweiten drahtlosen Station (304, 1304, 2104, 2804), wobei das Kommunikationssteuerverfahren umfasst:
Senden eines ersten Steuersignals von der ersten drahtlosen Station (302, 1302, 2102, 2802) an die zweite drahtlose Station (304, 1304, 2104, 2804), das ein Steuersignal für die Steuerung der Kommunikation von der zweiten drahtlosen Station (304, 1304, 2104, 2804) an die erste drahtlose Station (302, 1302, 2102, 2802) ist, und
das mehrere Parameter eines Kommunikationskanals von der zweiten drahtlosen Station (304, 1304, 2104, 2804) an die erste drahtlose Station (302, 1302, 2102, 2802) enthält,
Senden eines ersten Datensignals von einer zweiten drahtlosen Station (304, 1304, 2104, 2804) an die erste drahtlose Station (302, 1302, 2102, 2802) in Antwort auf den Empfang des ersten Steuersignals auf Grundlage der mehreren Parameter, die in dem ersten Steuersignal enthalten sind,
Senden eines zweiten Steuersignals von der ersten drahtlosen Station (302, 1302, 2102, 2802) an die zweite drahtlose Station (304, 1304, 2104, 2804) nach Senden des ersten Steuersignals,
wobei das zweite Steuersignal ein Steuersignal zur Steuerung der Kommunikation von der zweiten drahtlosen Station (304, 1304, 2104, 2804) an die erste drahtlose Station (302, 1302, 2102, 2802) ist und wobei das zweite Steuersignal weniger Parameter umfasst als das erste Steuersignal, weil ein Parameter aus den mehreren Parametern, die in dem ersten Steuersignal enthalten waren, in dem zweiten Steuersignal ausgelassen wird, und
Senden eines zweiten Datensignals von der zweiten drahtlosen Station (304, 1304, 2104, 2804) an die erste drahtlose Station (302, 1302, 2102, 2802) in Antwort auf den Empfang des zweiten Steuersignals auf Grundlage von Parametern, die in dem zweiten Steuersignal enthalten sind,
und dem Parameter, der in dem ersten Steuersignal enthalten ist und der dem Parameter entspricht, der aus dem zweiten Steuersignal ausgelassen ist,
wobei die erste drahtlose Station (302, 1302, 2102, 2802) das zweite Steuersignal an die zweite drahtlose Station (304, 1304, 2104, 2804) sendet, nachdem das erste Datensignal, das dem ersten Steuersignal entspricht,
von der zweiten drahtlosen Station (304, 1304, 2104, 2804) empfangen wird.

7. Kommunikationssteuerverfahren zur Steuerung der Downlink-Kommunikation zwischen einer ersten drahtlosen Station (302, 1302, 2102, 2802) und einer zweiten drahtlosen Station (304, 1304, 2104, 2804), wobei das Kommunikationssteuerverfahren umfasst:
Senden eines ersten Steuersignals, das ein Steuersignal zur Steuerung der Kommunikation von der ersten drahtlosen Station (302, 1302, 2102, 2802) an die zweite drahtlose Station (304, 1304, 2104, 2804) ist, und das mehrere Parameter eines Kommunikationskanals von der ersten drahtlosen Station (302, 1302, 2102, 2802) an die zweite drahtlose Station (304, 1304, 2104, 2804) umfasst, an die zweite drahtlose Station (304, 1304, 2104, 2804) durch Verwendung der ersten drahtlosen Station (302, 1302, 2102, 2802), und daraufhin Senden eines ersten Datensignals von der ersten drahtlosen Station (302, 1302, 2102, 2802) an die zweite drahtlose Station (304, 1304, 2104, 2804) auf Grundlage der mehreren Parameter, die in dem ersten Steuersignal enthalten sind;
Empfang des ersten Datensignals von der ersten drahtlosen Station (302, 1302, 2102, 2802) nach Empfang des ersten Steuersignals, wobei das erste Datensignal auf Grundlage der mehreren Parameter basiert, die in dem ersten Steuersignal enthalten sind, durch Verwendung der zweiten drahtlosen Station (304, 1304, 2104, 2804);
Senden eines zweiten Steuersignals, das ein Steuersignal zur Steuerung der Kommunikation von der ersten drahtlosen Station (302, 1302, 2102, 2802) an die zweite drahtlose Station (304, 1304, 2104, 2804) ist, an die zweite drahtlose Station (304, 1304, 2104, 2804) durch Verwendung der ersten drahtlosen Station (302, 1302, 2102, 2802) nach Senden des ersten Steuersignals, und daraufhin Senden eines zweiten Datensignals von der ersten drahtlosen Station (302, 1302, 2102, 2802) an die zweite drahtlose Station (304, 1304, 2104, 2804), wobei das zweite Steuersignal weniger Parameter umfasst als das erste Steuersignal, weil ein Parameter aus den mehreren Parametern, die in dem ersten Steuersignal enthalten waren, in dem zweiten Steuersignal ausgelassen wird, und
wobei das zweite Steuersignal auf Grundlage von Parametern, die in dem zweiten Steuersignal enthalten sind, und dem Parameter, der in dem ersten Steuersignal enthalten ist und der dem Parameter entspricht, der aus dem zweiten Steuersignal ausgelassen ist, erfolgt, und
Empfang des zweiten Datensignals von der ersten drahtlosen Station (302, 1302, 2102, 2802) durch Verwendung der zweiten drahtlosen Station (304, 1304, 2104, 2804) nach Empfang des zweiten Steuersignals, wobei das zweite Datensignal auf den Parametern, die in dem zweiten Steuersignal enthalten sind, und dem Parameter, der in dem ersten Steuersignal enthalten ist, und der dem Parameter entspricht, der aus dem zweiten Steuersignal ausgelassen ist, basiert, das Kommunikationsverfahren ferner umfassend das Senden eines Antwortsignals, das dem ersten Datensignal entspricht, an die erste drahtlose Station (302, 1302, 2102, 2802) in Antwort auf den Empfang des ersten Datensignals, durch Verwendung der zweiten drahtlosen Station (304, 1304, 2104, 2804), und
Senden des zweiten Steuersignals an die zweite drahtlose Station (304, 1304, 2104, 2804) durch Verwendung der ersten drahtlosen Station (302, 1302, 2102, 2802) nach Empfang des Antwortsignals, das dem ersten Datensignal entspricht, das dem ersten Steuersignal entspricht, von der zweiten drahtlosen Station (304, 1304, 2104, 2804).

8. Kommunikationssteuerverfahren nach Anspruch 7, ferner umfassend:
Senden eines Anfragesignals zum Anfordern des Sendens eines Kanalzustandsinformationssignals, das ein Bewertungsergebnis des Kommunikationskanals an die zweite drahtlose Station (304, 1304, 2104, 2804) durch Verwendung der ersten drahtlosen Station (302, 1302, 2102, 2802) angibt, wenn die Einstellung des Kommunikationskanals geändert wird; und
Senden des ersten Steuersignals, das die mehreren Parameter enthält, an die zweite drahtlose Station (304, 1304, 2104, 2804) durch Verwendung der ersten drahtlosen Station (302, 1302, 2102, 2802), nach Senden des Anfragesignals.

9. Kommunikationssteuerverfahren nach Anspruch 8, ferner umfassend:
Senden des Kanalzustandsinformationssignals an die erste drahtlose Station (302, 1302, 2102, 2802) in Antwort auf Empfang des Anfragesignals durch Verwendung der zweiten drahtlosen Station (304, 1304, 2104, 2804), und
Senden des ersten Steuersignals an die zweite drahtlose Station (304, 1304, 2104, 2804) durch Verwendung der ersten drahtlosen Station (302, 1302, 2102, 2802) nach Empfang des Kanalzustandsinformationssignals, das dem Anfragesignal entspricht, von der zweiten drahtlosen Station (304, 1304, 2104, 2804).

10. Kommunikationssystem (300, 1300, 2100, 2800) umfassend:
eine erste drahtlose Station (302, 1302, 2102, 2802); und
eine zweite drahtlose Station (304, 1304, 2104, 2804), die mit der ersten drahtlosen Station (302, 1302, 2102, 2802) kommuniziert,
wobei für die Downlink-Kommunikation die erste drahtlose Station (302, 1302, 2102, 2802) konfiguriert ist zum:
Senden eines ersten Steuersignals, das ein Steuersignal zur Steuerung der Kommunikation von der ersten drahtlosen Station (302, 1302, 2102, 2802) an die zweite drahtlose Station (304, 1304, 2104, 2804) ist und das mehrere Parameter eines Kommunikationskanals von der ersten drahtlosen Station (302, 1302, 2102, 2802) an die zweite drahtlose Station (304, 1304, 2104, 2804) umfasst, an die zweite drahtlose Station (304, 1304, 2104, 2804) und daraufhin Senden eines ersten Datensignals an die zweite drahtlose Station (304, 1304, 2104, 2804) auf Grundlage der mehreren Parameter, die in dem ersten Steuersignal enthalten sind; und
Senden eines zweiten Steuersignals, das ein Steuersignal für die Steuerung der Kommunikation von der ersten drahtlosen Station (302, 1302, 2102, 2802) an die zweite drahtlose Station (304, 1304, 2104, 2804) ist, an die zweite drahtlose Station (304, 1304, 2104, 2804) nach Senden des ersten Steuersignals und daraufhin Senden eines zweiten Datensignals von der ersten drahtlosen Station (302, 1302, 2102, 2802) an die zweite drahtlose Station (304, 1304, 2104, 2804),
wobei das zweite Steuersignal weniger Parameter umfasst als das erste Steuersignal, weil ein Parameter aus den mehreren Parametern, die in dem ersten Steuersignal enthalten waren, in dem zweiten Steuersignal ausgelassen wird, und
wobei das zweite Steuersignal auf den Parametern, die in dem zweiten Steuersignal enthalten sind, und dem Parameter, der in dem ersten Steuersignal enthalten ist und der dem Parameter entspricht, der aus dem zweiten Steuersignal ausgelassen ist, basiert;
wobei für die Downlink-Kommunikation die zweite drahtlose Station (304, 1304, 2104, 2804) konfiguriert ist zum:
Empfang des ersten Datensignals von der ersten drahtlosen Station (302, 1302, 2102, 2802) nach Empfang des ersten Steuersignals auf Grundlage der mehreren Parameter, die in dem ersten Steuersignal enthalten sind, und
Empfang des zweiten Datensignals von der ersten drahtlosen Station (302, 1302, 2102, 2802) nach Empfang des zweiten Steuersignals auf Grundlage der Parameter, die in dem zweiten Steuersignal enthalten sind, und dem Parameter, der in dem ersten Steuersignal enthalten ist und der dem Parameter entspricht, der aus dem zweiten Steuersignal ausgelassen ist,
wobei die zweite drahtlose Station (304, 1304, 2104, 2804) ferner konfiguriert ist zum Senden eines Antwortsignals, das dem ersten Datensignal an die erste drahtlose Station (302, 1302, 2102, 2802) entspricht, in Antwort auf den Empfang des ersten Datensignals,
wobei die erste drahtlose Station (302, 1302, 2102, 2802) ferner konfiguriert ist zum Senden des zweiten Steuersignals an die zweite drahtlose Station (304, 1304, 2104, 2804) nach Empfang des Antwortsignals, das dem ersten Datensignal entspricht, das dem ersten Steuersignal entspricht,
von der zweiten drahtlosen Station (304, 1304, 2104, 2804).

11. Erste drahtlose Station (302, 1302, 2102, 2802) zur Verwendung in Downlink-Kommunikation in einem Kommunikationssystem (300, 1300, 2100, 2800), wobei die erste drahtlose Station (302, 1302, 2102, 2802) umfasst:
eine Managementeinheit (702, 1602, 2402, 3102), konfiguriert zum Management der Kommunikation an eine zweite drahtlose Station (304, 1304, 2104, 2804) von der ersten drahtlosen Station (302, 1302, 2102, 2802);
eine Einheit zum Erzeugen eines Steuersignals (706, 1606, 2406, 3106), konfiguriert zum Erzeugen eines ersten Steuersignals, das der Steuerung der Kommunikation an die zweite drahtlose Station (304, 1304, 2104, 2804) von der ersten drahtlosen Station (302, 1302, 2102, 2802) dient und das mehrere Parameter eines Kommunikationskanals an die zweite drahtlose Station (304, 1304, 2104, 2804) von der ersten drahtlosen Station (302, 1302, 2102, 2802) umfasst, auf Grundlage einer Anweisung von der Managementeinheit (702, 1602, 2402, 3102);
eine Einheit zum Erzeugen eines Datensignals (712, 1612, 2412, 3112), konfiguriert zum Erzeugen eines ersten Datensignals, das nach dem ersten Steuersignal an die zweite drahtlose Station (304, 1304, 2104, 2804) gesendet wird; und
einen drahtlosen Sender (720, 1620, 2420, 3120), konfiguriert zum Senden des ersten Steuersignals und des ersten Datensignals an die zweite drahtlose Station (304, 1304, 2104, 2804),
wobei die erste drahtlose Station (302, 1302, 2102, 2802) konfiguriert ist zum:
Senden des ersten Steuersignals, das ein Steuersignal zur Steuerung der Kommunikation von der ersten drahtlosen Station (302, 1302, 2102, 2802) an die zweite drahtlose Station (304, 1304, 2104, 2804) ist, und das die mehreren Parameter des Kommunikationskanals von der ersten drahtlosen Station (302, 1302, 2102, 2802) an die zweite drahtlose Station (304, 1304, 2104, 2804) umfasst, an die zweite drahtlose Station (304, 1304, 2104, 2804) durch Verwenden der ersten drahtlosen Station (302, 1302, 2102, 2802) und daraufhin Senden eines ersten Datensignals an die zweite drahtlose Station (304, 1304, 2104, 2804) auf Grundlage der mehreren Parameter in dem ersten Steuersignal; und
Senden eines zweiten Steuersignals, das ein Steuersignal für die Steuerung der Kommunikation von der ersten drahtlosen Station (302, 1302, 2102, 2802) an die zweite drahtlose Station (304, 1304, 2104, 2804) ist, an die zweite drahtlose Station (304, 1304, 2104, 2804) durch Verwenden der ersten drahtlosen Station (302, 1302, 2102, 2802) nach Senden des ersten Steuersignals und daraufhin Senden eines zweiten Datensignals von der ersten drahtlosen Station (302, 1302, 2102, 2802) an die zweite drahtlose Station (304, 1304, 2104, 2804),
wobei das zweite Steuersignal weniger Parameter umfasst als das erste Steuersignal, weil ein Parameter aus den mehreren Parametern, die in dem ersten Steuersignal enthalten waren, in dem zweiten Steuersignal ausgelassen wird, und
wobei das zweite Steuersignal auf den Parametern, die in dem zweiten Steuersignal enthalten sind, und dem Parameter, der in dem ersten Steuersignal enthalten ist und der dem Parameter entspricht, der aus dem zweiten Steuersignal ausgelassen ist, basiert; si
wobei die erste drahtlose Station (302, 1302, 2102, 2802) ferner konfiguriert ist zum Senden des zweiten Steuersignals an die zweite drahtlose Station (304, 1304, 2104, 2804) nach Empfang des Antwortsignals, das dem ersten Datensignal entspricht, das dem ersten Steuersignal entspricht, von der zweiten drahtlosen Station (304, 1304, 2104, 2804).

12. Zweite drahtlose Station (304, 1304, 2104, 2804) zur Verwendung in Downlink-Kommunikation in einem Kommunikationssystem (300, 1300, 2100, 2800), wobei die zweite drahtlose Station (304, 1304, 2104, 2804) umfasst:
einen drahtlosen Empfänger (1002, 1802, 2602, 3302), konfiguriert zum Empfangen eines ersten Steuersignals, das ein Steuersignal zur Steuerung der Kommunikation an die zweite drahtlose Station (304, 1304, 2104, 2804) von einer ersten drahtlosen Station (302, 1302, 2102, 2802) ist, und das mehrere Parameter eines Kommunikationskanals an die zweite drahtlose Station (304, 1304, 2104, 2804) von der ersten drahtlosen Station (302, 1302, 2102, 2802) umfasst, von der ersten drahtlosen Station (302, 1302, 2102, 2802);
eine Einheit zur Verarbeitung des Steuersignals (1006, 1806, 2624, 3306), konfiguriert zum Verarbeiten des ersten Steuersignals und Erkennen der mehreren Parameter, die in dem ersten Steuersignal enthalten sind;
eine Einheit zum Erzeugen eines Antwortsignals zum Erzeugen eines Antwortsignals, das einem ersten Datensignal entspricht, wobei das Antwortsignal an die erste drahtlose Station (302, 1302, 2102, 2802) in Antwort auf den Empfang des ersten Datensignal gesendet wird; und einen drahtlosen Sender (1022, 1822, 2624, 3324), konfiguriert zum Senden des Antwortsignals, das dem ersten Datensignal entspricht, an die erste drahtlose Station (302, 1302, 2102, 2802), wobei die zweite drahtlose Station (304, 1304, 2104, 2804) konfiguriert ist zum Empfang des ersten Datensignals von der ersten drahtlosen Station (302, 1302, 2102, 2802) nach Empfang des ersten Steuersignals auf Grundlage der mehreren Parameter, die in dem ersten Steuersignal enthalten sind, und
zum Empfang eines zweiten Datensignals von der ersten drahtlosen Station (302, 1302, 2102, 2802) nach Empfang eines zweiten Steuersignals, wobei das zweite Steuersignal weniger Parameter umfasst als das erste Steuersignal, weil ein Parameter aus den mehreren Parametern, die in dem ersten Steuersignal enthalten waren, in dem zweiten Steuersignal ausgelassen wird,
wobei das zweite Steuersignal auf Grundlage von Parametern, die in dem zweiten Steuersignal enthalten sind, und dem Parameter, der in dem ersten Steuersignal enthalten ist und der dem Parameter entspricht, der aus dem zweiten Steuersignal ausgelassen ist, erfolgt,
wobei die zweite drahtlose Station (304, 1304, 2104, 2804) ferner konfiguriert ist zum Empfangen des zweiten Steuersignals von der ersten drahtlosen Station (302, 1302, 2102, 2802) nach Senden des Antwortsignals, das dem ersten Datensignal entspricht, das dem ersten Steuersignal entspricht, durch die zweite drahtlose Station (304, 1304, 2104, 2804).

## Revendications

1. Système de communication (300, 1300, 2100, 2800) comprenant :
une première station sans fil (302, 1302, 2102, 2802) ; et
une seconde station sans fil (304, 1304, 2104, 2804) qui communique avec la première station sans fil (302, 1302, 2102, 2802) ;
dans lequel, pour une communication en liaison montante, la première station sans fil (302, 1302, 2102, 2802) est configurée de manière à :
transmettre un premier signal de commande, lequel correspond à un signal de commande destiné à commander la communication de la seconde station sans fil (304, 1304, 2104, 2804) à la première station sans fil (302, 1302, 2102, 2802), et qui inclut une pluralité de paramètres d'un canal de communication de la seconde station sans fil (304, 1304, 2104, 2804) à la première station sans fil (302, 1302, 2102, 2802), à la seconde station sans fil (304, 1304, 2104, 2804) ; et
transmettre un second signal de commande, lequel correspond à un signal de commande destiné à commander la communication de la seconde station sans fil (304, 1304, 2104, 2804) à la première station sans fil (302, 1302, 2102, 2802), à la seconde station sans fil (304, 1304, 2104, 2804), suite à la transmission du premier signal de commande, dans lequel le second signal de commande inclut moins de paramètres que le premier signal de commande en raison de l'omission d'un paramètre parmi la pluralité de paramètres qui a été incluse dans le premier signal de commande, dans le second signal de commande,
dans lequel, pour la communication en liaison montante, la seconde station sans fil (304, 1304, 2104, 2804) est configurée de manière à :
transmettre un premier signal de données à la première station sans fil (302, 1302, 2102, 2802), en réponse à la réception du premier signal de commande, sur la base de la pluralité de paramètres qui est incluse dans le premier signal de commande ; et
transmettre un second signal de données à la première station sans fil (302, 1302, 2102, 2802) en réponse à la réception du second signal de commande, sur la base de paramètres qui sont inclus dans le second signal de commande et du paramètre qui est inclus dans le premier signal de commande qui correspond au paramètre omis du second signal de commande ; et
dans lequel la première station sans fil (302, 1302, 2102, 2802) est configurée de manière à transmettre le second signal de commande à la seconde station sans fil (304, 1304, 2104, 2804) après que le premier signal de données correspondant au premier signal de commande a été reçu en provenance de la seconde station sans fil (304, 1304, 2104, 2804).

2. Système de communication (300, 1300, 2100, 2800) selon la revendication 1,
dans lequel la première station sans fil (302, 1302, 2102, 2802) est configurée de manière à transmettre un signal de demande visant à demander la transmission d'un signal de référence de sondage afin d'évaluer un état du canal de communication, à la seconde station sans fil (304, 1304, 2104, 2804), lorsque le réglage du canal de communication est modifié, et à transmettre le premier signal de commande qui inclut la pluralité de paramètres, à la seconde station sans fil (304, 1304, 2104, 2804), après que le signal de demande a été transmis.

3. Système de communication (300, 1300, 2100, 2800) selon la revendication 2,
dans lequel la seconde station sans fil (304, 1304, 2104, 2804) est configurée de manière à transmettre le signal de référence de sondage à la première station sans fil (302, 1302, 2102, 2802) en réponse à la réception du signal de demande ; et
dans lequel la première station sans fil (302, 1302, 2102, 2802) est configurée de manière à transmettre le premier signal de commande qui inclut la pluralité de paramètres, à la seconde station sans fil (304, 1304, 2104, 2804), après que le signal de référence de sondage correspondant au signal de demande a été reçu en provenance de la seconde station sans fil (304, 1304, 2104, 2804).

4. Première station sans fil (302, 1302, 2102, 2802) destinée à être utilisée dans le cadre d'une communication en liaison montante dans un système de communication (300, 1300, 2100, 2800), la première station sans fil (302, 1302, 2102, 2802) comprenant :
une unité de gestion (702, 1602, 2402, 3102) configurée de manière à gérer la communication d'une seconde station sans fil (304, 1304, 2104, 2804) à la première station sans fil (302, 1302, 2102, 2802) ;
une unité de génération de signal de commande (706, 1606, 2406, 3106) configurée de manière à générer un premier signal de commande qui est destiné à commander la communication de la seconde station sans fil (304, 1304, 2104, 2804) à la première station sans fil (302, 1302, 2102, 2802) et qui inclut une pluralité de paramètres d'un canal de communication de la seconde station sans fil (304, 1304, 2104, 2804) à la première station sans fil (302, 1302, 2102, 2802), sur la base d'une instruction en provenance de l'unité de gestion (702, 1602, 2402, 3102) ; et
une unité de transmission sans fil (720, 1620, 2420, 3120) configurée de manière à transmettre le premier signal de commande à la seconde station sans fil (304, 1304, 2104, 2804) ;
dans lequel l'unité de génération de signal de commande (706, 1606, 2406, 3106) est configurée de manière à générer un second signal de commande après que l'unité de transmission sans fil (720, 1620, 2420, 3120) a transmis le premier signal de commande, dans lequel le second signal de commande inclut moins de paramètres que le premier signal de commande en raison de l'omission d'un paramètre parmi la pluralité de paramètres qui a été incluse dans le premier signal de commande, dans le second signal de commande ;
dans lequel l'unité de transmission sans fil (720, 1620, 2420, 3120) est configurée de manière à transmettre le second signal de commande à la seconde station sans fil (304, 1304, 2104, 2804) après qu'un premier signal de données correspondant au premier signal de commande a été reçu en provenance de la seconde station sans fil (304, 1304, 2104, 2804) ; et
dans lequel la première station sans fil (302, 1302, 2102, 2802) est configurée de manière à recevoir un second signal de données, sur la base de paramètres qui sont inclus dans le second signal de commande et du paramètre qui est inclus dans le premier signal de commande qui correspond au paramètre omis du second signal de commande, après que le second signal de commande a été transmis à la seconde station sans fil (304, 1304, 2104, 2804) .

5. Seconde station sans fil (304, 1304, 2104, 2804) destinée à être utilisée dans le cadre d'une communication en liaison montante dans un système de communication (300, 1300, 2100, 2800), la seconde station sans fil (304, 1304, 2104, 2804) comprenant :
une unité de réception sans fil (1002, 1802, 2602, 3302) configurée de manière à recevoir un premier signal de commande, qui est destiné à commander la communication de la seconde station sans fil (304, 1304, 2104, 2804) à une première station sans fil (302, 1302, 2102, 2802) et qui inclut une pluralité de paramètres d'un canal de communication de la seconde station sans fil (304, 1304, 2104, 2804) à la première station sans fil (302, 1302, 2102, 2802), en provenance de la première station sans fil (302, 1302, 2102, 2802) ;
une unité de traitement de signal de commande (1006, 1806, 2624, 3306) configurée de manière à traiter le premier signal de commande et à détecter la pluralité de paramètres qui est incluse dans le premier signal de commande ;
une unité de génération de signal de données (1012, 1812, 2616, 3316) configurée de manière à générer un premier signal de données qui est transmis à la première station sans fil (302, 1302, 2102, 2802) en réponse à la réception du premier signal de commande ; et
une unité de transmission sans fil (1022, 1822, 2624, 3324) configurée de manière à transmettre le premier signal de données à la première station sans fil (302, 1302, 2102, 2802), sur la base de la pluralité de paramètres détectée qui est incluse dans le premier signal de commande ;
dans lequel l'unité de réception sans fil (1002, 1802, 2602, 3302) est configurée de manière à recevoir un second signal de commande qui est destiné à commander la communication de la seconde station sans fil (304, 1304, 2104, 2804) à la première station sans fil (302, 1302, 2102, 2802), en provenance de la première station sans fil (302, 1302, 2102, 2802), après que le premier signal de données a été transmis, dans lequel le second signal de commande inclut moins de paramètres que le premier signal de commande en raison de l'omission d'un paramètre parmi la pluralité de paramètres qui a été incluse dans le premier signal de commande, dans le second signal de commande ;
dans lequel l'unité de génération de signal de données (1012, 1812, 2616, 3316) est configurée de manière à générer un second signal de données qui est transmis à la première station sans fil (302, 1302, 2102, 2802) en réponse à la réception du second signal de commande ;
dans lequel l'unité de transmission sans fil (1022, 1822, 2624, 3324) est configurée de manière à transmettre le second signal de données à la première station sans fil (302, 1302, 2102, 2802) sur la base de paramètres inclus dans le second signal de commande et du paramètre qui est inclus dans le premier signal de commande correspondant au paramètre omis du second signal de commande.

6. Procédé de commande de communication pour commander une communication en liaison montante entre une première station sans fil (302, 1302, 2102, 2802) et une seconde station sans fil (304, 1304, 2104, 2804), le procédé de commande de communication comprenant les étapes ci-dessous consistant à :
transmettre, de la première station sans fil (302, 1302, 2102, 2802) à la seconde station sans fil (304, 1304, 2104, 2804), un premier signal de commande, lequel correspond à un signal de commande destiné à commander la communication de la seconde station sans fil (304, 1304, 2104, 2804) à la première station sans fil (302, 1302, 2102, 2802) et qui inclut une pluralité de paramètres d'un canal de communication de la seconde station sans fil (304, 1304, 2104, 2804) à la première station sans fil (302, 1302, 2102, 2802) ;
transmettre, de la seconde station sans fil (304, 1304, 2104, 2804) à la première station sans fil (302, 1302, 2102, 2802), un premier signal de données en réponse à la réception du premier signal de commande, sur la base de la pluralité de paramètres qui est incluse dans le premier signal de commande ;
transmettre de la première station sans fil (302, 1302, 2102, 2802) à la seconde station sans fil (304, 1304, 2104, 2804), suite à la transmission du premier signal de commande, un second signal de commande, dans lequel le second signal de commande correspond à un signal de commande destiné à commander la communication de la seconde station sans fil (304, 1304, 2104, 2804) à la première station sans fil (302, 1302, 2102, 2802), et dans lequel le second signal de commande inclut moins de paramètres que le premier signal de commande en raison de l'omission d'un paramètre parmi la pluralité de paramètres qui a été incluse dans le premier signal de commande, dans le second signal de commande ; et
transmettre, de la seconde station sans fil (304, 1304, 2104, 2804) à la première station sans fil (302, 1302, 2102, 2802), un second signal de données en réponse à la réception du second signal de commande, sur la base de paramètres qui sont inclus dans le second signal de commande et du paramètre qui est inclus dans le premier signal de commande qui correspond au paramètre omis du second signal de commande ;
dans lequel la première station sans fil (302, 1302, 2102, 2802) transmet le second signal de commande à la seconde station sans fil (304, 1304, 2104, 2804) après que le premier signal de données correspondant au premier signal de commande a été reçu en provenance de la seconde station sans fil (304, 1304, 2104, 2804).

7. Procédé de commande de communication pour commander une communication en liaison descendante entre une première station sans fil (302, 1302, 2102, 2802) et une seconde station sans fil (304, 1304, 2104, 2804), le procédé de commande de communication comprenant les étapes ci-dessous consistant à :
transmettre un premier signal de commande, lequel correspond à un signal de commande destiné à commander la communication de la première station sans fil (302, 1302, 2102, 2802) à la seconde station sans fil (304, 1304, 2104, 2804) et qui inclut une pluralité de paramètres d'un canal de communication de la première station sans fil (302, 1302, 2102, 2802) à la seconde station sans fil (304, 1304, 2104, 2804), à la seconde station sans fil (304, 1304, 2104, 2804), en utilisant la première station sans fil (302, 1302, 2102, 2802), et transmettre ensuite un premier signal de données, de la première station sans fil (302, 1302, 2102, 2802) à la seconde station sans fil (304, 1304, 2104, 2804), sur la base de la pluralité de paramètres incluse dans le premier signal de commande ;
recevoir le premier signal de données en provenance de la première station sans fil (302, 1302, 2102, 2802), suite à la réception du premier signal de commande, le premier signal de données étant basé sur la pluralité de paramètres incluse dans le premier signal de commande, en utilisant la seconde station sans fil (304, 1304, 2104, 2804) ;
transmettre un second signal de commande, lequel correspond à un signal de commande destiné à commander la communication de la première station sans fil (302, 1302, 2102, 2802) à la seconde station sans fil (304, 1304, 2104, 2804), à la seconde station sans fil (304, 1304, 2104, 2804), en utilisant la première station sans fil (302, 1302, 2102, 2802), suite à la transmission du premier signal de commande, et transmettre ensuite un second signal de données, de la première station sans fil (302, 1302, 2102, 2802) à la seconde station sans fil (304, 1304, 2104, 2804), dans lequel le second signal de commande inclut moins de paramètres que le premier signal de commande, en raison de l'omission d'un paramètre parmi la pluralité de paramètres qui étaient incluse dans le premier signal de commande, dans le second signal de commande ; et
dans lequel le second signal de données est basé sur des paramètres qui sont inclus dans le second signal de commande et sur le paramètre qui est inclus dans le premier signal de commande qui correspond au paramètre omis du second signal de commande ; et
recevoir, en utilisant la seconde station sans fil (304, 1304, 2104, 2804), le second signal de données en provenance de la première station sans fil (302, 1302, 2102, 2802), suite à la réception du second signal de commande, le second signal de données étant basé sur les paramètres qui sont inclus dans le second signal de commande et sur le paramètre qui est inclus dans le premier signal de commande qui correspond au paramètre omis du second signal de commande ;
dans lequel le procédé de communication comprend en outre l'étape consistant à transmettre un signal de réponse correspondant au premier signal de données, à la première station sans fil (302, 1302, 2102, 2802), en réponse à la réception du premier signal de données, en utilisant la seconde station sans fil (304, 1304, 2104, 2804) ; et
l'étape consistant à transmettre le second signal de commande à la seconde station sans fil (304, 1304, 2104, 2804), en utilisant la première station sans fil (302, 1302, 2102, 2802), après que le signal de réponse correspondant au premier signal de données qui correspond au premier signal de commande a été reçu en provenance de la seconde station sans fil (304, 1304, 2104, 2804).

8. Procédé de commande de communication selon la revendication 7, comprenant en outre les étapes ci-dessous consistant à :
transmettre un signal de demande visant à demander la transmission d'un signal d'informations d'état de canal indicatif d'un résultat d'évaluation d'état de canal de communication, à la seconde station sans fil (304, 1304, 2104, 2804), en utilisant la première station sans fil (302, 1302, 2102, 2802), lorsque le réglage du canal de communication est modifié ; et
transmettre le premier signal de commande qui inclut la pluralité de paramètres à la seconde station sans fil (304, 1304, 2104, 2804), en utilisant la première station sans fil (302, 1302, 2102, 2802), après que le signal de demande a été transmis.

9. Procédé de commande de communication selon la revendication 8, comprenant en outre les étapes ci-dessous consistant à :
transmettre le signal d'informations d'état de canal à la première station sans fil (302, 1302, 2102, 2802), en réponse à la réception du signal de demande, en utilisant la seconde station sans fil (304, 1304, 2104, 2804) ; et
transmettre le premier signal de commande à la seconde station sans fil (304, 1304, 2104, 2804), en utilisant la première station sans fil (302, 1302, 2102, 2802) après que le signal d'informations d'état de canal correspondant au signal de demande a été reçu en provenance de la seconde station sans fil (304, 1304, 2104, 2804).

10. Système de communication (300, 1300, 2100, 2800) comprenant :
une première station sans fil (302, 1302, 2102, 2802) ; et
une seconde station sans fil (304, 1304, 2104, 2804) qui communique avec la première station sans fil (302, 1302, 2102, 2802),
dans lequel, pour la communication en liaison descendante, la première station sans fil (302, 1302, 2102, 2802) est configurée de manière à :
transmettre un premier signal de commande, lequel correspond à un signal de commande destiné à commander la communication de la première station sans fil (302, 1302, 2102, 2802) à la seconde station sans fil (304, 1304, 2104, 2804) et qui inclut une pluralité de paramètres d'un canal de communication de la première station sans fil (302, 1302, 2102, 2802) à la seconde station sans fil (304, 1304, 2104, 2804), à la seconde station sans fil (304, 1304, 2104, 2804), et transmettre ensuite un premier signal de données à la seconde station sans fil (304, 1304, 2104, 2804) sur la base de la pluralité de paramètres incluse dans le premier signal de commande ; et
transmettre un second signal de commande, lequel correspond à un signal de commande destiné à commander la communication de la première station sans fil (302, 1302, 2102, 2802) à la seconde station sans fil (304, 1304, 2104, 2804), à la seconde station sans fil (304, 1304, 2104, 2804), suite à la transmission du premier signal de commande, et transmettre ensuite un second signal de données, de la première station sans fil (302, 1302, 2102, 2802) à la seconde station sans fil (304, 1304, 2104, 2804) ;
dans lequel le second signal de commande inclut moins de paramètres que le premier signal de commande en raison de l'omission d'un paramètre parmi la pluralité de paramètres qui a été incluse dans le premier signal de commande, dans le second signal de commande ; et
dans lequel le second signal de données est basé sur les paramètres qui sont inclus dans le second signal de commande et sur le paramètre qui est inclus dans le premier signal de commande qui correspond au paramètre omis du second signal de commande ;
dans lequel, pour la communication en liaison descendante, la seconde station sans fil (304, 1304, 2104, 2804) est configurée de manière à :
recevoir le premier signal de données en provenance de la première station sans fil (302, 1302, 2102, 2802), suite à la réception du premier signal de commande, sur la base de la pluralité de paramètres incluse dans le premier signal de commande ; et
recevoir le second signal de données en provenance de la première station sans fil (302, 1302, 2102, 2802), suite à la réception du second signal de commande, sur la base des paramètres inclus dans le second signal de commande et du paramètre inclus dans le premier signal de commande qui correspond au paramètre omis du second signal de commande ;
la seconde station sans fil (304, 1304, 2104, 2804) étant en outre configurée de manière à transmettre un signal de réponse correspondant au premier signal de données à la première station sans fil (302, 1302, 2102, 2802), en réponse à la réception du premier signal de données ;
la première station sans fil (302, 1302, 2102, 2802) étant en outre configurée de manière à transmettre le second signal de commande à la seconde station sans fil (304, 1304, 2104, 2804), après que le signal de réponse correspondant au premier signal de données qui correspond au premier signal de commande a été reçu en provenance de la seconde station sans fil (304, 1304, 2104, 2804).

11. Première station sans fil (302, 1302, 2102, 2802) destinée à être utilisée dans le cadre d'une communication en liaison descendante dans un système de communication (300, 1300, 2100, 2800), la première station sans fil (302, 1302, 2102, 2802) comprenant :
une unité de gestion (702, 1602, 2402, 3102) configurée de manière à gérer la communication vers une seconde station sans fil (304, 1304, 2104, 2804), en provenance de la première station sans fil (302, 1302, 2102, 2802) ;
une unité de génération de signal de commande (706, 1606, 2406, 3106) configurée de manière à générer un premier signal de commande, qui est destiné à commander la communication vers la seconde station sans fil (304, 1304, 2104, 2804) en provenance de la première station sans fil (302, 1302, 2102, 2802) et qui inclut une pluralité de paramètres d'un canal de communication vers la seconde station sans fil (304, 1304, 2104, 2804) à partir de la première station sans fil (302, 1302, 2102, 2802), sur la base d'une instruction en provenance de l'unité de gestion (702, 1602, 2402, 3102) ;
une unité de génération de signal de données (712, 1612, 2412, 3112) configurée de manière à générer un premier signal de données qui est transmis à la seconde station sans fil (304, 1304, 2104, 2804) après le premier signal de commande ; et
une unité de transmission sans fil (720, 1620, 2420, 3120) configurée de manière à transmettre le premier signal de commande et le premier signal de données à la seconde station sans fil (304, 1304, 2104, 2804), dans lequel la première station sans fil (302, 1302, 2102, 2802) est configurée de manière à :
transmettre le premier signal de commande, lequel correspond à un signal de commande destiné à commander la communication de la première station sans fil (302, 1302, 2102, 2802) à la seconde station sans fil (304, 1304, 2104, 2804), et qui inclut la pluralité de paramètres du canal de communication de la première station sans fil (302, 1302, 2102, 2802) à la seconde station sans fil (304, 1304, 2104, 2804), à la seconde station sans fil (304, 1304, 2104, 2804), en utilisant la première station sans fil (302, 1302, 2102, 2802), et à transmettre ensuite le premier signal de données à la seconde station sans fil (304, 1304, 2104, 2804), sur la base de la pluralité de paramètres dans le premier signal de commande ; et
transmettre un second signal de commande, lequel correspond à un signal de commande destiné à commander la communication de la première station sans fil (302, 1302, 2102, 2802) à la seconde station sans fil (304, 1304, 2104, 2804), à la seconde station sans fil (304, 1304, 2104, 2804), en utilisant la première station sans fil (302, 1302, 2102, 2802) suite à la transmission du premier signal de commande, et à transmettre ensuite un second signal de données de la première station sans fil (302, 1302, 2102, 2802) à la seconde station sans fil (304, 1304, 2104, 2804), dans lequel le second signal de commande inclut moins de paramètres que le premier signal de commande en raison de l'omission d'un paramètre parmi la pluralité de paramètres qui était incluse dans le premier signal de commande, dans le second signal de commande ; et
dans lequel le second signal de données est basé sur les paramètres qui sont inclus dans le second signal de commande et sur le paramètre qui est inclus dans le premier signal de commande qui correspond au paramètre omis du second signal de commande ;
la première station sans fil (302, 1302, 2102, 2802) étant en outre configurée de manière à transmettre le second signal de commande à la seconde station sans fil (304, 1304, 2104, 2804), suite à la réception d'un signal de réponse correspondant au premier signal de données qui correspond au premier signal de commande, en provenance de la seconde station sans fil (304, 1304, 2104, 2804).

12. Seconde station sans fil (304, 1304, 2104, 2804) destinée à être utilisée dans le cadre d'une communication en liaison descendante dans un système de communication (300, 1300, 2100, 2800), la seconde station sans fil (304, 1304, 2104, 2804) comprenant :
une unité de réception sans fil (1002, 1802, 2602, 3302) configurée de manière à recevoir un premier signal de commande, lequel correspond à un signal de commande destiné à commander la communication vers la seconde station sans fil (304, 1304, 2104, 2804) en provenance d'une première station sans fil (302, 1302, 2102, 2802) et qui inclut une pluralité de paramètres d'un canal de communication vers la seconde station sans fil (304, 1304, 2104, 2804) à partir de la première station sans fil (302, 1302, 2102, 2802), en provenance de la première station sans fil (302, 1302, 2102, 2802) ;
une unité de traitement de signal de commande (1006, 1806, 2624, 3306) configurée de manière à traiter le premier signal de commande et à détecter la pluralité de paramètres incluse dans le premier signal de commande ;
une unité de génération de signal de réponse configurée de manière à générer un signal de réponse correspondant à un premier signal de données, le signal de réponse étant transmis à la première station sans fil (302, 1302, 2102, 2802) en réponse à la réception du premier signal de données ; et
une unité de transmission sans fil (1022, 1822, 2624, 3324) configurée de manière à transmettre le signal de réponse correspondant au premier signal de données, à la première station sans fil (302, 1302, 2102, 2802) ;
dans lequel la seconde station sans fil (304, 1304, 2104, 2804) est configurée de manière à recevoir le premier signal de données en provenance de la première station sans fil (302, 1302, 2102, 2802), suite à la réception du premier signal de commande, sur la base de la pluralité de paramètres incluse dans le premier signal de commande ; et
à recevoir un second signal de données en provenance de la première station sans fil (302, 1302, 2102, 2802), suite à la réception d'un second signal de commande, dans lequel le second signal de commande inclut moins de paramètres que le premier signal de commande en raison de l'omission d'un paramètre parmi la pluralité de paramètres qui a été incluse dans le premier signal de commande, dans le second signal de commande ;
dans lequel le second signal de données est basé sur des paramètres qui sont inclus dans le second signal de commande et sur le paramètre qui est inclus dans le premier signal de commande qui correspond au paramètre omis du second signal de commande ;
la seconde station sans fil (304, 1304, 2104, 2804) étant en outre configurée de manière à recevoir le second signal de commande en provenance de la première station sans fil (302, 1302, 2102, 2802), après que le signal de réponse correspondant au premier signal de données qui correspond au premier signal de commande a été envoyé par la seconde station sans fil (304, 1304, 2104, 2804).
